(19) Europäisches Patentamt
European Patent Office
Office européen des brevets

(11) **EP 3 050 658 A1**

(12) **EUROPÄISCHE PATENTANMELDUNG**

(43) Veröffentlichungstag:
**03.08.2016 Patentblatt 2016/31**

(51) Int Cl.:
***B23F 5/04*** *(2006.01)*     ***B23F 19/00*** *(2006.01)*

(21) Anmeldenummer: **15195118.3**

(22) Anmeldetag: **18.11.2015**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **23.01.2015 DE 102015000975**

(71) Anmelder: **Liebherr-Verzahntechnik GmbH**
**87437 Kempten (DE)**

(72) Erfinder: **Würfel, Robert**
**87439 Kempten (DE)**

(74) Vertreter: **Behr, Wolfgang**
**Lorenz Seidler Gossel**
**Rechtsanwälte Patentanwälte**
**Partnerschaft mbB**
**Widenmayerstraße 23**
**80538 München (DE)**

(54) **VERFAHREN ZUR HERSTELLUNG EINES WERKSTÜCKES MIT KORRIGIERTER VERZAHNUNGSGEOMETRIE UND / ODER MODIFIZIERTER OBERFLÄCHENSTRUKTUR**

(57) Die vorliegende Erfindung zeigt ein Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges, wobei eine gezielte Modifikation der Oberflächengeometrie des Werkzeuges erzeugt wird, wobei die gezielte Modifikation des Werkzeuges durch das Diagonalwälzverfahren eine entsprechende Modifikation auf der Oberfläche des Werkstückes erzeugt. Dabei wird die durch die gezielte Modifikation erzeugte Modifikation des Werkstücks mit einer Profilmodifikation und/oder einer durch ein Veränderung der Maschinenkinematik während des Bearbeitungsprozesses hervorgerufenen Modifikation überlagert und/oder die Form der gezielten Modifikation der Oberflächengeometrie des Werkzeuges und/oder mindestens ein und bevorzugt mehrere Parameter durch eine Ausgleichsrechnung bestimmt und/oder eine gewünschte Modifikation des Werkstücks durch eine Ausgleichsrechnung zumindest näherungsweise in mindestens zwei unterschiedliche Modifikationen des Werkstücks zerlegt wird.

Figur 16

EP 3 050 658 A1

**Beschreibung**

Die vorliegende Erfindung betrifft ein Verfahren zur Herstellung eines Werkstückes mit korrigierter Verzahnungsgeometrie und / oder modifizierter Oberflächenstruktur durch ein modifiziertes Werkzeug.

Aus der EP 1 995 010 B1 ist dabei ein Verfahren zur Erzeugung einer Verzahnung mit einer geforderten Balligkeit und einer geforderten Schränkung dargestellt. Hierfür wird zum einen ein balliges Werkzeug eingesetzt, welches dadurch hergestellt wird, dass beim Abrichten der Schleifschnecke während der Verschiebung der Schnecke in Richtung ihrer Achse der Abstand zwischen der Abrichtscheibe und der Schnecke geändert wird. Dabei wird in der Schneckenmitte ein bestimmter Achsabstand verwirklicht und zu den beiden Schneckenenden hin entsprechend dem Quadrat des Abstands von der Schneckenmitte vergrößert bzw. verkleinert. Zusätzlich wird während des Diagonalschleifverfahrens der Achsabstand zwischen der Schleifschnecke und dem Werkstück zur Erzeugung einer balligen Modifikation geändert. Weiterhin wird eine mögliche Ausführungsform erwähnt, bei welcher die sich durch die Kombination ergebende Modifikation über eine Simulation des Fertigungsprozesses auf einem Rechner bestimmt wird, wobei die Modifikationen iterativ so verändert werden sollen, dass die geforderte Balligkeit und die geforderte Verschränkung erreicht wird. Wie eine solche Iteration erfolgen könnte und wie das dabei notwendige Werkzeug hergestellt werden könnte, ist in der EP 1 995 010 B1 dagegen nicht angegeben. Die Verschränkung selbst wird dabei über die Differenz von Profilwinkelabweichungen in zwei unterschiedlichen Ebenen bestimmt.

Aus der DE 10 2012 015 846 A1 ist weiterhin ein Verfahren zur Erzeugung einer modifizierten Verzahnungsgeometrie bekannt, bei welchem die gewünschte Modifikation der Oberflächengeometrie des Werkstücks auf der Zahnflanke im Wälzbild zumindest lokal in einer ersten Richtung des Werkstücks einen konstanten Wert aufweist und in einer zweiten Richtung des Werkstückes, welche senkrecht zur ersten Richtung verläuft, durch eine Funktion f(x) gegeben ist. Dabei wird zur Herstellung dieser Modifikation der Oberflächengeometrie des Werkstücks eine Modifikation der Oberflächengeometrie des Werkzeuges eingesetzt, welche im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch die gleiche, gegebenenfalls linear um einen Faktor c gestauchte, Funktion f(cx) gegeben ist. Die Modifikation auf dem Werkzeug wird dabei dadurch bereitgestellt, dass eine oder mehrere spezifische Korrekturen der Achsbewegung zur herkömmlichen Abrichtkinematik in Abhängigkeit von dem Werkzeugdrehwinkel und der Werkzeugbreite vorgenommen werden. Weiterhin werden bei vorgegebener Makrogeometrie des Werkzeuges und gegebener Eingriffslinie des Abrichtwerkzeuges der Axialvorschub des Werkstückes und / oder die Shiftbewegung des Werkzeuges und / oder der Stauchungsfaktor c so gewählt, dass die Modifikation des Werkzeuges entlang einer Linie $G_1$, auf welcher sich der Berührpunkt bei der Bearbeitung des Werkstückes auf dem Werkzeug bewegt, der gewünschten Modifikation des Werkstückes entlang einer Linie $G_2$, auf welcher sich der Berührpunkt auf dem Werkstück bewegt, entspricht. Weiterhin ist angegeben, dass diese Korrekturen sich den Korrekturbewegungen, wie sie aus dem Stand der Technik bekannt sind, überlagern lassen.

Aufgabe der vorliegenden Erfindung ist es, die aus dem Stand der Technik bekannten Verfahren zur Herstellung eines Werkstückes mit korrigierter Verzahnungsgeometrie und / oder modifizierter Oberflächenstruktur zu verbessern bzw. entsprechende Berechnungsverfahren, Abrichtverfahren, Verzahnmaschinen bzw. Computersysteme zur Verfügung zu stellen.

Diese Aufgabe wird von den unabhängigen Ansprüchen der vorliegenden Erfindung gelöst. Vorteilhafte Ausgestaltungen der vorliegenden Erfindung sind Gegenstand der Unteransprüche.

Gemäß einem dritten Aspekt umfasst die vorliegende Erfindung ein Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges. Dabei wird eine gezielte Modifikation der Oberflächengeometrie des Werkzeuges erzeugt. Die gezielte Modifikation der Oberflächengeometrie des Werkzeuges kann dabei im Wälzbild zumindest lokal in einer ersten Richtung des Werkzeuges einen konstanten Wert aufweisen und in einer zweiten Richtung des Werkzeuges, welche senkrecht zur ersten Richtung verläuft, durch eine Funktion $F_{Ft1}$ gegeben sein. Alternativ oder zusätzlich kann die gezielte Modifikation dadurch erzeugt werden, dass die Position des Abrichters zum Werkzeug beim Abrichten in Abhängigkeit von dem Werkzeugdrehwinkel und/oder der Werkzeugbreitenposition variiert wird. Die gezielte Modifikation des Werkzeuges erzeugt durch das Diagonalwälzverfahren eine entsprechende Modifikation auf der Oberfläche des Werkstückes. Dabei ist erfindungsgemäß vorgesehen, dass die durch die gezielte Modifikation erzeugte Modifikation mit einer Profilmodifikation und/oder einer durch ein Veränderung der Maschinenkinematik während des Bearbeitungsprozesses hervorgerufenen Modifikation überlagert wird. Durch die Kombination mit einer Profilmodifikation und/oder einer durch ein Veränderung der Maschinenkinematik während des Bearbeitungsprozesses hervorgerufenen Modifikation können erfindungsgemäß erheblich mehr Modifikationen erzeugt werden als durch die gezielte Modifikation des Abrichters allein. Der Erfinder der vorliegenden Erfindung hat dabei erkannt, dass die einzelnen Modifikationen sich überlagern lassen und sich ohne gegenseitige Beeinflussung einfach addieren. Da für die Herstellung der einzelnen Modifikationen entsprechende Verfahren zur Verfügung stehen, müssen diese zur Herstellung der überlagerten Modifikation lediglich miteinander kombiniert werden.

Besonders bevorzugt wird die durch die gezielte Modifikation erzeugte Modifikation dabei mit einer Profilmodifikation überlagert. Die Profilmodifikation des Werkstücks kann dabei insbesondere durch eine entsprechend profilmodifiziertes Werkzeug erzeugt werden. Die Profilmodifikation des Werkzeugs kann wiederum durch einen entsprechend modifizierten Abrichter erzeugt werden.

Bevorzugt wird dabei eine Kombination aus Modifikationen bestimmt, welche die gewünschte Modifikation annähert oder sogar exakt ergibt.

Weiterhin können die Form und/oder Anteile und/oder Parameter der jeweiligen Modifikationen bevorzugt durch eine Ausgleichsrechnung bestimmt werden.

Gemäß einem zweiten Aspekt umfasst die vorliegende Erfindung ein Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges, wobei eine gewünschte Modifikation der Oberflächengeometrie des Werkstückes vorgegeben wird und auf Grundlage der gewünschten Modifikation der Oberflächengeometrie des Werkstückes eine gezielte Modifikation der Oberflächengeometrie des Werkzeuges ermittelt wird, welche durch das Diagonalwälzverfahren eine Modifikation auf der Oberfläche des Werkstückes erzeugt. Dabei ist erfindungsgemäß vorgesehen, dass die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt werden.

Gemäß diesem Aspekt der vorliegenden Erfindung wird die Ausgleichsrechnung daher eingesetzt, um zu einer gewünschten Modifikation auf der Oberfläche des Werkstückes diejenige gezielte Modifikation der Oberflächengeometrie des Werkzeuges und/oder mindestens ein und bevorzugt mehrere Parameter des Bearbeitungsvorgangs und/oder der Makrogeometrie des Werkzeuges zu ermitteln, bei deren Verwendung (ggf. in Kombination mit anderen Modifikationen) die gewünschte Modifikation angenähert oder sogar exakt erzeugt werden kann.

Gemäß dem zweiten Aspekt kann die durch die gezielte Modifikation der Oberflächengeometrie des Werkzeuges erzeugte Modifikation die einzige Modifikation darstellen. In einer möglichen Ausführungsform kann sie jedoch auch mit anderen Modifikationen überlagert werden. Insbesondere kann dies so erfolgen, wie dies im Hinblick auf den ersten und den dritten Aspekt näher dargestellt ist.

Gemäß dem zweiten Aspekt kann bevorzugt die Form der gezielten Modifikation der Oberflächengeometrie des Werkzeuges und/oder das Diagonalverhältnis und/oder der Achskreuzwinkel während des Diagonalwälzverfahrens und/oder des Konuswinkel und/oder des Profilwinkels des Werkzeuges bestimmt werden. Insbesondere wird dabei das die Form der gezielten Modifikation der Oberflächengeometrie des Werkzeuges und das Diagonalverhältnis bestimmt.

In einer ersten Variante kann dabei ein über die Werkzeugbreite konstantes Diagonalverhältnis bestimmt werden. Das Diagonalverhältnis beeinflusst dabei die Ausrichtung der Modifikation auf dem Werkstück. Wird daher mit einem konstanten Diagonalverhältnis gearbeitet, so weist die Modifikation auf dem Werkstück üblicherweise über die gesamte Zahnbreite die gleiche Ausrichtung, d.h. die gleiche erste Richtung, in welcher die Modifikation konstant ist, auf.

In einer zweiten Variante kann das Diagonalverhältnis jedoch auch als eine nicht-konstante Funktion der Vorschubposition bestimmt werden. Hierdurch ist es möglich, ein noch breiteres Spektrum an Modifikationen zu erzeugen. Insbesondere kann so eine Modifikation auf dem Werkstück erzeugt werden, deren Ausrichtung sich über die Zahnbreite ändert oder in unterschiedlichen Bereichen der Zahnflanke unterschiedlich ist.

Insbesondere kann dabei zur Bearbeitung unterschiedlicher Bereiche des Werkstücks mit unterschiedlichen Diagonalverhältnissen gearbeitet werden.

Dabei kann in eine ersten Variante innerhalb der jeweiligen Bereiche mit einem konstanten Diagonalverhältnis gearbeitet werden. Insbesondere können dabei zwei oder mehr Bereiche bestimmt werden oder vorgegeben sein, innerhalb welcher jeweils ein konstantes Diagonalverhältnis bestimmt wird, wobei sich die Diagonalverhältnisse mindestens zweier Bereiche unterscheiden können. Weiterhin kann die Zahl und/oder Anordnung der Bereiche bestimmt werden, sowie die jeweiligen Diagonalverhältnisse.

Alternativ kann das Diagonalverhältnis zumindest in einem Bereich des Axialvorschubs als eine stetige, nicht-konstante Funktion des Axialvorschubs bestimmt werden. Insbesondere kann das Diagonalverhältnis dabei in Abhängigkeit von dem Axialvorschub zumindest innerhalb gewisser Randbedingungen frei bestimmt werden.

Dabei kann die gezielte Modifikation des Werkzeuges im Wälzbild zumindest lokal in einer ersten Richtung des Werkzeuges einen konstanten Wert aufweisen und in einer zweiten Richtung des Werkzeuges, welche senkrecht zur ersten Richtung verläuft, durch eine Funktion $F_{Ft1}$ gegeben sein. Alternativ oder zusätzlich kann die gezielte Modifikation dadurch erzeugt werden, dass die Position des Abrichters zum Werkzeug beim Abrichten in Abhängigkeit von dem Werkzeugdrehwinkel und/oder der Werkzeugbreitenposition variiert wird.

Gemäß einem dritten Aspekt umfasst die vorliegende Erfindung ein Verfahren zur Herstellung eines Werkstückes mit korrigierter Verzahnungsgeometrie und / oder modifizierter Oberflächenstruktur durch ein modifiziertes Werkzeug. Dabei werden zur Herstellung des Werkstückes mindestens zwei unterschiedliche Modifikationen überlagert, welche durch eine Modifikation des Abrichtvorgangs des Werkzeugs und / oder des zum Abrichten des Werkzeugs verwendeten Abrichters und / oder des Bearbeitungsvorgangs des Werkstückes erzeugbar sind. Erfindungsgemäß ist dabei vorgesehen, dass eine gewünschte Modifikation des Werkstücks durch eine Ausgleichsrechnung zumindest näherungsweise in mindestens zwei unterschiedliche Modifikationen des Werkstücks zerlegt wird.

Erfindungsgemäß wird damit die gewünschte Modifikation des Werkstückes in unterschiedliche Anteile zerlegt. Bevorzugt erfolgt die Zerlegung dabei so, dass die durch die Ausgleichsrechnung bestimmten unterschiedlichen Modifikationen des Werkstücks jeweils durch eines der folgenden drei Verfahren herstellbar sind: Durch eine Modifikation des Abrichtvorgangs des Werkzeuges, durch eine Modifikation des zum Abrichten des Werkzeuges verwendeten Abrichters und / oder durch eine Modifikation des Bearbeitungsvorgangs des Werkstückes.

Bevorzugt werden aus den erfindungsgemäß bestimmten Modifikationen des Werkstücks die zu deren Erzeugung benötigten Modifikationen des Abrichtvorgangs des Werkzeuges und / oder des zum Abrichten des Werkzeugs verwendeten Abrichters und / oder des Bearbeitungsvorgangs des Werkstücks bestimmt. Das erfindungsgemäße Verfahren ist damit zweischrittig, indem zunächst die gewünschte Modifikation des Werkstücks in unterschiedliche Modifikationen des Werkstücks zerlegt wird, und erst nach dieser Zerlegung die für die einzelnen Modifikationen notwendigen Modifikationen am Abrichter, am Abrichtvorgang oder am Bearbeitungsvorgang bestimmt werden.

Bevorzugt wird die gewünschte Modifikation dabei zumindest in eine erste Modifikation zerlegt, welche durch eine Modifikation des Abrichtvorgangs des Werkzeuges erzeugbar ist, und eine zweite oder dritte Modifikation, welche durch eine Modifikation des zum Abrichten des Werkzeugs verwendeten Abrichters bzw. durch eine Modifikation des Bearbeitungsvorgangs des Werkstückes erzeugbar ist.

Die drei Aspekte der vorliegenden Erfindung können dabei unabhängig voneinander zum Einsatz kommen. In einer bevorzugten Ausgestaltung der vorliegenden Erfindung kommen jedoch mindestens zwei und ggf. alle drei Aspekte in Kombination zum Einsatz. Insbesondere kann dabei die gemäß dem zweiten Aspekt vorgesehene Bestimmung der gezielten Modifikation der Oberflächengeometrie des Werkzeuges und/oder mindestens eines und bevorzugt mehrerer Parameter des Bearbeitungsvorgangs und/oder der Makrogeometrie des Werkzeuges auch im Rahmen der gemäß dem ersten oder dritten Aspekt ggf. vorgesehenen Ausgleichsrechnung erfolgen.

Alle drei erfindungsgemäßen Verfahren haben dabei erhebliche Vorteile gegenüber dem Stand der Technik. Anders als das in der EP 1 995 010 D1 ohnehin nur am Rande erwähnte Iterationsverfahren, bei welchem über eine Simulation des Fertigungsprozesses und eine Iteration eine Anpassung an die Vorgaben versucht wird, ermöglichen die drei erfindungsgemäßen Verfahren tatsächlich eine gute Annäherung an eine gewünschte Modifikation und in einigen wichtigen Fällen sogar exakte Erzeugung der gewünschten Modifikation. Denn während die EP 1 995 010 D1 keine Strategie darlegt, wie die Iteration erfolgen könnte, oder wie der Simulation zugrunde zu legenden Werkzeuge herstellbar wären und damit nicht praktikabel ist, gibt die vorliegende Erfindung dem Fachmann tatsächlich die Möglichkeit an die Hand, eine Vielzahl von gewünschte Modifikation zu erzeugen.

Dabei kann erfindungsgemäß ausgenutzt werden, dass die sich durch die unterschiedlichen Arten der Erzeugung ergebenden Modifikationen unterschiedliche Abhängigkeiten von den Koordinaten im Wälzbild haben und sich daher ergänzen. Dabei berücksichtigt die vorliegende Erfindung die Herstellbarkeit der Modifikationen schon von Anfang an.

Bevorzugt werden gemäß den oben dargestellten erfindungsgemäßen Verfahren mindestens zwei der folgenden Modifikationen überlagert:

- eine erste Modifikation der Oberfläche des Werkstückes, welche durch eine gezielte Modifikation der Oberflächengeometrie des Werkzeuges erzeugt wird, welche wiederum dadurch erzeugt wird, dass die Position des Abrichters zum Werkzeug beim Abrichten in Abhängigkeit von dem Werkzeugdrehwinkel und/oder der Werkzeugbreitenposition variiert wird, und/oder welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist,
- eine zweite Modifikation der Oberfläche des Werkstückes, welche durch eine Profilmodifikation des Abrichters erzeugt wird und/oder
- eine dritte Modifikation der Oberfläche des Werkstückes, welche durch ein Veränderung der Maschinenkinematik während des Bearbeitungsprozesses des Werkstückes erzeugt wird.

Alternativ oder zusätzlich können die Form und/oder die Anteile und/oder die Parameter der jeweiligen Modifikationen durch eine Ausgleichsrechnung bestimmt werden, bei welcher eine vorgegebene, gewünschte Modifikation zumindest näherungsweise in mindestens zwei der folgenden Modifikationen zerlegt wird:

- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

Die vorliegende Erfindung macht sich dabei zu nutze, dass die erste, zweite und dritte Modifikation eine spezifische Abhängigkeit von den Koordination im Wälzbild aufweisen und dabei jeweils durch die entsprechenden Verfahren herstellbar sind.

Bevorzugt wird dabei gemäß dem ersten und dritten Aspekt erfindungsgemäß eine gewünschte Modifikation vorgegeben und mittels der Ausgleichsrechnung diejenige Kombination von Modifikationen ermittelt, welche die gewünschte Modifikation optimal annähert und / oder exakt erzeugt. Bei manchen, durchaus relevanten Anwendungsfällen wird sich dabei eine exakte Zerlegung der gewünschten Modifikation in die erste, zweite und / oder dritte Modifikation ermitteln lassen. Bei anderen, noch komplexeren Modifikationen wird durch die Ausgleichsrechnung dagegen eine möglichst optimale Annäherung an die gewünschte Modifikation erzeugt.

Bevorzugt wird gemäß dem zweiten Aspekt erfindungsgemäß eine gewünschte Modifikation vorgegeben und mittels der Ausgleichsrechnung diejenigen Parameter des Bearbeitungsvorgangs und/oder der Makrogeometrie des Werkzeuges und/oder diejenige gezielte Modifikation der Oberflächengeometrie des Werkzeuges ermittelt, welche die gewünschte Modifikation optimal annähert und / oder exakt erzeugt. Bei manchen, durchaus relevanten Anwendungsfällen wird sich dabei eine exakte Erzeugung der gewünschten Modifikation durch entsprechende Wahl der gezielten Modifikation der Oberflächengeometrie des Werkzeuges und der Parameter des Bearbeitungsvorgangs und/oder der Makrogeometrie des Werkzeuges erreichen lassen. Bei anderen, noch komplexeren Modifikationen wird durch die Ausgleichsrechnung dagegen eine möglichst gute Annäherung an die gewünschte Modifikation erzeugt.

Die gewünschte Modifikation kann dabei beispielsweise als stetige Funktion und / oder an einer Vielzahl von Punkten vorgegeben werden.

Weiterhin bevorzugt wird die Form der gezielten Modifikation bzw. wird die Form der einzelnen Modifikationen an einer Vielzahl von Punkten und / oder als stetige Funktion bestimmt.

Insbesondere kann auch hier das Wälzbild mit einer Punktewolke überzogen werden, auf welcher die Modifikationen bestimmt werden, oder die Modifikation als stetige Funktionen über das gesamte Wälzbild dargestellt werden. Bevorzugt wird die Modifikation dabei an mehr als zehn Punkten im Wälzbild, weiterhin bevorzugt an mehr als 100 Punkten im Wälzbild bestimmt. Weiterhin bevorzugt werden die gewünschte Modifikation und/oder die durch die Zerlegung erzeugten Modifikationen als Funktion der Position im Wälzbild angegeben bzw. bestimmt.

Die Vielzahl von Punkten bzw. die von diesen erzeugte Punktewolke spannt dabei bevorzugt eine Fläche auf der Zahnflanke auf. Ist die Modifikation als stetige Funktion gegeben oder wird sie als eine solche bestimmt, so ist diese Funktion bevorzugt zumindest auf einer Teilfläche der Zahnflanke definiert, bevorzugt auf der gesamten Zahnflanke. Insbesondere ist die Modifikation damit nicht mehr nur auf gewissen Linien vorgegeben bzw. bestimmbar, sondern flächig.

Neben den oben dargestellten Verfahren zur Herstellung eines Werkstücks mit einer gewünschten Modifikation umfasst die vorliegende Erfindung weiterhin entsprechende Verfahren zur Bestimmung der zur Herstellung eines Werkstückes mit einer gewünschten Modifikation der Verzahnungsgeometrie und/oder Oberflächenstruktur notwendigen gezielten Modifikation der Oberflächengeometrie des hierfür eingesetzten Werkzeuges oder der hierfür notwendigen Kombination an Modifikationen.

Gemäß dem ersten Aspekt der Erfindung umfasst diese dabei ein Verfahren zur Bestimmung der zur Herstellung eines Werkstückes mit einer gewünschten Modifikation der Verzahnungsgeometrie und/oder Oberflächenstruktur notwendigen Kombination an Modifikationen, wobei eine gezielte Modifikation der Oberflächengeometrie des Werkzeuges, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, mit einer Profilmodifikation und/oder einer durch ein Veränderung der Maschinenkinematik während des Bearbeitungsprozesses hervorgerufenen Modifikation überlagert wird, wobei eine gewünschte Modifikation vorgegeben wird und mittels einer Ausgleichsrechnung diejenige Kombination von Modifikationen ermittelt wird, welche die gewünschte Modifikation optimal annähert und/oder exakt erzeugt.

Gemäß dem dritten Aspekt umfasst die vorliegende Erfindung ein Verfahren zur Bestimmung der zur Herstellung eines Werkstückes mit einer gewünschten Modifikation der Verzahnungsgeometrie und/oder Oberflächenstruktur notwendigen gezielten Modifikation der Oberflächengeometrie des hierfür eingesetzten Werkzeuges, wobei es sich bei dem Bearbeitungsvorgang um ein Diagonalwälzverfahren handelt, bei welchem die gezielten Modifikation der Oberflächengeometrie des Werkzeuges eine Modifikation der Oberflächengeometrie des Werkstücks erzeugt. Dabei werden die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt.

Gemäß dem dritten Aspekt der Erfindung umfasst diese ein Verfahren zur Bestimmung der zur Herstellung eines Werkstückes mit einer gewünschten Modifikation der Verzahnungsgeometrie und/oder Oberflächenstruktur notwendigen Kombination an Modifikationen, wobei eine vorgegebene, gewünschte Modifikation zumindest näherungsweise in mindestens zwei der folgenden Modifikationen zerlegt wird:

- eine erste, durch gezielte Modifikation des Werkzeuges beim Abrichten erzeugbare Modifikation der Oberflächengeometrie des Werkstückes, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite, durch die Form des Abrichters erzeugbare reine Profilmodifikation und/oder
- eine dritte, durch eine Veränderung der Maschinenkinematik während des Bearbeitungsprozesses erzeugbare Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

Auch durch die erfindungsgemäßen Verfahren zur Bestimmung der zur Herstellung des Werkstückes notwendigen gezielten Modifikation des Werkzeuges und/oder Kombinationen an Modifikationen ergeben sich die Vorteile, welche oben im Hinblick auf die erfindungsgemäßen Herstellungsverfahren beschrieben wurden. Insbesondere können die erfindungsgemäßen Verfahren zur Bestimmung der Modifikationen dabei im Rahmen solcher Herstellungsverfahren zum Einsatz kommen. Weiterhin können die erfindungsgemäßen Bestimmungsverfahren dabei so ausgestaltet sein, wie dies bereits oben im Hinblick auf die Herstellungsverfahren dargestellt wurde.

Bevorzugt kann die gewünschte Modifikation des Werkstückes zumindest innerhalb gewisser Randbedingungen frei gewählt werden. Die erfindungsgemäßen Verfahren ermöglichen dabei eine zumindest näherungsweise Erzeugung beinahe beliebiger Modifikationen.

Bevorzugt kann im Rahmen der Zerlegung bzw. Ausgleichrechnung die Form der jeweiligen Modifikation unter Berücksichtigung ihrer jeweiligen Abhängigkeit von den Koordinaten im Wälzbild zumindest innerhalb gewisser Randbedingungen frei gewählt werden. Dies ist erfindungsgemäß deshalb möglich, weil die vorliegende Erfindung die Herstellbarkeit der Modifikationen von vornherein berücksichtigt.

Bevorzugt kann die erste Richtung der ersten Modifikation zusammen mit der zweiten Richtung im Rahmen der Ausgleichungsrechnung zumindest innerhalb gewisser Randbedingungen frei gewählt werden.

Weiterhin können ggf. ein und bevorzugt mehrere Parameter des Bearbeitungsvorgangs und/oder der Makrogeometrie des Werkzeuges innerhalb gewisser Randbedingungen frei gewählt werden. Insbesondere kann dabei das Diagonalverhältnis und/oder der Achskreuzwinkel während des Diagonalwälzverfahrens und/oder der Konuswinkel und/oder der Profilwinkels des Werkzeuges frei gewählt werden.

Bevorzugt sind dagegen die dritte und die vierte Richtung, welche die dritte Modifikation bestimmen, durch den Grundschrägungswinkel des Werkstückes vorgegeben. Die dritte und die vierte Richtung können daher im Rahmen der Ausgleichungsrechnung nicht angepasst werden.

In einer möglichen Ausführungsform der vorliegenden Erfindung können im Rahmen der Ausgleichsrechnung die möglichen Werte der Funktionen durch Randbedingungen einschränkt werden. Insbesondere können dabei die möglichen Werte für die erste bzw. zweite Richtung der ersten Modifikation eingeschränkt werden. Weiterhin können die möglichen Werte für das Diagonalverhältnis eingeschränkt werden.

Weiterhin kann die maximale Variation der die Modifikationen beschreibenden Funktionen beschränkt werden. Auch hierdurch können Einschränkungen, welche sich durch die jeweiligen Erzeugungsverfahren ergeben, berücksichtigt werden.

Erfindungsgemäß kann im Rahmen der Ausgleichsrechnung gemäß dem ersten und dritten Aspekt eine Abstandsfunktion eingesetzt werden, welche den Unterschied zwischen der durch die Summe der jeweiligen Modifikationen gegebenen Gesamtmodifikation und der gewünschten Modifikation quantifiziert.

Erfindungsgemäß kann im Rahmen der Ausgleichsrechnung gemäß dem zweiten Aspekt eine Abstandsfunktion eingesetzt werden, welche den Unterschied zwischen der durch die gezielte Modifikation des Werkzeuges erzeugten Modifikation auf der Oberfläche des Werkstückes und der gewünschten Modifikation quantifiziert. Dies ist der Fall, wenn keine anderen Modifikationen eingesetzt werden.

Im Rahmen der Ausgleichsrechnung erlaubt die Abstandsfunktion damit eine Quantifizierung der Güte der Annäherung durch die gewählten Modifikationen.

Bevorzugt nimmt die Abstandsfunktion dabei eine Mittelwertbildung über eine Vielzahl an Punkten im Wälzbild oder über das gesamte Wälzbild vor. Insbesondere wenn die Modifikationen über eine Vielzahl von Punkten bestimmt werden, reicht als Abstandsfunktion eine Mittelwertbildung über diese Punkte. Bei der Bestimmung von stetigen Funktionen als Modifikationen wird die Mittelwertbildung dagegen bevorzugt über das gesamte Wälzbild vorgenommen. Bevorzugt erfolgt die Mittelwertbildung dabei über sämtliche Punkte, an welchen die Modifikation bestimmt wird.

Bei der Abstandsfunktion kann es sich beispielsweise um die Summe bzw. ein Integral über den an den einzelnen Punkten vorliegenden Unterschied zwischen der Summe der jeweiligen Modifikationen und der gewünschten Modifikation handeln. Dabei kann dieser Unterschied für alle Punkte im Wälzbild identisch bestimmt werden, beispielsweise als das Quadrat der Differenz.

Im Rahmen der Ausgleichsrechnung kann jedoch auch eine Abstandsfunktion $A(w_F, z_F)$ eingesetzt werden, welche von dem Wälzweg $w_F$ und der Zahnbreitenposition $z_F$ abhängt. Hierdurch können die Unterschiede in unterschiedlichen Bereichen des Werkstückes unterschiedlich gewichtet werden.

Insbesondere kann dabei im Rahmen der Ausgleichsrechnung eine gewichtete Abstandsfunktion eingesetzt werden, wobei bevorzugt Abweichungen in bestimmten Bereichen des Werkstückes stärkerer gewichtet werden als Abweichungen in anderen Bereichen. Insbesondere werden dabei bevorzugt Abweichungen in solchen Bereichen, in welchen die Toleranzen der Oberflächengeometrie des Werkstückes größer sind, geringer gewichtet als Abweichungen in solchen Bereichen, in welchen die Toleranzen kleiner sind.

Gemäß dem vorliegenden Verfahren ist bevorzugt vorgesehen, dass im Rahmen der Ausgleichsrechnung diejenige gezielte Modifikation der Oberflächengeometrie des Werkstückes, welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist, bestimmt wird, welche ggf. zusammen mit mindestens einer weiteren Modifikation die gewünschte Modifikation optimal annähert und/oder exakt erzeugt, wobei aus der gezielten Modifikation der Oberflächengeometrie des Werkstückes die hierfür notwendige Modifikation der Oberflächengeometrie des Werkzeugs und/oder die hierfür beim Abrichten notwendige Maschinenkinematik bestimmt wird. Bevorzugt weist die gezielte Modifikation der Oberflächengeometrie des Werkzeuges dabei zumindest lokal in einer ersten Richtung des Werkzeuges einen konstanten Wert auf und ist in einer zweiten Richtung des Werkzeuges, welche senkrecht zur ersten Richtung verläuft, durch eine Funktion $F_{Ft1}$ gegeben ist, und/oder wird dadurch erzeugt, dass die Position des Abrichters zum Werkzeug beim Abrichten in Abhängigkeit von dem Werkzeugdrehwinkel und/oder der Werkzeugbreitenposition variiert wird.

Bevorzugt handelt es sich bei der Funktion $F_{Ft1}$ auf dem Werkzeug dabei um die gleiche, gegebenenfalls linear um einen Faktor gestauchte Funktion wie die Funktion $F_{Ft2}$ auf dem Werkstück. Die lineare Stauchung kann dabei das Argument der Funktion betreffen, und/oder die Größe der Funktion. Natürlich ändert sich dabei das Vorzeichen der Funktion zwischen Werkstück und Werkzeug, da erhabene Stellen auf dem Werkzeug abgesenkte Stellen auf dem Werkstück erzeugen und umgekehrt. Im Normalschnitt kann dabei insbesondere $F_{Ft1}(x) = - F_{Ft2}(cx)$ gelten, d.h. es liegt lediglich in Bezug auf das Argument eine Stauchung vor, im Stirnschnitt kann dagegen ein zusätzlicher konstanter Faktor k im Hinblick auf die Größe der Funktion vorliegen, d.h. $F_{Ft1}(x) = - k * F_{Ft2}(cx)$. Die Faktoren k und c können dabei je nach den konkreten Randbedingungen größer oder kleiner 1 sein.

Als weitere Modifikation kommt dabei insbesondere eine reine Profilmodifikation und / oder eine durch die Maschinenkinematik während des Bearbeitungsprozesses des Werkstückes erzeugbare Modifikation zum Einsatz. Die erfindungsgemäße erste Modifikation, welche durch die Modifikation des Abrichtvorgangs des zum Bearbeiten des Werkstückes eingesetzten Werkzeuges erzeugt wird, wird dabei bevorzugt im Diagonalwälzverfahren erzeugt. Bevorzugt wird diese Modifikation dabei so erzeugt, wie dies bereits aus der DE 10 2012 015 846 A1 bekannt ist.

Bevorzugt wird erfindungsgemäß im Rahmen der Ausgleichsrechnung die Form und / oder der Anteil und / oder die Parameter mindestens einer und bevorzugt zweier oder dreier der möglichen Modifikationen variiert, um diejenige Kombination von Modifikationen zu ermitteln, welche die gewünschte Modifikation möglichst optimal annähert und / oder exakt erzeugt. Insbesondere kann dabei die Form der Funktion $F_{Ft1/2}$ und / oder der Funktion $F_{KFt}$ und / oder der Profilmodifikation und / oder die erste Richtung der ersten Modifikation varriiert werden.

Alternativ oder zusätzlich kann erfindungsgemäß im Rahmen der Ausgleichsrechnung mindestens ein und bevorzugt mehrere Parameter des Bearbeitungsvorgangs und/oder der Makrogeometrie des Werkzeuges und/oder die Form der gezielten Modifikation des Werkzeuges variiert werden, um diejenigen Parameter und/oder diejenige Modifikation zu ermitteln, welche die gewünschte Modifikation möglichst optimal annähert und/oder exakt erzeugt. Insbesondere kann dabei die Form der Funktion $F_{Ft1/2}$ und / oder die erste Richtung der ersten Modifikation und/oder das Diagonalverhältnis und/oder der Achskreuzwinkel während des Diagonalwälzverfahrens und/oder des Konuswinkel und/oder des Profilwinkels des Werkzeuges variiert werden.

Insbesondere kann dabei die Form der Funktion $F_{Ft1/2}$ und das Diagonalverhältnis variiert werden.

In einer ersten Variante kann dabei ein über die Werkzeugbreite konstantes Diagonalverhältnis vorgesehen sein, dessen Wert im Rahmen der Ausgleichsrechnung variiert wird.

In einer zweiten Variante kann das Diagonalverhältnis jedoch auch als eine nicht-konstante Funktion der Vorschubposition definiert sein. Insbesondere kann dabei zur Bearbeitung unterschiedlicher Bereiche des Werkstücks mit unterschiedlichen Diagonalverhältnissen gearbeitet werden.

Dabei kann in eine ersten Variante innerhalb der jeweiligen Bereiche mit einem konstanten Diagonalverhältnis gearbeitet werden. Insbesondere können dabei zwei oder mehr Bereiche vorgegeben sein, innerhalb welcher der Wert eines jeweils konstanten Diagonalverhältnisses bestimmt wird, wobei sich die Diagonalverhältnisse mindestens zweier Bereiche unterscheiden können. Weiterhin kann die Zahl und/oder Anordnung der Bereiche variiert werden, sowie die jeweiligen Diagonalverhältnisse.

Alternativ kann das Diagonalverhältnis auch als zumindest abschnittsweise stetige, nicht-konstante Funktion des Axialvorschubs definiert sein und variiert werden. Insbesondere kann das Diagonalverhältnis dabei in Abhängigkeit von dem Axialvorschub zumindest innerhalb gewisser Randbedingungen frei variiert werden.

Bei der vorliegenden Erfindung können im Rahmen der ersten Modifikation sowohl gezielte Modifikationen der Oberflächengeometrie des Werkzeuges berücksichtigt werden, welche durch ein Abrichten mit nur einem Hub erzeugbar sind, als auch solche Modifikationen, welche durch das Abrichten in mehreren Hüben erzeugt werden. Gleiches gilt für die zweite, durch eine Profilmodifikation des Abrichters erzeugbare Modifikation.

Die vorliegende Erfindung umfasst weiterhin ein Verfahren zum Abrichten eines Werkzeuges, durch welches ein Werkzeug für ein erfindungsgemäßes Verfahren zur Herstellung eines Werkstückes bereitgestellt werden kann, beziehungsweise durch welche die durch ein erfindungsgemäßes Bestimmungsverfahren ermittelte Kombination umgesetzt werden kann. Dabei wird zum einen eine gezielte Modifikation der Oberflächengeometrie des Werkzeuges durch eine Veränderung der Maschinenkinematik während des Abrichtprozesses in Abhängigkeit von dem Werkzeugdrehwinkel und / oder der Werkzeugbreitenposition erzeugt. Zum anderen wird zusätzlich ein modifiziertes Abrichtwerkzeug eingesetzt, um eine Profilmodifikation zu erzeugen. Die Veränderung der Maschinenkinematik während des Abrichtprozesses kann dabei insbesondere dadurch erfolgen, dass eine oder mehrere der folgenden Korrekturen der Achsbewegungen zur herkömmlichen Abrichtkinematik vorgenommen werden:

a) Variation des Achsabstandes des Abrichters zum Werkzeug in Abhängigkeit des Werkzeugdrehwinkels oder der Werkzeugbreite (Zustellung)

b) Variation des Axialvorschubs des Werkzeugs bzw. des Abrichters in Abhängigkeit des Werkzeugdrehwinkels oder der Werkzeugbreite (Shiften)

c) Variation des Achskreuzwinkels des Werkzeuges und des Abrichters in Abhängigkeit des Werkzeugdrehwinkels oder der Werkzeugbreite (Schwenken)

d) Variation der Werkzeugdrehzahl in Abhängigkeit des Werkzeugdrehwinkels oder der Werkzeugbreite.

Das erfindungsgemäße Abrichtverfahren ermöglicht damit die Erzeugung einer Überlagerung einer ersten und zweiten Modifikation gemäß dem erfindungsgemäßen Herstellungs- bzw. Bestimmungsverfahren.

Die vorliegende Erfindung kann jedoch auch bei nicht-abrichtbaren Werkzeugen zum Einsatz kommen. In diesem Fall werden die Modifikationen des Werkzeugs nicht während des Abrichtens, sondern bereits bei der Herstellung der Werkzeuge erzeugt. Hierzu kann jedoch ggf. ein dem Abrichten entsprechendes Verfahren eingesetzt werden. Bevorzugt kommt die vorliegende Erfindung aber bei abrichtbaren Werkzeugen zum Einsatz.

Die vorliegende Erfindung umfasst weiterhin eine Verzahnmaschine zur Durchführung eines erfindungsgemäßen Herstellungsverfahrens und / oder zur Durchführung eines erfindungsgemäßen Abrichtverfahrens. Die Verzahnmaschine weist dabei vorteilhafter Weise eine Eingabe- und / oder Berechnungsfunktion auf, über welche die kinematischen Veränderungen der Maschinenkinematik während des Bearbeitungsprozesses und / oder Abrichtprozesses vorgebbar und / oder bestimmbar sind, und / oder eine Ansteuerungsfunktion, welche die Maschinenkinematik während des Bearbeitungsprozesses und / oder des Abrichtprozesses verändert. Bevorzugt kann die erfindungsgemäße Verzahnmaschine dabei insbesondere so ausgestaltet sein, dass eine Überlagerung einer ersten und dritten Modifikation gemäß dem erfindungsgemäßen Herstellungs- bzw. Berechnungsverfahren erzeugbar ist.

Bevorzugt erlaubt die Eingabefunktion dabei die Eingabe einer gewünschten Modifikation, während die Berechnungsfunktion die zu deren Herstellung notwendigen Modifikation und / oder die Erzeugung der Modifikation benötigten Veränderungen der Maschinenkinematik während des Bearbeitungsprozesses und / oder Abrichtprozesses bestimmt.

Weiterhin bevorzugt handelt es sich bei der erfindungsgemäßen Verzahnmaschine um eine Verzahnschleifmaschine. Bevorzugt weist die Verzahnschleifmaschine eine Werkzeugspindel, eine Werkstückspindel und/oder eine Spindel für die Aufnahme eines Abrichters, insbesondere einer Abrichtscheibe auf, und Maschinenachsen zur Durchführung der erfindungsgemäßen Verfahren notwendigen Relativbewegungen zwischen Werkstück und Werkzeug und / oder zwischen Werkzeug und Abrichter gemäß der vorliegenden Erfindung.

Die vorliegende Erfindung umfasst weiterhin ein Computersystem und / oder ein Softwareprogramm zur Bestimmung der zur Herstellung eines Werkstücks mit einer gewünschten Modifikation notwendigen Kombination an Modifikationen. Das Computersystem bzw. das Softwareprogramm umfasst dabei eine Funktion zur Vorgabe einer gewünschten Modifikation, und umfasst weiterhin eine Ausgleichsrechnungsfunktion.

Gemäß dem ersten und dritten Aspekt ermittelt die Ausgleichsrechungfunktion eine Kombination von Modifikationen, welche die gewünschte Modifikation möglichst optimal annähert und / oder exakt bestimmt.

Die Ausgleichsrechnungsfunktion ist dabei gemäß dem ersten Aspekt so gestaltet, dass sie eine durch eine gezielte Modifikation der Oberflächengeometrie des Werkzeuges erzeugbare Modifikation des Werkstücks und deren Kombination mit einer Profilmodifikation und/oder einer durch ein Veränderung der Maschinenkinematik während des Bearbeitungsprozesses hervorgerufenen Modifikation ermittelt, so dass die Kombination die gewünschte Modifikation möglichst optimal annähert und/oder exakt erzeugt.

Die Ausgleichsrechnungsfunktion ist dabei gemäß dem zweiten Aspekt so gestaltet, dass sie die Form einer gezielten Modifikation der Oberflächengeometrie des Werkzeuges und/oder mindestens einen und bevorzugt mehrere Parameter der Makrogeometrie des Werkzeuges und/oder mindestens einen und bevorzugt mehrere Parameter eines Diagonalwälzverfahrens ermittelt, durch welche die gewünschte Modifikation möglichst optimal annähert und/oder exakt erzeugt werden kann.

Die Ausgleichsrechnungsfunktion ist gemäß dem dritten Aspekt so gestaltet, dass sie eine vorgegebene, gewünschte Modifikation des Werkstücks durch eine Ausgleichsrechnung zumindest näherungsweise in mindestens zwei unterschiedliche Modifikationen des Werkstücks zerlegt, welche jeweils durch eine Modifikation des Abrichtvorgangs des Werkzeuges und / oder des zum Abrichten des Werkzeuges verwendeten Abrichters und / oder des Bearbeitungsvorgangs des Werkstückes erzeugbar sind.

Das erfindungsgemäße Computersystem und / oder Softwareprogramm implementiert damit die erfindungsgemäße Ausgleichsrechnungsfunktion.

Bevorzugt umfasst das Computersystem bzw. Softwareprogramm weiterhin eine Berechnungsfunktion, welche aus den so bestimmten Modifikationen des Werkstückes die zu deren Erzeugung benötigten Modifikationen des Abrichtvorgangs des Werkzeuges und / oder des zum Abrichten des Werkzeuges verwendeten Abrichters und / oder des Bearbeitungsvorgangs des Werkstücks bestimmt.

Bevorzugt ist die Ausgleichsrechnungsfunktion dabei so ausgestaltet, dass sie die gewünschte Modifikation zumindest näherungsweise in mindestens zwei der folgenden Modifikationen zerlegt:

- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

Bevorzugt ist das erfindungsgemäße Computersystem und / oder Softwareprogramm so ausgestaltet, dass es eines der oben dargestellten Verfahren implementiert. Insbesondere kann dabei die Ausgleichsrechnungsfunktion die Funktionalitäten aufweisen, welche bereits oben im Hinblick auf die erfindungsgemäßen Verfahren beschrieben wurden.

Das erfindungsgemäße Computersystem kann dabei eine Schnittstelle zu einer Verzahnungsmaschine aufweisen, und der Verzahnungsmaschine die zur Durchführung eines erfindungsgemäßen Verfahrens notwendigen Ansteuerungsparameter und / oder Ansteuerungsbefehle übermitteln. Das erfindungsgemäße Softwareprogramm kann auf einer Verzahnmaschine installierbar sein, um diese zur Durchführung eines erfindungsgemäßen Verfahrens zu programmieren.

Bevorzugt handelt es sich dabei um eine erfindungsgemäße Verzahnmaschine, wie sie oben dargestellt wurde.

Bevorzugt sind durch das Computersystem und / oder die Software die Veränderungen der Maschinenkinematik während des Bearbeitungsprozesses und / oder Abrichtprozesses vorgebbar und / oder bestimmbar.

Bevorzugt werden erfindungsgemäß als Modifikationen Abweichungen der Verzahngeometrie von einer evolventischen Verzahnung betrachtet. Dabei kann es sich sowohl um gerad-verzahnte, als auch um schräg-verzahnte Verzahnungen handeln. Die Verzahnungen können sowohl symmetrisch als auch asymmetrisch seien, d. h. die Profilwinkel der linken und rechten Flanken können, müssen aber nicht unterschiedlich sein.

Das erfindungsgemäße Herstellungsverfahren wird dabei bevorzugt beim Diagonalwälzschleifen eingesetzt. Als Werkzeug kommt bevorzugt eine Schleifschnecke zum Einsatz. Das Abrichten erfolgt bevorzugt über eine Profilrolle. Das Abrichten der Zahnflanke kann dabei in einem oder mehreren Hüben erfolgen.

Insbesondere kann die Profilrolle dabei beim Abrichten vom Fußbereich bis zum Kopfbereich mit dem Zahn des Werkzeuges in Kontakt stehen, so dass die Modifikation über die gesamte Zahnhöhe in einem Hub erfolgt.

Alternativ kann die Profilrolle beim Abrichten nur in Teilbereichen zwischen Fuß und Kopf mit dem Zahn des Werkzeuges in Kontakt stehen, so dass die Modifikation über die Zahnhöhe in mehreren Hüben erfolgt.

Das Abrichten des Zahnkopfes kann über einen Kopfabrichter erfolgen.

Das Werkzeug kann dabei in einer ersten Variante der vorliegenden Erfindung eine zylindrische Grundform aufweisen. In diesem Fall haben der Achskreuzwinkel während des Diagonalwälzverfahrens und der Profilwinkel des Werkzeuges keine Auswirkung auf die Modifikation und werden im Rahmen der Ausgleichsrechnung daher auch nicht variiert bzw. bestimmt. Bei einem zylindrischen Werkzeug kann jedoch das Diagonalverhältnis im Rahmen der Ausgleichsrechnung variiert bzw. bestimmt werden.

Das Werkzeug kann dabei in einer zweiten Variante der vorliegenden Erfindung eine konische Grundform aufweisen. In diesem Fall haben der Achskreuzwinkel während des Diagonalwälzverfahrens und der Profilwinkel und der Konuswinkel des Werkzeuges Auswirkungen auf die Modifikation und können im Rahmen der Ausgleichsrechnung daher ggf. ebenfalls variiert bzw. bestimmt werden.

Das erfindungsgemäße Werkzeug mit einer konischen Grundform weist dabei bevorzugt eine Evolventenverzahnung auf, welche jedoch gegebenenfalls Modifikationen aufweisen kann. Evolventische Verzahnungen weisen dabei eine Geometrie auf, welche sich durch den Hüllschnitt zwischen einem Zylinder und einer Zahnstange ergibt. Die konische Grundform ergibt sich dabei dadurch, dass im Rahmen dieses Hüllschnittes die Drehachse des Zylinders gegen die Hauptebene der Zahnstange verkippt ist.

Gemäß einer bevorzugten Ausführungsform ist der Konuswinkel des Werkzeuges größer als 1', weiterhin bevorzugt größer als 30', und weiter bevorzugt größer als 1°. Bevorzugt ist der Konuswinkel des Werkzeuges jedoch kleiner als 50°, weiter bevorzugt kleiner als 20°, und weiterhin bevorzugt kleiner als 10°.

Das Diagonalverhältnis kann dabei in einer ersten Variante über die gesamte Zahnbreite konstant sein, so dass eine Variation bzw. Bestimmung lediglich im Hinblick auf die Größe des Diagonalverhältnisses erfolgt.

Das Diagonalverhältnis kann in einer zweiten Variante über die Zahnbreite unterschiedliche Werte aufweisen.

Insbesondere können dabei zwei oder mehr Bereiche mit unterschiedlichem Diagonalverhältnis vorgesehen sein. Innerhalb der Bereiche kann das Diagonalverhältnis dabei wieder konstant sein. In diesem Fall kann eine Variation bzw. Bestimmung im Hinblick auf die Zahl der Bereiche und/oder Lage der Bereiche und/oder die jeweilige Größe des Diagonalverhältnisses erfolgen.

Weiterhin kann das Diagonalverhältnis auch durch eine ggf. im Rahmen gewisser Randbedingungen frei wählbare, bevorzugt zumindest abschnittsweise stetige Funktion der Position in Zahnbreitenrichtung gegeben sein. Hierdurch ergeben sich bei der Variation noch mehr Möglichkeiten.

Die vorliegende Erfindung wird nun anhand von Ausführungsbeispielen und Figuren näher erläutert.

**Kurzbeschreibung der Figuren**

Die Figuren zeigen beispielhaft nur $w$-$z$-Diagramme zylindrischer Verzahnungen. Die $w$-$z$-Diagramme konischer Verzahnungen sind im Allgemeinen nicht rechteckig, meist trapezförmig, da sich der Auswertebereich des Wälzwegs über die Verzahnbreite ändert.

Figur 1: Figur 1 zeigt ein $w$-$z$-Diagramm einer Modifikation, bestehend aus gemäß Gleichung (1) modifizierten Bereichen 41 und 41', sowie aus nicht modifizierten Bereichen 42, 42' und 42". Die Geraden 40 und 40' verlaufen in der durch $\rho_{F2}$ gegebenen Richtung. Die Geraden 43 und 43' entsprechen dem Verlauf des Kontaktpunkts.

Figur 2: Figur 2 zeigt ein $w$-$z$-Diagramm einer Modifikation, bestehend aus gemäß Gleichung (1) modifizierten Bereichen 51 und 51', sowie aus nicht modifizierten Bereichen 52, 52' und 52". Die Bereiche 51 und 51' haben Modifikationen mit unterschiedlichen Richtungen $\rho_{F2}$. Die Geraden 50 und 50' verlaufen in der durch die jeweiligen $\rho_{F2}$ gegebene Richtung. Die Geraden 53 und 53' entsprechen dem Verlauf des Kontaktpunkts.

Figur 3: Figur 3a zeigt am Beispiel einer rechten Flanke eines rechtsschrägen zylindrischen Werkstücks vier Kurven 60-63, welche jeweils den Verlauf der Punkte im $w$-$z$-Diagramm auf dem Werkstück beschreiben, welche auf eine Gerade auf der Schnecke abgebildet werden. Die vier Kurven entsprechen vier verschiedenen Werten $X_{F1}$ und somit vier verschiedenen Geraden auf der Schnecke. Die Kurven sind gegeneinander entlang der parallelen Geraden 65 bzw. 66 verschoben.

 Figur 3b zeigt, passend zu Figur 3a, die Funktion $F_{Z_{V1}}(z_{V2})$, welche die Abhängigkeit von $z_{V1}$ von $z_{V2}$ beschreibt.

Figur 4: Figur 4 zeigt ein $w$-$z$-Diagramm einer rechten Flanke eines linkschrägen zylindrischen Werkstücks, auf welches eine Modifikation mittels variablen Diagonalverhältnisses aufgebracht wurde. Linie 70 markiert den Verlauf der Punkte, welche auf die durch $X_{F1} = 0$ definierte Gerade auf der Schnecke abgebildet werden. Line 71 markiert den Verlauf der Punkte, welche auf die durch ein $X_{F1} > 0$ definierten Gerade auf der Schnecke abgebildet werden. Entlang der jeweiligen Verläufe ist der Wert der Modifikation konstant.

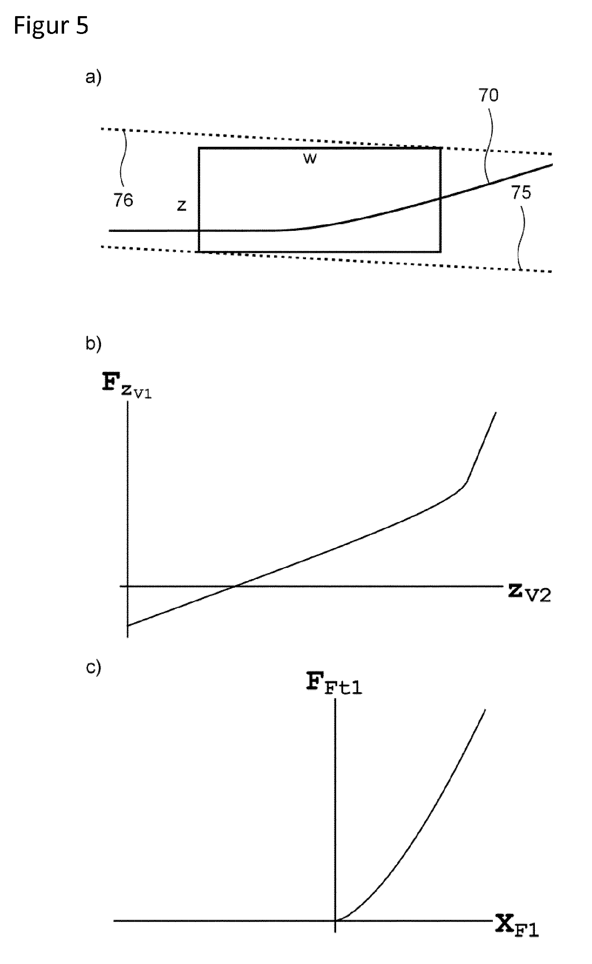

Figur 5: Figur 5a zeigt, in einem Schema wie in Figur 3, den Verlauf 70 der Punkte auf dem Werkstück, welche in dem Beispiel aus Figur 4 auf die durch $X_{F1} = 0$ definierte Gerade auf der Schnecke abgebildet werden. Die Geraden 75 bzw. 76 definieren die Richtung, entlang der die Verläufe für verschiedene $X_{F1}$ gegeneinander verschoben werden.

 Figur 5b zeigt die im Beispiel in Figur 4 verwendete Funktion $F_{Z_{V1}}(z_{V2})$, welche die Abhängigkeit von $z_{V1}$ von $z_{V2}$ beschreibt.

 Figur 5c zeigt die im Beispiel in Figur 4 verwendete Funktion $F_{Ft1}(X_{F1})$, welche die Modifikation auf der Schnecke gemäß Gleichung (1) definiert.

Figur 6: Figur 6 zeigt ein $w$-$z$-Diagramm einer natürlichen verschränkten Flankenlinienballigkeit. Linie 10 markiert einen Kontaktpfad. Dieser entspricht hier einer Linie mit konstantem Wert der Modifikation.

Figur 7: Figur 7 zeigt ein $w$-$z$-Diagramm einer reinen Flankenlinienballigkeit. Linie 11 markiert einen Kontaktpfad.

Line 12 markiert eine Gerade mit konstantem Wert der Modifikation.

Figur 8: Figur 8 zeigt ein *w-z*-Diagramm einer in einer gezielten Richtung verlaufenden Balligkeit. Linie 13 markiert einen Kontaktpfad. Line 14 markiert eine Gerade mit konstantem Wert der Modifikation.

Figur 9: Figur 9 zeigt eine lineare Endrücknahme 16 ohne Übergangsbereich, wie diese durch korrigierte Schleifkinematik nach dem Stand der Technik gefertigt wird. Line 15 markiert einen Kontaktpfad, welcher gleichzeitig einer Geraden mit konstantem Wert der Modifikation entspricht.

Figur 10: Figur 10 zeigt eine lineare Endrücknahme 19 ohne Übergangsbereich, wie diese mit dem hier beschriebenen Verfahren gefertigt werden kann. Line 17 markiert einen Kontaktpfad. Line 18 markiert eine Gerade mit konstantem Wert der Modifikation.

Figur 11: Figur 11 zeigt eine lineare dreieckförmige Endrücknahme 22 ohne Übergangsbereich, wie diese mit dem hier beschriebenen Verfahren gefertigt werden kann. Line 20 markiert einen Kontaktpfad. Line 21 markiert eine Gerade mit konstantem Wert der Modifikation.

Figur 12: Figur 12 zeigt eine Darstellung zweier Verzahnungen in einem Schraubwälzgetriebe inklusive der gemeinsamen Zahnstange und den Eingriffsebenen beider Verzahnungen. Zur besseren Darstellung entspricht die relative Lage der beiden Verzahnungen nicht der im Schraubwälzgetriebe. Diese Figur zeigt auch die relative Lage einer zylindrischen Verzahnung zur generierenden Zahnstange. (Aus Niemann, G; Winter, H: Maschinenelemente Band 3 2. Auflage, Springer Verlag, Berlin, 1983)

Figur 13: Figur 13 zeigt eine Darstellung einer konischen Verzahnung mit einer sie generierenden Zahnstange. Die Zahnstange ist um den Schrägungswinkel $\beta_k = \beta_w$ geschwenkt und um den Konuswinkel $\theta = \vartheta$ gekippt. (Aus Zierau, S: Die geometrische Auslegung konischer Zahnräder und Paarungen mit parallelen Achsen, Bericht Nr. 32, Institut für Konstruktionslehre, Technische Universität Braunschweig)

Figur 14: Figur 14 zeigt den Eingriff einer rechten Flanke mit einer generierenden asymmetrischen Zahnstange im Stirnschnitt. Der Profilwinkel im Stirnschnitt $\alpha_{twr}$ definiert die Neigung der Eingriffsebenen $P_r$. Die Verzahnung ist um den Drehwinkel $\varphi$ gedreht.

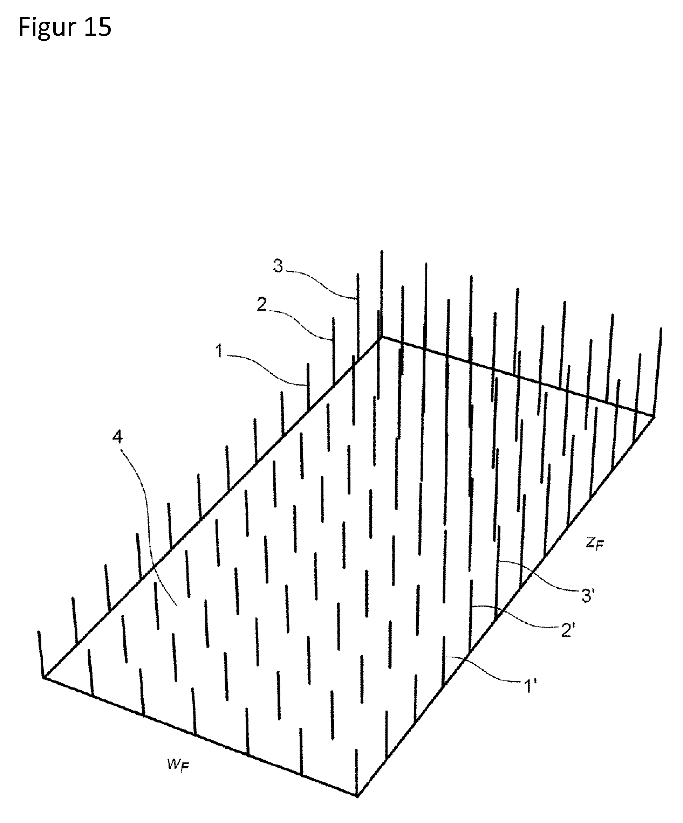

Figur 15: Figur 15 zeigt schematisch einen Abschnitt der Flanke eines Werkstückzahns mit Vektoren in Normalenrichtung für ein nicht über die ganze Breite geschliffenes Werkstück. Die Anzahl der Vektoren wurde im Vergleich zu einer Simulationsrechnung hier deutlich reduziert. Die hier schematisch gezeigte Ebene 4 entspricht der im Allgemeinen gekrümmten Flanke des nicht modifizierten Werkstücks, auf die die Vektoren gestellt werden. Die Vektoren 1 und 1' wurden bereits vom Kontaktpfad überstrichen und sind somit vollständig gekürzt. Die Vektoren 2 und 2' wurden bereits mindestens einmal gekürzt, jedoch noch nicht vom Kontaktpfad überstrichen. Die Vektoren 3 und 3' wurden noch nicht gekürzt und haben somit noch die Länge dem gewählten Aufmaß entsprechend.

Figur 16: Figur 16 zeigt schematisch eine Verzahnmaschine mit den hier als Beispiele aufgeführten Bewegungsapparaten.

## Detaillierte Darstellung der Erfindung

Die Erfindung beschreibt ein Verfahren zur Erzeugung einer bestimmten Klasse an topologischen Oberflächenmodifikationen auf Zahnflanken sowohl zylindrischer als auch konischer (Beveloids) Evolventenverzahnungen. Die Verzahnungen können sowohl symmetrisch als auch asymmetrisch sein, d.h. die Profilwinkel der linken und rechten Flanken können, müssen aber nicht unterschiedlich sein. Das Verfahren kann unter anderem bei folgenden Fertigungsverfahren angewandt werden:

- Wälzfräsen
- Schälwälzfräsen
- Schaben
- Wälzschleifen
- Honen

Wird das Verfahren beim Wälzschleifen angewandt, können sowohl abrichtbare als auch nicht abrichtbare Werkzeuge eingesetzt werden. Das Abrichten kann mit einer Profilrolle ein- oder zweiflankig erfolgen, aber ebenso ein- oder zweiflankig im Zeilenabrichten.

Der Bearbeitungsprozess erfolgt mit einem über die Werkzeuglänge modifizierten Werkzeug, welches während des Prozesses in axialer Richtung verschoben wird (Diagonalwälzverfahren).

Größen, die für linke und rechte Flanken unterschiedlich sind bzw. sein können, werden mit dem Index F versehen. F kann *l* (links) oder r (rechts) sein. Gleichungen, in den der Index F vorkommt, gelten immer für linke und rechte Flanken. Die hier betrachteten Evolventenverzahnungen werden abhängig von den Grundkreisradien ($r_{br}$, $r_{bl}$) und den Grundschrägungswinkeln ($\beta_{br}$, $\beta_{bl}$) in folgende vier Typen unterteilt.

1. Zylindrisch symmetrisch: $r_b := r_{br} = r_{bl}$ und $\beta_b := \beta_{br} = \beta_{bl}$

2. Zylindrisch asymmetrisch: $r_{br} \neq r_{bl}$ und $\dfrac{\tan \beta_{br}}{r_{br}} = \dfrac{\tan \beta_{bl}}{r_{bl}}$

3. Konisch symmetrisch: $\beta_{br} \neq \beta_{bl}$ und $r_{br} \cos \beta_{br} = r_{bl} \cos \beta_{bl}$

4. Konisch asymmetrisch: $\beta_{br} \neq \beta_{bl}$ und $r_{br} \cos \beta_{br} \neq r_{bl} \cos \beta_{bl}$ und $\dfrac{\tan \beta_{br}}{r_{br}} \neq \dfrac{\tan \beta_{bl}}{r_{bl}}$

Im Folgenden wird die Klasse der topologischen Oberflächenmodifikationen definiert, welche mit dem hier zunächst beschriebenen Verfahren erzeugt werden können. Zunächst wird dazu die übliche Beschreibung topologischer Oberflächenmodifikationen betrachtet. Diese werden beschrieben über eine Funktion $f_{Ft}(w_F, z_F)$, wobei $w_F$ der Wälzweg und $z_F$ die Position in Breitenlinienrichtung ist. Eine topologische Oberflächenmodifikation gehört zur hier betrachten Klasse an Oberflächenmodifikationen, wenn eine Funktion $F_{Ft}$ existiert, mit

$$f_{Ft}(w_F, z_F) = F_{Ft}(w_F \tan \rho_F + z_F) \,. \tag{1}$$

Anschaulich gesprochen bedeutet dies, dass die Oberflächenmodifikation für alle $w_F$ und $z_F$ auf der Zahnflanke mit

$$w_F \tan \rho_F + z_F = X_F \,, \tag{2}$$

wobei $X_F$ eine beliebige reelle Zahl ist, denselben Wert hat. Jedes $X_F$ definiert so eindeutig eine Gerade auf der Flanke in den Koordinaten $w_F$ und $z_F$. Für den Spezialfall $\rho_F = 0$, ist die Oberflächenmodifikation eine reine Flankenlinienmodifikation, d.h. die Oberflächenmodifikation ist in jedem gegebenen Stirnschnitt über das gesamte Profil konstant. Die folgende Aufzählung nennt bekannte Beispiele der hier betrachteten Oberflächenmodifikationen, von denen einige in FVA Nr. 609 detailliert beschrieben sind:

- Flankenlinienendrücknahme
- Flankenlinienballigkeit
- Dreieckförmige Endrücknahme (Kopf, Fuß oder beidseitig)
- Freie Flankenlinienform

Bisher ist kein Verfahren bekannt, mit dem mit einem der hier betrachteten Fertigungsverfahren die hier betrachteten Oberflächenmodifikation abweichnungsfrei hergestellt werden können, mit Ausnahme reiner Flankenlinienmodifikation bei geradverzahnten zylindrischen Rädern. Mit abweichnungsfrei herstellbaren Oberflächenmodifikationen sind hier Oberflächenmodifikationen gemeint, die sich, abgesehen von Vorschubmarkierungen und ggf. Hüllschnitten theoretisch ohne Abweichung von der Sollmodifikation herstellen lassen.

Eine bisher gebräuchliche Methode, reine Flankenlinienmodifikation zu erzeugen, besteht darin, den Achsabstand zwischen Werkzeug und Werkstück, während das Werkstück axial verschoben wird, zu verändern. Diese Methode liefert jedoch nur bei geradverzahnten zylindrischen Rädern die gewünschte Flankenlinienmodifikation, da nur bei diesen der Verlauf des Kontaktpunkts, im Folgenden auch als Kontaktpfad bezeichnet, zwischen Werkzeug und Werkstück auf beiden Flanken in einer Stirnschnittebenen verläuft und sich so, die durch die Achsabstandsänderung verursachte Oberflächenmodifikation in nur einer Stirnschnittebene auswirkt. Bei allen andern Verzahnungen entsteht auf mindestens einer Flanke eine Verzerrung der Modifikation, auf welche im weiteren Verlauf der Beschreibung dieser Erfindung noch detailliert eingegangen wird.

Für den Spezialfall der Flankenlinienballigkeit, ist diese als Verschränkung bekannte ungewollte Verzerrung schon lange bekannt und es existieren Methoden, diese in gewissem Maße zu kompensieren.

In DE 3704607 (Sulzer) wird für das Wälzschleifen vorgeschlagen, das Diagonalwälzschleifen in Verbindung mit einer Schnecke anzuwenden, welche einen über die Schneckenbreite veränderten Eingriffswinkel aufweist, wobei die Änderung des Eingriffswinkels so gewählt wird, dass die Verschränkung kompensiert wird.

In EP1995010 (Faulstich) wird ebenfalls für das Wälzschleifen vorgeschlagen, das Diagonalwälzschleifen mit einem in weiten Grenzen frei wählbaren Diagonalverhältnis in Verbindung mit einer darauf abgestimmten (hohl-)balligen Schnecke anzuwenden.

Bei diesen beiden Methoden werden nur die Profilwinkelfehler $f_{H\alpha}$ in einer oberen und einer unteren Stirnschnittebene betrachtet und aus diesen die Verschränkung ermittelt bzw. auf diese Weise die Verschänkung so eingestellt, dass sie der Sollvorgabe entspricht. Diese, auf nur zwei Stirnschnittebenen beschränkte Betrachtung, führt jedoch zu Formabweichungen auf der Flanke, welche bei einer typischen Verschränkungsmessung nicht erfasst werden, jedoch bei topologischen Messungen sichtbar werden. Die Methode nach Sulzer hat zudem den Nachteil, dass sie Profilballigkeiten verursacht. Diese können zwar durch einen entsprechenden Vorhalt im Abrichter kompensiert werden, dieser Vorhalt ist dann jedoch nur für eine bestimmte Flankenlinienballigkeit passend. Darüber hinaus berücksichtigen beide Methoden weder das Bearbeiten asymmetrischer und/oder konischer Verzahnungen, noch das Erzeugen asymmetrischer Balligkeiten beim zweiflankigen Bearbeiten.

Im Folgenden wird näher auf die der Erfindung zu Grunde liegende Idee eingegangen. Diese wird am Beispiel des Wälzschleifens beschrieben, sie ist jedoch auf Grund der Ähnlichkeit der hier betrachteten Fertigungsverfahren für all diese gleichermaßen anwendbar. Für das Wälzschleifen evolventischer Verzahnungen wird eine Schnecke verwendet, welche ebenfalls eine Evolventenverzahnung, in der Regel mit großem Schrägungswinkel ist. Während des Bearbeitungsprozesses gibt es theoretischen Punktkontakt zwischen der Schnecke und der Endgeometrie der zu fertigenden Verzahnung. Die Oberflächen der Zahnflanken, sowohl des Werkstücks als auch des Werkzeugs, werden typischerweise über den Wälzweg ($w_F$) und die Position in Breitenlinienrichtung ($z_F$) parametrisiert.

$$E_F(w_F, z_F)$$
$$= \begin{pmatrix} r_{bF} \cdot \sin\left(s_F \cdot \left(\frac{w}{r_{bF}} + \eta_{bF}\right) - \frac{z \cdot \tan(\beta_{bF})}{r_{bF}}\right) - s_F \cdot w \cdot \cos\left(s_F \cdot \left(\frac{w}{r_{bF}} + \eta_{bF}\right) - \frac{z \cdot \tan(\beta_{bF})}{r_{bF}}\right) \\ r_{bF} \cdot \cos\left(s_F \cdot \left(\frac{w}{r_{bF}} + \eta_{bF}\right) - \frac{z \cdot \tan(\beta_{bF})}{r_{bF}}\right) + s_F \cdot w \cdot \sin\left(s_F \cdot \left(\frac{w}{r_{bF}} + \eta_{bF}\right) - \frac{z \cdot \tan(\beta_{bF})}{r_{bF}}\right) \\ z \end{pmatrix}$$

$$(3)$$

$\eta_{bF}$: siehe auch Anmeldung DE 10 2012 015 846 A1

$s_F$ dient dazu, Gleichungen für linke und rechte Flanken in einer kompakten Form zu schreiben und ist definiert durch:

$$s_F := \begin{cases} +1, \text{ für linke Flanken} \\ -1, \text{für rechte Flanken} \end{cases}$$

Diese Parametrisierung erlaubt es einfache Beziehungen für den Verlauf des Kontaktpunkts auf Werkzeug und Werkstück zu berechnen. Dieser Verlauf wird sowohl auf dem Werkstück als auch auf dem Werkzeug durch den Axialvorschub des Werkstücks und der Shiftbewegung des Werkzeugs kontinuierlich verschoben. Die Kenntnis über diese Verläufe ermöglicht es, einem Punkt auf dem Werkzeug eindeutig einen Punkt auf dem Werkstück zuzuordnen und umgekehrt. Mit dieser Zuordnung lassen sich das Verhältnis zwischen Axialvorschub des Werkstücks und Shiftbewegung des Werkzeugs, im Folgenden Diagonalverhältnis genannt, und die Oberflächenmodifikation auf dem Werkzeug so abstimmen, dass auf dem Werkstück die gewünschte Modifikation erzeugt wird.

Um die Zusammenhänge mathematisch zu formulieren werden folgende Definitionen gemacht:

Für Transformationen werden folgende Bezeichnungen verwendet:

- $R_x(\varphi)$ Rotation um den Winkel $\varphi$ um die x-Achse. Analog für $y$ und $z$
- $T_x(v)$ Translation um die Strecke $v$ in x-Richtung. Analog für $y$ und $z$
- $H(A_1,..., A_N)$ allgemeine Transformation beschreibbar durch eine homogene Matrix mit insgesamt $N$ Koordinaten $A_1$ bis $A_N$.

Der Begriff "Koordinaten" wird hier für generalisierte, nicht notwendigerweise unabhängige Koordinaten verwendet.

Die Rotationsachse einer Verzahnung fällt in ihrem Ruhesystem immer mit der z-Achse zusammen. Die Verzahnungsmitte liegt bei z = 0.

Weiterhin wichtig für die Formulierung der Zusammenhänge ist es, die kinematischen Ketten, welche die Relativstellungen zwischen Werkstück und Werkzeug beschreiben, zu definieren. Diese hängt davon ab, ob Werkzeug bzw. Werkstück zylindrisch oder konisch ausgeführt sind. Betrachtet werden hier alle vier möglichen Kombinationen. Im Folgenden werden Größen, welche sich auf das Werkzeug beziehen mit Index 1 versehen und solche, die sich auf das Werkstück beziehen mit Index 2.

### Kinematische Kette für zylindrisches Werkzeug und Werkstück

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_z(\varphi_2) \qquad (4)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Axialvorschub des Werkstücks.
- d: Achsabstand (Werkzeug/Werkstück)
- y: Achskreuzwinkel (Werkzeug/Werkstück)

### Kinematische Kette für konisches Werkzeug und zylindrisches Werkstück

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_z(\varphi_2) \qquad (5)$$

- $\varphi_1$: Drehwinkel Werkzeug.
- $\varphi_2$: Drehwinkel Werkstück.
- $z_{V1}$: Vorschub des Werkzeug (auch Shiftposition genannt).
- $z_{V2}$: Axialvorschub des Werkstücks.
- d: Maß für Achsabstand (Werkzeug/Werkstück)
- y: Achskreuzwinkel (Werkzeug/Werkstück)
- $\vartheta_1$: Konuswinkel Werkzeug
- $r_{w1}$: Wälzkreisradius des Werkzeugs

### Kinematische Kette für zylindrisches Werkzeug und konisches Werkstück

Die relative Lage zwischen Werkzeug und Werkstück wird durch die folgende kinematische Kette $K_R$ beschrieben:

$$K_R = R_z(-\varphi_1) \cdot T_z(-z_{V1}) \cdot T_y(d) \cdot R_y(\gamma) \cdot T_z(z_{V2}) \cdot R_x(-\vartheta_2) \cdot T_y(-r_{w2}) \cdot R_z(\varphi_2) \qquad (6)$$

- $\varphi_1$: Drehwinkel Werkzeug.
- $\varphi_2$: Drehwinkel Werkstück.
- $z_{V1}$: Axialvorschub des Werkzeugs (auch Shiftposition genannt).
- $z_{V2}$: Vorschub des Werkstücks.
- d: Maß für Achsabstand (Werkzeug/Werkstück)
- y: Achskreuzwinkel (Werkzeug/Werkstück)
- $\vartheta_2$: Konuswinkel Werkstück
- $r_{w2}$: Wälzkreisradius des Werkstücks

### Kinematische Kette für konisches Werkzeug und konisches Werkstück

Die relative Lage zwischen Werkzeug und Werkstück wird durch die folgende kinematische Kette $K_R$ beschrieben:

$$K_R = R_z(-\varphi_1) \cdot T_y(r_{w1}) \cdot R_x(\vartheta_1) \cdot T_z(-z_{V1}) \cdot T_y(d) \cdot R_y(\gamma) \cdot T_z(z_{V2}) \cdot R_x(-\vartheta_2) \cdot$$
$$T_y(-r_{w2}) \cdot R_z(\varphi_2) \tag{7}$$

- $\varphi_1$: Drehwinkel Werkzeug.
- $\varphi_2$: Drehwinkel Werkstück.
- $z_{V1}$: Vorschub des Werkzeugs (auch Shiftposition genannt).
- $z_{V2}$: Vorschub des Werkstücks.
- $d$: Maß für Achsabstand (Werkzeug/Werkstück)
- $\gamma$: Achskreuzwinkel (Werkzeug/Werkstück)
- $\vartheta_1$: Konuswinkel Werkzeug
- $\vartheta_2$: Konuswinkel Werkstück
- $r_{w1}$: Wälzkreisradius des Werkzeugs
- $r_{w2}$: Wälzkreisradius des Werkstücks

Diese kinematischen Ketten dienen zunächst erst einmal nur der mathematischen Beschreibung der hier beschriebenen Erfindung. Sie müssen nicht mit den physikalischen Achsen der Maschine, auf der die Erfindung angewendet wird, übereinstimmen. Verfügt die Maschine über einen Bewegungsapparat, der Relativstellungen zwischen Werkzeug und Werkstück gemäß einer Transformation

$$H(A_1, \dots, A_{N_s}) \text{ mit } N_s \geq 1 \tag{8}$$

ermöglicht, so kann die Erfindung auf dieser Maschine angewendet werden, wenn zu jedem Satz an Koordinaten aus den gerade beschriebenen kinematischen Ketten, welcher in dieser Erfindung berechnet wird, Koordinaten $A_1, \dots, A_{N_s}$ existieren, mit

$$H(A_1, \dots, A_{N_s}) = K_R \tag{9}$$

Die Berechnung der Koordinaten $A_1, \dots, A_{N_s}$ kann mittels einer Koordinatentransformation durchgeführt werden.
Typische Bewegungsapparate, die alle geforderten Relativstellungen ermöglichen sind beispielsweise durch folgende kinematischen Ketten beschrieben:

$$H_{Bsp1} = R_z(\phi_{B1}) \cdot T_z(-v_{V1}) \cdot R_x(90° - \phi_{A1}) \cdot T_z(-v_{Z1}) \cdot T_x(-v_{X1}) \cdot R_z(\phi_{C2}) \tag{10}$$

$$H_{Bsp2} = R_z(\phi_{B1}) \cdot R_x(90° - \phi_{A1}) \cdot T_z(-v_{Y1}) \cdot T_z(-v_{Z1}) \cdot T_x(-v_{X1}) \cdot R_z(\phi_{C2}) \tag{11}$$

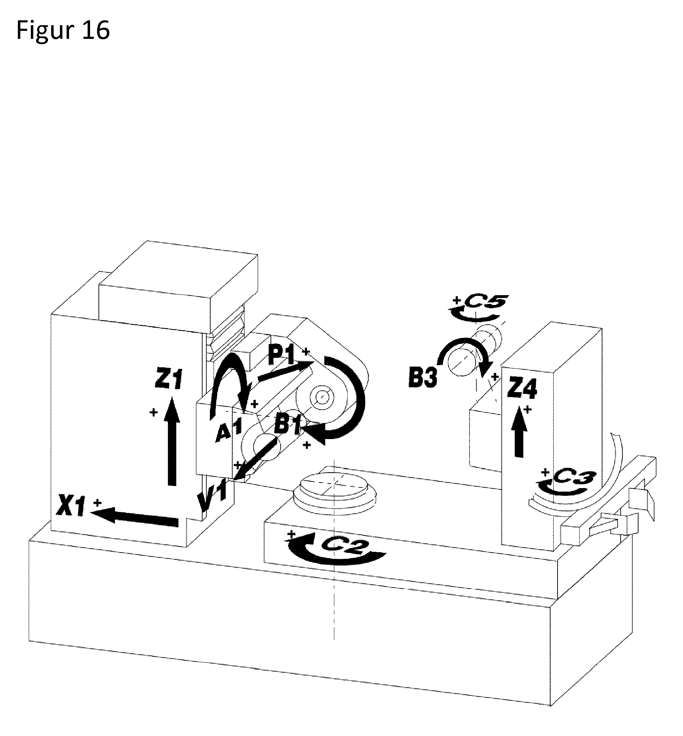

Figur 16 zeigt schematisch eine Verzahnmaschine mit einem durch $H_{Bsp1}$ beschriebenen Bewegungsapparat.
Während des Bearbeitungsprozesses wird die $z_{V2}$-Koordinate verfahren und so der Vorschub des Werkstücks realisiert. Bei zylindrischen Rädern ist dies der Axialvorschub, bei konischen Rädern ist dieser Vorschub nicht axial, sondern um den Konuswinkel $\vartheta_2$ gegenüber der Achse der Verzahnung verkippt.
Wird im Diagonalwälzverfahren bearbeitet, wird zusätzlich die $z_{V1}$-Koordinate verfahren, welche den Vorschub des Werkzeugs realisiert. Bei zylindrischen Werkzeugen ist dies der Axiavorschub, bei konischen Rädern ist dieser Vorschub nicht axial, sondern um den Konuswinkel $\vartheta_1$ gegenüber der Achse des Werkzeugs verkippt.
Im weiteren Verlauf wird jedoch auch für zylindrische Werkzeuge bzw. Werkstücke für $z_{V1}$ bzw. $z_{V2}$ der Begriff Vorschub verwendet.
Wird mit einem konstanten Diagonalverhältnis geschliffen, so ist $z_{V1}$ eine Funktion von $z_{V2}$ und es gilt folgender Zusammenhang:

$$z_{V1}(z_{V2}) = K_{Z_{V1}} \cdot z_{V2} + z_{V01} \tag{12}$$

$K_{Z_{V1}}$ ist hierbei das Diagonalverhältnis und $z_{V01}$ ein fixer Offset, der es ermöglicht, die hier beschriebenen Modifikationen auf unterschiedlichen Stellen auf dem Werkzeug zu platzieren bzw. den Bereich auf der Schnecke auszuwählen, der genutzt werden soll. Ist $K_{ZV1} \neq 0$ wird vom Diagonalwälzverfahren gesprochen.

Wie sich die Drehzahl des Werkstücks und/oder des Werkzeugs und/oder der Vorschub des Werkzeugs und/oder des Werkstücks während der Bearbeitung zeitlich und/oder relativ zu einander verhalten, spielt bei diesem Verfahren keine Rolle, da allein die Kopplung zwischen $z_{V1}$ und $z_{V2}$ betrachtet wird. Die Drehzahlen und Vorschübe können während der Bearbeitung verändert werden, solange die geforderten Kopplungen eingehalten werden.

Die vier möglichen Kombinationen aus zylindrischen bzw. konischen Werkzeugen und Werkstücken werden separat betrachtet. Ausgangspunkt ist jeweils die mathematische Beschreibung des Verlaufs des Kontaktpunkts auf Werkzeug und Werkstück beim Wälzschleifen als Relation zwischen dem Wälzweg ($w$) und der Position in Breitenlinienrichtung ($z$) in Abhängigkeit der Vorschubpositionen $z_{V1}$ und $z_{V2}$.

Vorbereitend hierfür werden zunächst die hierfür benötigten Modifikationen auf den Schnecken sowie deren Erzeugung mittels Abrichten diskutiert.

Die Werkzeuge, zylindrische und konische Schnecken, symmetrisch oder asymmetrisch, welche hier betrachtet werden, haben ebenfalls eine Modifikation gemäß Gleichung (1). Diese Art der Modifikation ist insbesondere bei abrichtbaren Schleifschnecken sehr vorteilhaft, da sich diese leicht beim Abrichten mit einer Abrichtscheibe auf der Schnecke erzeugen lässt. Beim Abrichten mit einer Abrichtscheibe besteht ein Linienkontakt zwischen Abrichtscheibe und den Flanken der Schnecke. Beschreibt man diese Berührlinie als Relation zwischen $w_{F1}$ und $z_{F1}$ für beide Flanken, so erhält man in sehr guter Näherung eine Gerade, gegeben durch:

$$w_{F1} \tan \rho_{F1} + z_{F1} = X_{F1} \;.$$

$\hspace{5em}$ (13)

$\rho_{F1}$ definiert die Richtung dieser Geraden. Diese kann durch die Gangzahl, den Durchmesser der Schnecke, den Durchmesser der Abrichtscheibe, den Profilwinkel der Schnecke und die Relativstellung der Schnecke zum Abrichter geringfügig beeinflusst werden.

$X_{F1}$ definiert die Lage der Geraden auf der Schnecke. Während die Schnecke entlang ihrer Länge abgerichtet wird, verändert sich $X_{F1}$ entsprechend. Werden während des Abrichtvorgangs Korrekturen der Relativstellung zwischen Schnecke und Abrichtscheibe vorgenommen, so lassen sich Modifikationen auf der Schnecke aufbringen. Diese Korrekturen wirken sich immer entlang der aktuellen Berührlinie aus.

Die relative Lage zwischen Schnecke und Abrichter wird durch die folgende kinematische Kette $K_{BR}$ beschrieben:

$$K_{BR} = R_z(-\varphi_S) \cdot T_z(-z_S) \cdot R_x(-\gamma_B) \cdot T_x(-d) \cdot T_y(y_A) \cdot R_z(\varphi_A)$$

$\hspace{5em}$ (14)

- $\varphi_S$: Drehwinkel Schnecke
- $\varphi_A$: Drehwinkel Abrichter
- $y_A$: $y$-Position des Abrichters
- $z_S$: Axiale Position der Schnecke
- $d$: Achsabstand
- $\gamma_B$: Achskreuzwinkel

Diese kinematische Kette dient zunächst erst einmal nur der mathematischen Beschreibung der hier beschriebenen Erfindung. Sie muss nicht mit den physikalischen Achsen der Maschine, auf der die Erfindung angewendet wird, übereinstimmen. Verfügt die Maschine über einen Bewegungsapparat, der Relativstellungen zwischen Schnecke und Abrichter gemäß einer Transformation

$$H(B_1, ..., B_{N_A}) \text{ mit } N_A \geq 1$$

$\hspace{5em}$ (15)

ermöglicht, so kann die Erfindung auf dieser Maschine angewendet werden, wenn zu jedem Satz an Koordinaten aus der gerade beschriebenen kinematischen Kette, welcher in dieser Erfindung berechnet wird, Koordinaten $B_1, ..., B_{N_A}$ existieren, mit

$$H(B_1, ..., B_{N_A}) = K_{BR}$$

$\hspace{5em}$ (16)

Die Berechnung der Koordinaten $B_1,..., B_{N_A}$ kann mittels einer Koordinatentransformation durchgeführt werden.

Typische Bewegungsapparate, die alle geforderten Relativstellungen ermöglichen sind beispielsweise durch folgende kinematischen Ketten beschrieben:

$$H_{BBsp1} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_y(\varphi_{C5}) \cdot R_z(\varphi_{B3}) \qquad (17)$$

$$H_{BBsp2} = R_z(-\varphi_{B1}) \cdot T_z(-v_{V1}) \cdot R_x(-\varphi_{A1}) \cdot T_x(-v_{X1}) \cdot T_y(v_{Z1}) \cdot R_z(\varphi_{B3}) \qquad (18)$$

Figur 16 zeigt schematisch eine Verzahnmaschine mit einem durch $H_{BBsp1}$ bzw. $H_{BBsp2}$ beschriebenen Bewegungsapparat.

- Achsabstand und/oder
- Axiale Position der Schnecke und/oder
- $y$-Position des Abrichters und/oder
- Drehwinkel der Schnecke und/oder
- Achskreuzwinkel zwischen der Schnecken- und der Abrichterachse

können so korrigiert werden, dass eine konstante Modifikation entlang der aktuellen Berührlinie erzeugt wird.

Wird eine Schnecke nicht modifiziert abgerichtet, so werden nur die axiale Position der Schnecke und über die Steigungshöhe der Schnecke gekoppelt der Drehwinkel der Schnecke während des Abrichtvorgangs verändert. Dadurch wandert die Berührlinie gemäß einer Schraubenline entlang der Schneckenlänge und überstreicht einen gewissen Bereich der Flanke und richtet diesen ab. $X_{F1}$ ist somit eine Funktion der axialen Position der Schnecke:

$$X_{F1} = X_{F1}(z_S) \qquad (19)$$

Dieser Zusammenhang gilt sowohl für das einflankige als auch für das zweiflankige Abrichten.

Wird zweiflankig abgerichtet, so können die Korrekturen der Relativstellung so gewählt werden, dass auf beiden Flanken der Schnecke unabhängig von einander in gewissen Grenzen beliebige konstante Modifikationen $f_{tl1}$ und $f_{tr1}$ entlang der aktuellen Berührlinien links und rechts aufgebracht werden. Diese, in gewissen Grenzen freie Wahl der Modifikationen auf linker und rechter Flanke rührt daher, dass die oben beschriebenen Korrekturen der Relativstellung sich nicht alle gleichsam auf linke und rechte Flanke auswirken. Beispielsweise führt eine Änderung des Achsabstands zu einer Modifikation auf linker und rechter Flanke mit gleichem Vorzeichen, im Fall einer symmetrischen zylindrischen Schnecke auch mit gleichem Betrag. Eine Änderung des Drehwinkels der Schnecke hingegen führt zu einer Modifikation auf linker und rechter Flanke mit unterschiedlichen Vorzeichen, im Fall einer symmetrischen zylindrischen Schnecke mit gleichem Betrag. Somit können beispielsweise Achsabstand und Drehwinkel der Schnecke so eingestellt werden, dass die gewünschten Modifikationen $f_{tl1}$ und $f_{tr1}$ entlang der aktuellen Berührline erreicht werden. Allgemein lässt sich dies wie folgt beschreiben: Verfügt die Maschine über einen, während des Abrichtvorgangs nutzbaren Bewegungsapparats mit den Koordinaten $B_1,..., B_{N_A}$, welcher die Relativstellung zwischen Schnecke und Abrichtscheibe verändern kann, sodass solche Korrekturen der Relativstellung möglich sind, welche eine freie Wahl der Modifikationen auf linker und rechter Flanke ermöglichen, so sind Korrekturen $\Delta B_1,..., \Delta B_{N_A}$ dieser Koordinaten im Vergleich zum Abrichten einer unmodifizierten Schnecke abhängig von $f_{tl1}$ und $f_{tr1}$:

$$\Delta B_i = \Delta B_i(f_{tl1}, f_{tr1}) \text{ mit } 1 \leq i \leq N_A . \qquad (20)$$

Wird eine Schnecke unmodifiziert abgerichtet, so wird nur die axiale Position der Schnecke $z_S$, wie oben beschreiben verändert. Diese Position wird durch die Koordinaten $B_1,..., B_{N_A}$ eingestellt, welche, für den Fall, somit eine Funktion von $z_S$ sind:

$$B_i = B_i(z_S) \text{ mit } 1 \leq i \leq N_A . \qquad (21)$$

Aus den letzten beiden Beziehungen folgt für die Koordinaten $B_1,..., B_{N_A}$ beim Abrichten einer Schnecke mit den hier beschriebenen Modifikationen:

$$B_i = B_i(z_S) + \Delta B_i(f_{tl1}, f_{tr1}) \text{ mit } 1 \leq i \leq N_A .\qquad(22)$$

Die Korrekturen der Koordinaten $\Delta B_1,..., \Delta B_{N_A}$ verursachen im Allgemeinen neben der Modifikation auf der Schnecke auch eine leichte Verschiebung der Lage der aktuellen Berührline gegenüber dem Abrichten einer unmodifizierten Schnecke. Gleichung (19) muss für das Abrichten modifizierter Schnecken somit um eine Abhängigkeit von $\Delta B_1,..., \Delta B_{N_A}$ erweitert werden:

$$X_{F1} = X_{F1}(z_S, \Delta B_1, ..., \Delta B_{N_A})\qquad(23)$$

Für das hier beschriebene Verfahren, werden Schnecken benötig, die eine Modifikation wie in Gleichung (1) beschrieben haben, wobei die Richtung $\rho_F$ durch die Richtung der Berührline beim Abrichten $\rho_{F1}$ vorgegeben ist. Die Funktion $F_{Ft1}$ ist jedoch in gewissen Grenzen eine frei vorgebbare stetige Funktion. Die oben definierten Modifikationen $f_{tl1}$ und $f_{tr1}$ beschreiben eine konstante Modifikation entlang der durch $\rho_{F1}$ definierten Richtung bei einer bestimmten Lage der Berührline $X_{F1}$ und entsprechen somit genau den Funktionen $F_{tl1}(X_{l1})$ und $F_{tr1}(X_{r1})$ für linke und rechte Flanke.
Sind die Modifikationen $F_{tl1}(X_{l1})$ und $F_{tr1}(X_{r1})$ bekannt, so lassen sich diese, zusammen mit Gleichung (20) in Gleichung (23) einsetzten:

$$X_{F1} = X_{F1}(z_S, \Delta B_1(F_{tl1}(X_{l1}), F_{tr1}(X_{r1})), ..., \Delta B_{N_A}(F_{tl1}(X_{l1}), F_{tr1}(X_{r1})))\qquad(24)$$

Mit diesem Gleichungssystem können zu gegebener axialer Position der Schnecke z die Lagen der Berührline $X_{F1}$, im allgemeinen numerisch, berechnet werden. Mit Gleichung (20) lassen sich damit dann die benötigten Korrekturen der Koordinaten $\Delta B_1,..., \Delta B_{N_A}$ bestimmen. Diese Berechnung wird für alle $z_S$ durchgeführt, die nötig sind, um mit den Berührlinen auf linker und rechter Flanke den abzurichtenden Teil der Schnecke zu überstreichen.
Das hier für das zweiflankige Abrichten vorgestellte Verfahren lässt sich direkt auf das einflankige Abrichten übertragen. In dem Fall entkoppeln die Gleichungen für linke und rechte Flanke vollständig und die Berechnung kann für jede Flanke separat durchgeführt werden.
Eine Modifikation $f_{nF1}$ an einem Punkt auf der Schnecke, definiert in Normalenrichtung auf der Schneckengangoberfläche führt zu einer Modifikation $f_{nF2} = - f_{nF1}$ auf dem Werkstück, definiert in Normalenrichtung auf der Zahnflankenoberfläche, an dem entsprechenden Punkt auf dem Werkstück. Modifikationen auf Zahnrädern werden typischerweise im Stirnschnitt ($f_{Ft}$) definiert, nicht in Normalenrichtung ($f_{Fn}$). Zwischen diesen beiden Definitionen der Modifikationen kann jedoch leicht umgerechnet werden:

$$f_{Fn} = f_{Ft} \cdot \cos\beta_{bF}\qquad(25)$$

**Zylindrisches Werkzeug und zylindrisches Werkstück**

Im Folgenden wird für den Fall eines zylindrischen Werkzeugs und eines zylindrischen Werkstücks aufgezeigt, wie mit Hilfe einer Schnecke, welche eine Modifikation gemäß Gleichung (1) hat, im Diagonalwälzschleifen eine Modifikation gemäß derselben Gleichung, jedoch mit in gewissen Grenzen frei vorgebbarem Winkel $\rho_{F2}$ erzeugt werden kann. Dazu wird zunächst der Verlauf des Kontaktpunkts (Kontaktpfad) zwischen Werkstück und Schnecke, abhängig von den Axialvorschüben $z_{V1}$ und $z_{V2}$ beschrieben. Dieser Verlauf hängt von den Grundkreisradien und Grundschrägungswinkeln des Werkstücks und der Schnecke sowie vom Achsabstand d und dem Achskreuzwinkel $\gamma$ ab. Die Relative Lage von Werkstück zu Schnecke wird bei dieser Betrachtung durch Gleichung (4) beschrieben. Mathematisch beschrieben werden kann dieser Verlauf als Relation (R6) zwischen Position in Breitenlinienrichtung ($z_F$) und Wälzweg ($w_F$) für Schnecke (Index 1) und Werkstück (Index 2) wie folgt:

$$z_{F1} = C_{Fw1} \cdot w_{F1} - z_{V1} + C_{Fc1}\qquad(26)$$

$$z_{F2} = C_{Fw2} \cdot w_{F2} - z_{V2} + C_{Fc2}\qquad(27)$$

Die hier eingeführten Koeffizienten $C_{Fw1}$, $C_{Fc1}$, $C_{Fw2}$ und $C_{Fc2}$ haben folgende Abhängigkeiten:

$$C_{Fw1} = C_{Fw1}(\beta_{bF1}) \tag{28}$$

$$C_{Fc1} = C_{Fc1}(\beta_{bF1}, \beta_{bF2}, r_{bF1}, d, \gamma) \tag{29}$$

$$C_{Fw2} = C_{Fw2}(\beta_{bF2}) \tag{30}$$

$$C_{Fc2} = C_{Fc2}(\beta_{bF1}, \beta_{bF2}, r_{bF2}, d, \gamma) \tag{31}$$

Diese Relation zeigt auf, dass es einen linearen Zusammenhang zwischen $z_F$, $w_F$ und $z_V$ sowohl für Schnecke aus auch für Werkstück gibt.

Betrachtet man im Herstellprozesses alle Punkte auf dem Werkstück mit einen festen Wälzweg $w_{F2}$, so berühren all diese Punkte auf der Schnecke nur Punkte mit einem daraus resultierenden Wälzweg $w_{F1}$. Die Relation (R7) zwischen den Wälzwegen sich berührender Punkte auf Schnecke und Werkstück ist gegeben durch:

$$\hat{C}_{Fw1} \cdot w_{F1} + \hat{C}_{Fw2} \cdot w_{F2} + \hat{C}_{Fc} = 0 \tag{32}$$

Die hier eingeführten Koeffizienten $\hat{C}_{Fw1}$, $\hat{C}_{Fw2}$ und $\hat{C}_{Fc}$ haben folgende Abhängigkeiten:

$$\hat{C}_{Fw1} = \hat{C}_{Fw1}(\beta_{bF1}) \tag{33}$$

$$\hat{C}_{Fw2} = \hat{C}_{Fw2}(\beta_{bF2}) \tag{34}$$

$$\hat{C}_{Fc} = \hat{C}_{Fc}(\beta_{bF1}, r_{bF1}, \beta_{bF2}, r_{bF2}, d, \gamma) \tag{35}$$

Die gerade vorgestellten Relationen folgen direkt aus einer analytischen Berechnung der Berührpunkte zweier Evolventenverzahnungen, welche gemäß der kinematischen Kette aus Gleichung (4) zueinander orientiert sind.

Die Grundidee der Erfindung liegt nun darin, die obigen Beziehungen, zusammen mit dem konstanten Diagonalverhältnis aus Gleichung (12) zu nutzen, um jedem Punkt auf dem Werkstück einen Punkt auf der Schnecke zuzuordnen. Dabei wird ausgenutzt, dass die Schnecke eine in gewissen Grenzen beliebige Modifikation gemäß Gleichung (1) aufweisen kann und auf dem Werkstück eine Modifikation gemäß derselben Gleichung mit gegebener Funktion $F_{F1}$ und gegebenem Winkel $\rho_{F1}$ erzeugt werden soll. Ziel ist es, die Punkte auf der Schnecke die auf einer durch $X_{F1}$ und $\rho_{F1}$ gegebenen Gerade liegen, auf eine durch $X_{F2}$ und $\rho_{F2}$ gegebene Gerade auf dem Werkstück abzubilden. Dazu werden die Gleichungen (26) und (27) nach $z_{V1}$ bzw. $z_{V2}$ aufgelöst und in Gleichung (12) eingesetzt, anschließend Gleichung (2) für Schnecke und Werkstück genutzt um $z_{F1}$ und $z_{F2}$ zu eliminieren und mit Gleichung (32) $w_{F1}$ ersetzt. Dies führt zu einer Relation der Form:

$$\bar{C}_{Fc} + \bar{C}_{Fw2} \cdot w_{F2} = 0 \ , \tag{36}$$

welche für alle $w_{F2}$ gelten muss. $\overline{C}_{Fw2}$ hat unter anderem ein Abhängigkeit von $K_{Z_{V1}}$. $\overline{C}_{Fc}$ hingegen hat zusätzlich eine Abhängigkeit von $X_{F1}$ und $X_{F2}$. Mit Hilfe eines Koeffizientenvergleichs lassen sich so aus dieser Relation $K_{Z_{V1}}$ sowohl für linke als auch für rechte Flanke berechnen, sowie $X_{F2}$ als Funktion von $X_{F1}$, ebenfalls für linke und rechte Flanke. $K_{Z_{V1}}$, wie in Gleichung (12) definiert, bestimmt das Diagonalverhältnis, mit dem der Bearbeitungsprozess durchgeführt werden muss, damit die Abbildung der Punkte auf der Schnecke auf die Punkte auf dem Werkstück entlang der durch $\rho_{F2}$ definierten Richtung erfolgt.

Für $\rho_{l2} = \rho_{r2}$ führt diese Berechnung bei einer symmetrischen Verzahnung zu gleichen Diagonalverhältnissen $K_{Z_{V1}}$ für linke und rechte Flanke. Somit ist ein zweiflankiges, abweichungsfreies Wälzschleifen möglich.

Ist jedoch $\rho_{l2} \neq \rho_{r2}$ und/oder die Verzahnung asymmetrisch, so führt die Berechnung im Allgemeinen zu unterschiedlichen Diagonalverhältnissen $K_{Z_{V1}}$ für linke und rechte Flanke. Ein zweiflankiges, abweichungsfreies Wälzschleifen ist somit in dem Fall mit einem zylindrischen Werkzeug im Allgemeinen nicht mehr möglich.

Ein einflankiges abweichungsfreies Wälzschleifen ist jedoch möglich, wobei für die Bearbeitung der linken und rechten Flanken unterschiedliche Diagonalverhältnisse $K_{Z_{V1}}$ einzustellen sind. Gibt es ein Diagonalverhältnis $K_{Z_{V1}}$ sodass beim Wälzschleifen mit diesem die erzeugte Modifikation auf linker und rechter Flanke noch innerhalb der jeweiligen Toleranz liegt, so ist auch weiterhin ein zweiflankiges, jedoch nicht mehr abweichungsfreies Wälzschleifen möglich. Das hierfür zu wählende Diagonalverhältnis liegt in der Regel zwischen den für linke und rechte Flanke ermittelten Diagonalverhältnissen. Die Richtung $\rho_{F2}$ der auf dem Werkstück erzeugten Modifikation weicht auf mindestens einer der beiden Flanken von der Sollvorgabe ab. Ist diese Sollvorgabe jedoch toleriert, so ist es in bestimmten Fällen möglich, das Diagonalverhältnis so zu wählen, dass beide Richtung $\rho_{F2}$ innerhalb der Toleranz liegen.

Ein Verfahren, mit dem auch Modifikationen mit unterschiedlichen Richtungen $\rho_{F1}$ auf linker und rechter Flanke und/oder asymmetrische Verzahnungen zweiflankig und abweichungsfrei wälzgeschliffen werden können, wird im Folgenden vorgestellt. Dafür wird das zylindrische Werkzeug durch ein konisches ersetzt.

## Konisches Werkzeug und zylindrisches Werkstück

Bisher ist Wälzschleifen nur mit zylindrischen Schnecken bekannt. Es ist jedoch auch möglich, konische Schnecken als Werkzeug einzusetzen. Die Kinematik dieses Prozesses kann durch ein Schraubwälzgetriebe mit einem konischen und einem zylindrischen Rad beschrieben werden. Diese Kinematik wird durch die in Gleichung (5) angegebene kinematische Kette beschrieben. Wie beim Schraubwälzgetriebe, bestehend aus zwei zylindrischen Rädern, gibt es auch hier zwischen beiden Rädern einen theoretischen Punktkontakt. Dies erlaubt es, denselben Ansatz wie für zylindrische Werkzeuge zu verwenden. d.h. es wird eine Schnecke mit einer Modifikation gemäß Gleichung (1) im Diagonalwälzverfahren verwendet, um auf dem Werkstück eine Modifikation ebenfalls gemäß Gleichung (1) zu erzeugen. Der Verlauf des Kontaktpunkts zwischen Werkstück und Schnecke kann wie folgt mathematisch beschrieben werden.

$$z_{F1} = C_{Fw1} \cdot w_{F1} + C_{Fz_V11} \cdot z_{V1} + C_{Fc1} \tag{37}$$

$$z_{F2} = C_{Fw2} \cdot w_{F2} + C_{Fz_V12} \cdot z_{V1} - z_{V2} + C_{Fc2} \tag{38}$$

Die hier eingeführten Koeffizienten $C_{Fw1}$, $C_{Fc1}$, $C_{Fw2}$, $C_{Fz_V11}$, $C_{Fz_V12}$ und $C_{Fc2}$ haben folgende Abhängigkeiten:

$$C_{Fw1} = C_{Fw1}(\beta_{bF1}) \tag{39}$$

$$C_{Fc1} = C_{Fc1}(\beta_{bF1}, \beta_{bF2}, r_{bF1}, d, \gamma, \vartheta_1) \tag{40}$$

$$C_{Fw2} = C_{Fw2}(\beta_{bF2}) \tag{41}$$

$$C_{Fc2} = C_{Fc2}(\beta_{bF1}, \beta_{bF2}, r_{bF2}, d, \gamma, \vartheta_1) \tag{42}$$

$$C_{Fz_V11} = C_{Fz_V11}(\beta_{bF1}, \beta_{bF2}, r_{bF1}, d, \gamma, \vartheta_1) \tag{43}$$

$$C_{Fz_V12} = C_{Fz_V12}(\beta_{bF1}, \beta_{bF2}, r_{bF2}, d, \gamma, \vartheta_1) \tag{44}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fc} = 0 \tag{45}$$

Die hier eingeführten Koeffizienten $\hat{C}_{Fw1}$, $\hat{C}_{Fw2}$, $\hat{C}_{Fz_{V1}}$ und $\hat{C}_{Fc}$ haben folgende Abhängigkeiten:

$$\hat{C}_{Fw1} = \hat{C}_{Fw1}(\beta_{bF1}) \tag{46}$$

$$\hat{C}_{Fw2} = \hat{C}_{Fw2}(\beta_{bF2}) \tag{47}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1) \tag{48}$$

$$\hat{C}_{Fc} = \hat{C}_{Fc}(\beta_{bF1}, r_{bF1}, \beta_{bF2}, r_{bF2}, d, \gamma, \vartheta_1) \tag{49}$$

Mit der Kenntnis dieser Beziehungen kann analog zum Fall zylindrischer Werkzeuge und Werkstücke eine Abbildung von Punkten auf der Schnecke zu Punkten auf dem Werkstück berechnet werden. Nimmt man hier wieder eine Modifikation auf der Schnecke gemäß Gleichung (1) an, führt dies zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$. Zu beachten ist hier, dass eine Änderung von $\vartheta_1$ im Allgemeinen eine Änderung der Grundkreisradien und Grundschrägungswinkel der Schnecke erfordert, damit Schnecke und Werkstück weiterhin mit einander kämmen und so ein Schraubwälzgetriebe bilden können. Das heißt, die Schnecke muss mit einer, um $\vartheta_1$ gekippten Zahnstange generiert werden können und Schnecke und Werkstück müssen miteinander kämmen. Werden $\vartheta_1$ und somit auch die Grundkreisradien und Grundschrägungswinkel verändert, beeinflusst diese Änderung $K_{Z_{V1}}$ auf linker und rechter Flanke unterschiedlich. Diese unterschiedliche Beeinflussung erlaubt es, ein $\vartheta_1$ zu bestimmen, sodass $K_{Z_{V1}}$ für linke und rechte Flanke gleich sind. Neben dem Konuswinkel $\vartheta_1$ beeinflussen bei konischen Schnecken auch die Profilwinkel der die Schnecke generierenden Zahnstange und der Achskreuzwinkel $\gamma$ den Wert $K_{Z_{V1}}$. Somit können zusätzlich zum Konuswinkel diese Größen variiert werden, um gleiches $K_{Z_{V1}}$ für linke und rechte Flanke zu erhalten. Diese Änderung der Profilwinkel führt ebenfalls zu einer Änderung der Grundkreisradien und Grundschrägungswinkel der Schnecke. Dies Variationsmöglichkeiten erlauben ein zweiflankiges, abweichungsfreies Wälzschleifen, auch für Verzahnungen und gewünschten Modifikationen, bei denen ein zweiflankiges, abweichungsfreies Wälzschleifen mit einer zylindrischen Schnecke nicht möglich wäre. Auch bei konischen Schnecken ist es möglich, einflankig zu schleifen und/oder eine Schnecke und ein Diagonalverhältnis zu wählen, welche die Modifikation nicht abweichungsfrei erzeugen, das heißt, bei denen $\rho_{F2}$ auf mindestens einer Flanke von der Sollvorgabe abweicht. Eine solche Wahl von Schnecke und Diagonalverhältnis kann beispielsweise nötig sein, wenn beide auf Grund anderer Vorgaben nicht frei wählbar sind.

**Zylindrisches Werkzeug und konisches Werkstück**

Das hier beschriebene Verfahren lässt sich direkt auf das Wälzschleifen konischer Werkstücke im Diagonalwälzverfahren übertragen. Zunächst wird hier der Fall einer zylindrischen Schnecke betrachtet, welche eine Modifikation gemäß Gleichung (1) aufweist. Schnecke und Werkstück bilden wieder ein Schraubwälzgetriebe, dessen Kinematik durch Gleichung (6) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} - z_{V1} + C_{Fz_{V2}1} \cdot z_{V2} + C_{Fc1} \tag{50}$$

$$z_{F2} = C_{Fw2} \cdot w_{F2} + C_{Fz_{V2}2} \cdot z_{V2} + C_{Fc2} \tag{51}$$

Die hier eingeführten Koeffizienten $C_{Fw1}$, $C_{Fc1}$, $C_{Fw2}$, $C_{Fzv22}$, $C_{Fzv21}$ und $C_{Fc2}$ haben folgende Abhängigkeiten:

$$C_{Fw1} = C_{Fw1}(\beta_{bF1}) \tag{52}$$

$$C_{Fc1} = C_{Fc1}(\beta_{bF1}, \beta_{bF2}, r_{bF1}, d, \gamma, \vartheta_2) \tag{53}$$

$$C_{Fw2} = C_{Fw2}(\beta_{bF2}) \tag{54}$$

$$C_{Fc2} = C_{Fc2}(\beta_{bF1}, \beta_{bF2}, r_{bF2}, d, \gamma, \vartheta_2) \tag{55}$$

$$C_{Fz_V2} = C_{Fz_V2}(\beta_{bF1}, \beta_{bF2}, r_{bF2}, d, \gamma, \vartheta_2) \tag{56}$$

$$C_{Fz_V1} = C_{Fz_V1}(\beta_{bF1}, \beta_{bF2}, r_{bF1}, d, \gamma, \vartheta_2) \tag{57}$$

Gleichung (32) wird ersetzt durch:

$$\hat{C}_{Fw1} \cdot w_{F1} + \hat{C}_{Fw2} \cdot w_{F2} + \hat{C}_{Fz_V2} \cdot z_{V2} + \hat{C}_{Fc} = 0 \tag{58}$$

Die hier eingeführten Koeffizienten $\hat{C}_{Fw1}$, $\hat{C}_{Fw2}$, $\hat{C}_{Fz_V2}$ und $\hat{C}_{Fc}$ haben folgende Abhängigkeiten:

$$\hat{C}_{Fw1} = \hat{C}_{Fw1}(\beta_{bF1}) \tag{59}$$

$$\hat{C}_{Fw2} = \hat{C}_{Fw2}(\beta_{bF2}) \tag{60}$$

$$\hat{C}_{Fz_V2} = \hat{C}_{Fz_V2}(\beta_{bF1}, r_{bF1}, \beta_{bF2}, r_{bF2}, \gamma, \vartheta_2) \tag{61}$$

$$\hat{C}_{Fc} = \hat{C}_{Fc}(\beta_{bF1}, r_{bF1}, \beta_{bF2}, r_{bF2}, d, \gamma, \vartheta_2) \tag{62}$$

Der bekannte Rechenansatz führt auch hier wieder zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_2$ ab. Ein Koeffizientenvergleich ermöglicht auch hier wieder die Berechnung von $K_{Zv1}$ sowie die Berechnung von $X_{F2}$ als Funktion von $X_{F1}$, jeweils für linke und rechte Flanke, jedoch hat $K_{Zv1}$ jetzt zusätzlich eine Abhängigkeit von $\vartheta_2$. Bei Vorgabe der gleichen durch $\rho_{F2}$ gegebenen Richtung der Modifikation auf linker und rechter Flanke führt die Berechnung von $K_{Zv1}$ im Allgemeinen zu unterschiedlichen Werten für linke und rechte Flanke. Dies ist auch bei symmetrischen Werkstücken im Allgemeinen der Fall. Anders ausgedrückt bedeutet dies, dass beim zweiflankigen Schleifen die Richtung $\rho_{F2}$ der Modifikation auf linker und rechter Flanke im Allgemeinen unterschiedlich ist. Gibt es ein Diagonalverhältnis $K_{Zv1}$, sodass $\rho_{F2}$ auf beiden Seiten erreicht werden kann, bzw. innerhalb der Toleranz liegt, so ist ein zweiflankiges Schleifen mit einem zylindrischen Werkzeug möglich. Andernfalls ist mit einem zylindrischen Werkzeug nur ein einflankiges Schleifen möglich. Wie bei zylindrischen Werkstücken kann durch Nutzung eines konischen Werkzeugs bei unabhängiger Vorgabe der Winkel $\rho_{F2}$ auf linker und rechter Flanke ein abweichungsfreies, zweiflankiges Schleifen ermöglicht werden.

**Konisches Werkzeug und konisches Werkstück**

Die Berechnung für ein konisches Werkzeug und ein konisches Werkstück erfolgt analog zu den bisher behandelten Kombinationen. Schnecke und Werkstück bilden wieder ein Schraubwälzgetriebe, dessen Kinematik durch Gleichung (7) gegeben ist. Auch hier liegt wieder theoretischer Punktkontakt zwischen Schnecke und Werkstück vor. Der Verlauf des Kontaktpunkts zwischen Werkstück und Schnecke kann wie folgt mathematisch beschrieben werden.

$$z_{F1} = C_{Fw1} \cdot w_{F1} + C_{Fz_{V1}1} \cdot z_{V1} + C_{Fz_{V2}1} \cdot z_{V2} + C_{Fc1} \tag{63}$$

$$z_{F2} = C_{Fw2} \cdot w_{F2} + C_{Fz_{V1}2} \cdot z_{V1} + C_{Fz_{V2}2} \cdot z_{V2} + C_{Fc2} \tag{64}$$

Die hier eingeführten Koeffizienten $C_{Fw1}$, $C_{Fc1}$, $C_{Fw2}$, $C_{Fz_{V2}2}$, $C_{Fz_{V2}1}$, $C_{Fz_{V1}2}$, $C_{Fz_{V1}1}$ und $C_{Fc2}$ haben folgende Abhängigkeiten:

$$C_{Fw1} = C_{Fw1}(\beta_{bF1}) \tag{65}$$

$$C_{Fc1} = C_{Fc1}(\beta_{bF1}, \beta_{bF2}, r_{bF1}, d, \gamma, \vartheta_1, \vartheta_2) \tag{66}$$

$$C_{Fw2} = C_{Fw2}(\beta_{bF2}) \tag{67}$$

$$C_{Fc2} = C_{Fc2}(\beta_{bF1}, \beta_{bF2}, r_{bF2}, d, \gamma, \vartheta_1, \vartheta_2) \tag{68}$$

$$C_{Fz_{V2}2} = C_{Fz_{V2}2}(\beta_{bF1}, \beta_{bF2}, r_{bF2}, d, \gamma, \vartheta_1, \vartheta_2) \tag{69}$$

$$C_{Fz_{V2}1} = C_{Fz_{V2}1}(\beta_{bF1}, \beta_{bF2}, r_{bF1}, d, \gamma, \vartheta_1, \vartheta_2) \tag{70}$$

$$C_{Fz_{V1}2} = C_{Fz_{V1}2}(\beta_{bF1}, \beta_{bF2}, r_{bF2}, d, \gamma, \vartheta_1, \vartheta_2) \tag{71}$$

$$C_{Fz_{V1}1} = C_{Fz_{V1}1}(\beta_{bF1}, \beta_{bF2}, r_{bF1}, d, \gamma, \vartheta_1, \vartheta_2) \tag{72}$$

Gleichung (32) wird ersetzt durch:

$$\hat{C}_{Fw1} \cdot w_{F1} + \hat{C}_{Fw2} \cdot w_{F2} + \hat{C}_{Fz_{V1}} \cdot z_{V1} + \hat{C}_{Fz_{V2}} \cdot z_{V2} + \hat{C}_{Fc} = 0 \tag{73}$$

Die hier eingeführten Koeffizienten $\hat{C}_{Fw1}$, $\hat{C}_{Fw2}$, $\hat{C}_{Fz_{V1}}$, $\hat{C}_{Fz_{V2}}$ und $\hat{C}_{Fc}$ haben folgende Abhängigkeiten:

$$\hat{C}_{Fw1} = \hat{C}_{Fw1}(\beta_{bF1}) \tag{74}$$

$$\hat{C}_{Fw2} = \hat{C}_{Fw2}(\beta_{bF2}) \tag{75}$$

$$\hat{C}_{Fz_{V1}} = \hat{C}_{Fz_{V1}}(\beta_{bF1}, r_{bF1}, \beta_{bF2}, r_{bF2}, \gamma, \vartheta_1, \vartheta_2) \tag{76}$$

$$\hat{C}_{Fz_{V2}} = \hat{C}_{Fz_{V2}}(\beta_{bF1}, r_{bF1}, \beta_{bF2}, r_{bF2}, \gamma, \vartheta_1, \vartheta_2) \tag{77}$$

$$\hat{C}_{Fc} = \hat{C}_{Fc}(\beta_{bF1}, r_{bF1}, \beta_{bF2}, r_{bF2}, d, \gamma, \vartheta_1, \vartheta_2) \tag{78}$$

Der bekannte Rechenansatz führt auch hier wieder zu einer Relation analog zu Gleichung (36), jedoch mit anderen Koeffizienten $\overline{C}_{Fw2}$ und $\overline{C}_{Fc}$. Diese Koeffizienten hängen jetzt zusätzlich von $\vartheta_1$ und $\vartheta_2$ ab. Ein Koeffizientenvergleich ermöglicht auch hier wieder die Berechnung von $K_{Z_{V1}}$ sowie die Berechnung von $X_{F2}$ als Funktion von $X_{F1}$, jeweils für linke und rechte Flanke, jedoch hat $K_{Z_{V1}}$ jetzt zusätzlich eine Abhängigkeit von $\vartheta_1$ und $\vartheta_2$. Analog zum Schleifen eines zylindrischen Werkstücks mit einer konischen Schnecke, beeinflussen Änderung von $\vartheta_1$, der Profilwinkel der Zahnstange der Schnecke und der Achskreuzwinkel und somit auch der Grundkreisradien und Grundschrägungswinkel das Diagonalverhältnis $K_{Z_{V1}}$ auf linker und rechter Flanke unterschiedlich. Dies ermöglicht es, für gegebene Richtungen $\rho_{F2}$ der Sollmodifikation ein $\vartheta_1$, Profilwinkel der Zahnstange der Schnecke und einen Achskreuzwinkel zu bestimmen, sodass $K_{Z_{V1}}$ für linke und rechte Flanke gleich ist und somit ein zweiflankiges abweichungsfreies Schleifen möglich wird.

Bei allen hier beschriebenen Kombinationen ist die auf der Schnecke nötige Modifikation $F_{t1}(X_{F1})$ gegeben durch:

$$F_{Ft1}(X_{F1}) = -\frac{\cos\beta_{bF2}}{\cos\beta_{bF1}} \cdot F_{Ft2}(X_{F2}(X_{F1})) \tag{79}$$

$F_{Ft2}(X_{F2})$ beschreibt die Modifikation auf dem Werkstück gemäß Gleichung (1).

**Berechnungsansatz zur Berechnung der Kontaktpfade auf Werkzeug und Werkstück**

Im Folgenden wird ein Berechnungsansatz aufgezeigt, mit dem sich die oben verwendeten Kontaktpfade, abhängig von den Vorschüben berechnen lassen. Diese Berechnung der Berührung zwischen Werkstück und Werkzeug wird mit Hilfe zweier theoretischer Zahnstangen (auch Planverzahnungen genannt), je einer für Werkstück und Werkzeug, jeweils mit trapezförmigen im Allgemeinen asymmetrischen Profilen, welche die Verzahnungen generieren können, durchgeführt. Da sowohl Werkzeug als auch Werkstück Evolventenverzahnungen sind, ist diese Betrachtung symmetrisch gegen Vertauschen von Werkzeug und Werkstück.

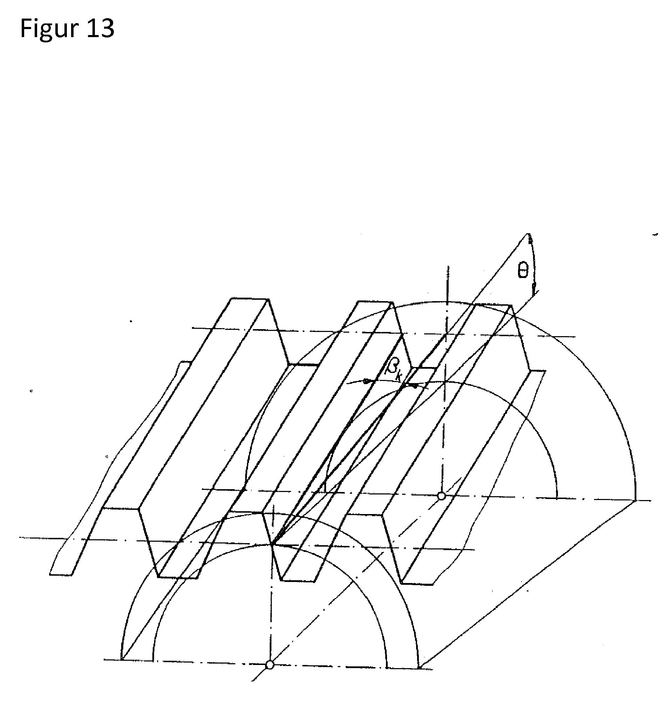

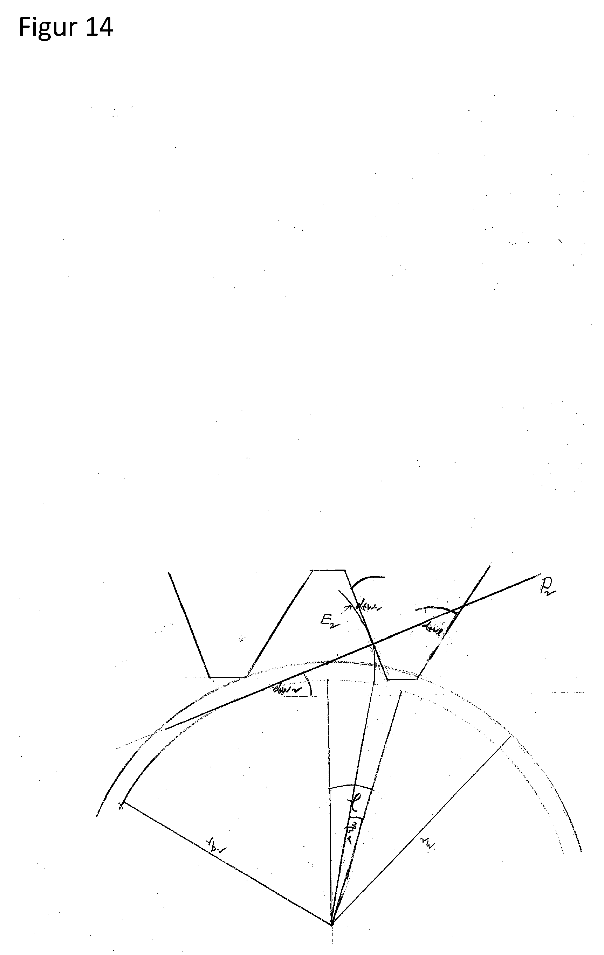

Figur 14 zeigt beispielhaft die Berührung einer rechten evolventischen Flanke mit einer generierenden Zahnstange mit Profilwinkel $\alpha_{twr}$ im Stirnschnitt. Die Verzahnung ist um den Drehwinkel $\varphi$ gedreht. Die Berührung zwischen Flanke und Zahnstange findet in der Eingriffsebene $P_r$ statt, welche um $\alpha_{twr}$ geneigt ist. Der Berührpunkt zwischen Flanke und Zahnstange ergibt sich für alle Drehwinkel $\varphi$ als Schnittpunkt zwischen Flanke und Eingriffsebene. Während die Verzahnung dreht, wird die Zahnstange waagerecht verschoben, so dass sie schlupffrei auf dem Wälzkreis mit Radius $r_w$ abrollt. Dadurch bleiben Flanke und Zahnstange in Berührung. Um die Verzahnung in ihrer ganzen Breite zu beschreiben, muss die relative Lage der Zahnstange zur Verzahnung in 3D betrachtet werden. Für zylindrische Verzahnungen wird diese um den Schrägungswinkel $\beta_w$ geschwenkt. Für den Fall einer konischen Verzahnung ist die Lage der Zahnstange zur Verzahnung in [Zierau] (Die geometrische Auslegung konischer Zahnräder und Paarungen mit parallelen Achsen, Bericht Nr. 32, Institut für Konstruktionslehre, Technische Universität Braunschweig) ausführlich beschrieben. Zusätzlich zum Schwenken um den Schrägungswinkel $\beta_w$ erfolgt ein Kippen um den Konuswinkel $\vartheta$ (siehe Figur 13). In beiden Fällen hat die Zahnstange im Normalschnitt die Profilwinkel $\alpha_{nwF}$. Welche Kombinationen von Winkeln $\alpha_{twF}$, $\alpha_{nwF}$ und $\beta_w$ sowie Normalmodul $m_n$ und Stirnmodul $m_t$ möglich sind, um eine gegebene Verzahnung zu erzeugen, ergibt sich für zylindrische Verzahnungen aus dem Formelwerk der DIN3960 und für konische zusätzlich aus dem Formelwerk aus [Zierau]. Die hierzu nötigen Formeln lassen sich durch Einführung unterschiedlicher Profilwinkel auf linker und rechter Seite direkt auf asymmetrische Verzahnungen übertragen.

Sind Geometrie und relative Lage der Zahnstange zur Verzahnung bekannt, so können die Stirnschnitte für beliebige Breitenpositionen bestimmt werden und in ihnen der Berührpunkt zwischen Zahnstange und Flanke. All diese Berührpunkte in den einzelnen Stirnschnitten bilden für einen Drehwinkel $\varphi$ eine Gerade (Berührgerade) in der Eingriffsebene. Beschreibt man diese Berührpunkte über w und z aus der Parametrisierung in Gleichung (3), so erhält man einen linearen Zusammenhang (R1) zwischen w, z und $\varphi$. Wird die Zahnstange im Raum festgehalten, so ist es für zylindrische Verzahnungen möglich, diese in axialer Richtung zu verschieben. Dieser Axialvorschub $z_V$ wird typischerweise für das Werkstück eingestellt, um dieses über die ganze verzahnte Breite zu bearbeiten und für das Werkzeug eingestellt, um das Diagonalverhältnis einzustellen. Damit die Verzahnung weiterhin, in der Regel zweiflankig die Zahnstange berührt, muss die Verzahnung zusätzlich zur Verschiebung um ihre Achse gedreht werden. Der Betrag der Drehung ergibt sich aus der Steigungshöhe der Verzahnung und dem Betrag der Verschiebung, der Drehsinn aus der Steigungsrichtung. Bei konischen Verzahnungen erfolgt der Vorschub $z_V$ nicht in axialer Richtung, sondern gegenüber dieser um den Konuswinkel $\vartheta$ gekippt. Die für die Berechnung der Drehwinkelkorrektur nötige Steigunsghöhe errechnet sich nach derselben Formel wie für zylindrische Verzahnungen aus $\beta_w$ und $m_t$. Zur Berechnung der Berührpunkte in den einzelnen Stirnschnitten sind die Stirnschnitte, abhängig vom Axialvorschub bzw. Vorschub mit den entsprechend korrigierten Drehwinkeln zu betrachten. Für die Beschreibung der Berührpunkte ergibt sich aus (R1) ein linearer Zusammenhang (R2) zwischen $w$, $z$, $z_V$ und $\varphi$.

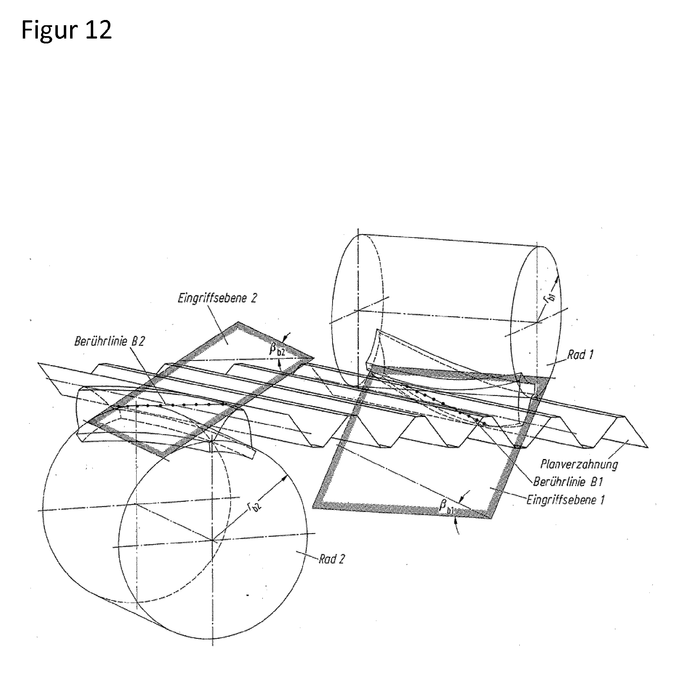

Werden zwei Verzahnungen in einem Schraubwälzgetriebe gepaart, so müssen deren beiden Zahnstangen zu jeder Zeit deckungsgleich sein, wie in Figur 12 gezeigt. Das impliziert, dass die Profilwinkel $\alpha_{nwF}$ für beide Verzahnungen gleich sein müssen. Des Weiteren ergibt sich daraus (R3): $\gamma + \beta_{w1} + \beta_{w2} = 0$. Diese Bedingung erlaubt es, aus einem gegebenen Achskreuzwinkel für zwei gegebene Verzahnungen, welche mit einander kämmen können, die Profilwinkel im Normal- bzw. Stirnschnitt der beiden Zahnstangen zu ermitteln. Eine Änderung der Grundkreisradien und der Grundschrägungswinkel der Schnecke ist somit gleichbedeutend mit einer Änderung des Profilwinkel und/oder des Konuswinkels und/oder des Achskreuzwinkels.

Damit die Zahnstangen zu jeder Zeit deckungsgleich sind, ergibt sich eine lineare Zwangsbedingung (R4) zwischen den beiden Drehwinkel und den beiden Vorschüben.

Sind die beiden Drehwinkel und die beiden Vorschübe bekannt, so lässt sich der Berührpunkt der beiden Verzahnungen direkt durch Berechnung des Schnittpunkts der beiden Berührgeraden bestimmen. Die Parameter $z_{F1}$ und $w_{F1}$ bzw. $z_{F2}$ und $w_{F2}$, welche den Berührpunkt auf Verzahnung 1 bzw. Verzahnung 2 beschreiben, hängen linear von $\varphi_1$, $\varphi_2$, $z_{V1}$ und $z_{V2}$ ab (R5). Eliminiert man in diesen Relationen die Drehwinkel, so folgen die gesuchten Kontaktpfade (R6).

Aus (R4) und (R2) für beide Verzahnungen ergibt sich durch Eliminieren von $\varphi_1$ und $\varphi_2$ ein linearer Zusammenhang (R7) zwischen $w_{F1}$, $w_{F2}$, $z_{V1}$ und $z_{V2}$, welche, abhängig vom Vorschub beschreibt, welcher Wälzweg auf Verzahnung 1 welchen Wälzweg auf Verzahnung 2 berührt.

Damit Werkzeug und Werkstück miteinander kämmen, muss gelten:

$$m_{bF1} \cdot \cos \beta_{bF1} = m_{bF2} \cdot \cos \beta_{bF2} \tag{80}$$

Alternativ zum gerade beschriebenen Ansatz ist es auch möglich, die Kontaktpfade (R6) und den Zusammenhang zwischen den Wälzwinkeln (R7) mit Hilfe einer Simulationsrechnung durchzuführen. Mit solchen Simulationen ist es möglich, aus einem gegebenen Werkzeug, insbesondere einer Schnecke und einer gegebenen Kinematik, insbesondere einer gegebenen Relativstellung zwischen Werkzeug und Werkstück, die exakte Geometrie des Werkstücks zu berechnen. Solche Simulationen lassen sich dahingehend erweitern, dass mit ihnen auch ermittelt werden kann, welcher Punkt auf dem Werkzeug welchen Punkt auf dem Werkstück fertigt, abhängig vom Vorschub des Werkzeugs und des Werkstücks. Ein dazu geeigneter Algorithmus wird im Folgenden beschrieben.

Hierzu wird zunächst eine, in der Regel nicht modifiziertes Werkstück betrachtet. Auf einzelnen Punkten mit den Koordinaten ($w_{F2}$,$z_{F2}$) auf den Zähnen dieses Werkstücks werden Vektoren in Normalenrichtung mit einer zuvor festgelegten Länge platziert. Die Länge der Vektoren entspricht dem Aufmaß des Werkstücks vor dem Schleifen, bezogen auf das nicht modifizierte Werkstück. Das Aufmaß wird typischerweise so groß gewählt, dass jeder Vektor während der nachfolgend beschriebenen Simulation mindestens einmal gekürzt wird. Die Anzahl der Punkte auf den Zähnen bestimmt die Genauigkeit des Ergebnisses. Bevorzugt werden diese Punkte äquidistant gewählt. Die relative Lage des Werkstücks zur Schnecke wird zu jedem Zeitpunkt vorgegeben, beispielsweise durch die kinematischen Ketten $K_r$. Zu jedem der diskreten Zeitpunkte wird der Schnitt aller Vektoren mit der Schnecke berechnet. Schneidet ein Vektor die Schnecke nicht, bleibt dieser unverändert. Schneidet er jedoch die Schnecke, so wird der Schnittpunkt berechnet und der Vektor soweit gekürzt, dass er gerade an dem Schnittpunkt endet. Weiterhin wird der Abstand des Schnittpunkts von der Schneckenachse, das heißt, der Radius auf der Schnecke $r_{F1}$ des Schnittpunkts berechnet und als zusätzliche Information zum gerade gekürzten Vektor abgespeichert. Da die Korrekturen der Koordinaten hier während des Schleifens nicht verändert werden, haben, nachdem die Simulation über die ganze Breite der Schnecke durchgeführt wurde, alle Vektoren auf einem gegebenen Radius des Werkstücks $r_{F2}$ bzw. einem gegebenen Wälzweg $w_{F2}$ annähernd dieselbe Länge.

Die geringfügen Unterschiede in den Längen rühren daher, dass der hier beschriebene Algorithmus aufgrund der Diskretisierung der Zeit Markierungen, ähnlich den Hüllschnitten beim Wälzfräsen verursacht. Diese Markierungen und somit auch die Unterschiede in den Längen der Vektoren auf einem gegebenen Radius des Werkstücks können durch eine feinere Diskretisierung der Zeit, gleichbedeutend mit einer Verkürzung der Zeitschritte reduziert werden. Wird die Simulation nicht über die gesamte Breite des Werkstücks durchgeführt, sondern bei einer gegebenen axialen Shift-position $z_{V2}$ des Werkstücks abgebrochen, so haben, für einen gegebenen Radius auf der Schnecke nur die Vektoren annährend dieselbe Länge, die von dem Kontaktpfad bereits überstrichen wurden. Die übrigen Vektoren haben entweder noch die ursprünglich gewählte Länge oder wurden bereits mindestens einmal gekürzt, haben jedoch noch nicht die endgültige Länge, da sie zu einem späteren Zeitpunkt erneut gekürzt werden (siehe Figur 15) . Diese Tatsache kann genutzt werden, um den Kontaktpfad für die aktuellen Vorschübe des Werkstücks und der Schnecke sehr genau zu bestimmen. Dazu werden alle Vektoren auf einen gegebenen Radius auf dem Werkstück $r_{F2}$ bzw. Wälzweg $w_V$ betrachtet und bestimmt, an welcher Breitenlinienposition der Übergang von Vektoren mit annährend gleicher Länge zu solchen mit davon abweichender Länger ist. Da das Schraubwälzgetriebe symmetrisch gegen Vertauschen von Werkstück und Schnecke ist, kann auf dieselbe Weise der Kontaktpfad auf der Schnecke bestimmt werden. Sind Werkstück und Schnecke beide zylindrisch, lassen sich aus den so berechneten Punkten auf dem Kontaktpfad die Koeffizienten aus Gleichung (26) bzw. (27), beispielsweise mittels einer Ausgleichsrechung bestimmen. Sind die Vektoren bestimmt, entlang derer der Kontaktpfad verläuft, können die zu diesen zuvor gespeicherten Radien auf der Schnecke $r_{F1}$ ausgelesen werden und so zu jedem Radius auf dem Werkstück $r_{F2}$ ermittelt werden, von welchem Radius auf der Schnecke $r_{F1}$ dieser geschliffen wurde. Diese Radien können in Wälzwege umgerechnet werden. Aus diesen Wertepaaren lassen sich für zylindrische Werkstücke und zylindrische Schnecken die Koeffizienten aus Gleichung (32), beispielsweise mittels einer Ausgleichsrechung bestimmen.

Ist die Schnecke konisch und das Werkstück zylindrisch, so muss der Kontaktpfad für mindestens zwei ver-schiedene Vorschübe $z_{V1}$ bestimmt werden, um zusätzlich die Koeffizienten vor $z_{V1}$ in den Gleichungen (37), (38) und (45) zu bestimmen. Analog müssen mindestens zwei verschiedene Vorschübe $z_{V2}$ betrachtet werden, wenn Werkstück konisch und Schnecke zylindrisch sind. Sind Werkstück und Schnecke konisch, so müssen die Kontakpfade für min-destens zwei Vorschübe $z_{V1}$ und mindestens zwei Vorschübe $z_{V2}$ betrachtet werden, um alle Koeffizienten aus den Gleichungen (63), (64) und (73) zu bestimmen.

**Wahl der Makrogeometrie der Schnecke**

Das hier berechnete Diagonalverhältnis hängt unter anderem auch von der Makrogeometrie der Schnecke, insbesondere der Gangzahl, dem Grundschrägungswinkel, den Grundkreisradien, dem Außendurchmesser (im Falle eines konischen Werkzeugs an einer definierten z-Position) und ggf. dem Konuswinkel ab. Diese Größen können daher genutzt werden, um bei gegebenen Richtungen $\rho_F$ das einzustellende Diagonalverhältnis zu beeinflussen. Dies ermöglicht es somit auch, den Arbeitsbereich zu verlängern oder zu verkürzen, was für die Werkzeugaufteilung von Vorteil sein kann. Auch kann eine Beeinflussung des Diagonalverhältnisses aus technologischen Gründen sinnvoll sein.

**Nicht konstantes Diagonalverhältnis**

Das hier bisher beschriebene Verfahren erfordert, dass der Bearbeitungsprozess mit einem konstanten vorgegebenen Diagonalverhältnis durchzuführen ist. Das Diagonalverhältnis und die Breite des Werkstücks inklusive Überlauf bestimmen den für die Bearbeitung nötigen Vorschub des Werkstücks. Zusammen mit der Ausdehnung des Kontaktpfads auf dem Werkzeug bestimmt der Vorschub die Länge des an der Bearbeitung beteiligten Teils des Werkzeugs, auch als Arbeitsbereich bezeichnet. Die Länge des Arbeitsbereiches bestimmt zum einen die Mindestlänge des Werkzeug bzw. bei kurzen Arbeitsbereichen und langen Werkzeugen die Anzahl der modifizierten Bereiche, die auf der Schnecke platziert werden können. In beiden Fällen kann es von Vorteil sein, die Länge des Arbeitsbereichs zu verlängern oder zu verkürzen. Eine Möglichkeit die Länge des Arbeitsbereichs zu verändern besteht darin, die Geometrie des Werkzeugs zu ändern, insbesondere die Grundkreisradien und Grundschrägungswinkel. Der Einfluss dieser Variante auf die Länge des Arbeitsbereichs ist im Allgemeinen jedoch recht gering. Eine weitere Möglichkeit die Länge des Arbeitsbereichs zu verändern besteht darin, das Diagonalverhältnis während der Bearbeitung zu verändern. Geschieht dies, während der Verlauf des Kontaktpunkts einen modifizierten Bereich überstreicht, so führt dies zu Abweichungen der Modifikation. Ist die Abweichung dann noch innerhalb der Toleranz, ist hier eine Änderung des Diagonalverhältnisses sinnvoll einsetzbar.

Ist die Modifikation so geartet, dass der Verlauf des Kontaktpunkts Bereiche überstreicht, die nicht modifiziert sind, so sind die zu diesem Zeitpunkt im Eingriff befindlichen Teile der Schnecke auch nicht modifiziert. Dies erlaubt es, während dieser Bereich überstrichen wird, das Diagonalverhältnis frei zu wählen. Um beispielsweise die Länge des Arbeitsbereichs zu minimieren, kann das Diagonalverhältnis auf 0 gesetzt werden. Eine Reduktion des Diagonalverhältnisses führt jedoch zu einer stärkeren Beanspruchung des Werkzeugs, was eine technologische Betrachtung nötig macht. Ist der Abtrag besonders groß, während der nicht modifizierte Bereich gefertigt wird, so kann es auch sinnvoll sein, das Diagonalverhältnis in diesen Bereichen zu erhöhen.

Typische Beispiele für Modifikationen, die aus einem nicht modifizierten Bereich bestehen, sind Endrücknahmen oder auch dreieckförmige Endrücknahme.

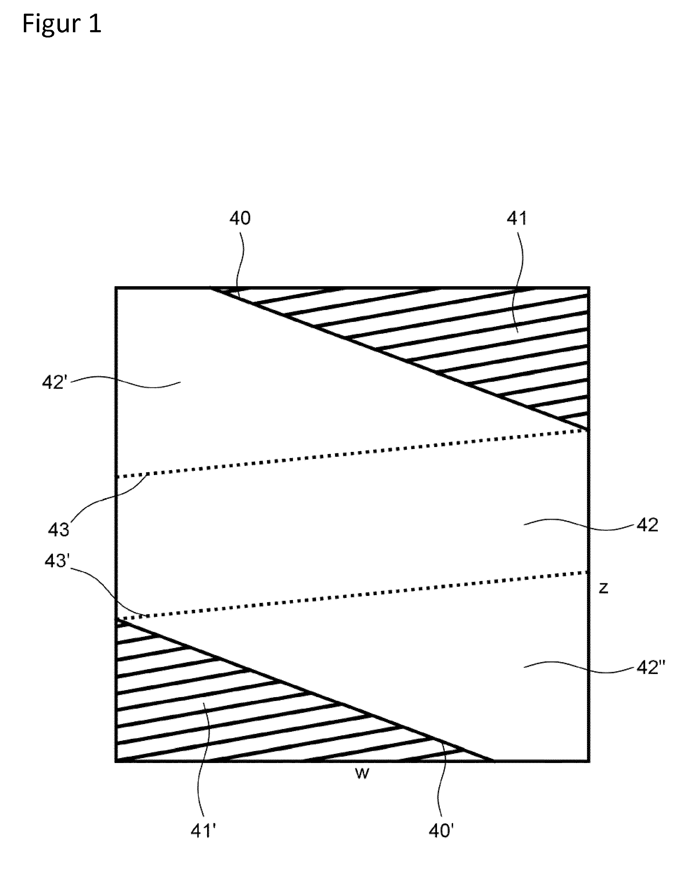

Figur 1 zeigt am Beispiel zweier Dreiecksförmigen Endrücknahme eine Aufteilung in modifizierte (41 und 41') und nicht modifizierte (42, 42', 42") Bereiche. Während der Verlauf des Kotaktpunkts (43 bzw. 43') den Bereich 42 überstreicht, kommen nur nicht modifizierte Bereiche der Schnecke in Eingriff. In diesem Bereiche kann das Diagonalverhältnis frei gewählt werden. Wird ein Bereich oberhalb 43 oder unterhalb 43' überstrichen, verläuft der Kontaktpunt zumindest teilweise über einen modifizierten Bereich. Hier muss das berechnete Diagonalverhältnis eingehalten werden, um abweichungsfrei zu fertigen. Es ist jedoch auch möglich, das Diagonalverhältnis nicht einzuhalten und Abweichungen in Kauf zu nehmen. Wird zweiflankig geschliffen, so müssen bei dieser Betrachtung beide Flanken berücksichtig werden. Soll eine abweichungsfreie Modifikation erzeugt werden, kann das Diagonalverhältnis nur dann frei gewählt werden, während der Kontaktpfad auf beiden Flanken einen nicht modifizierten Bereich überstreicht.

Möglich sind auch Modifikationen, die sich aus nicht modifizierten Bereichen und aus Bereichen mit in unterschiedlichen Richtungen verlaufenden Modifikationen zusammensetzten. Ist die Modifikation so geartet, dass der Verlauf des Kontaktpunkts zwischen den modifizierten Bereichen, Bereiche überstreicht, die nicht modifiziert sind, so kann in diesen Bereichen das Diagonalverhältnis wieder beliebig gewählt werden. Werden modifizierte Bereiche überstrichen, so muss das Diagonalverhältnis entsprechend der Richtung der gerade überstrichenen Modifikation eingestellt werden. Die nicht modifizierten Bereiche können genutzt werden, um das Diagonalverhältnis von einem modifizierten Bereich zum nächsten anzupassen.

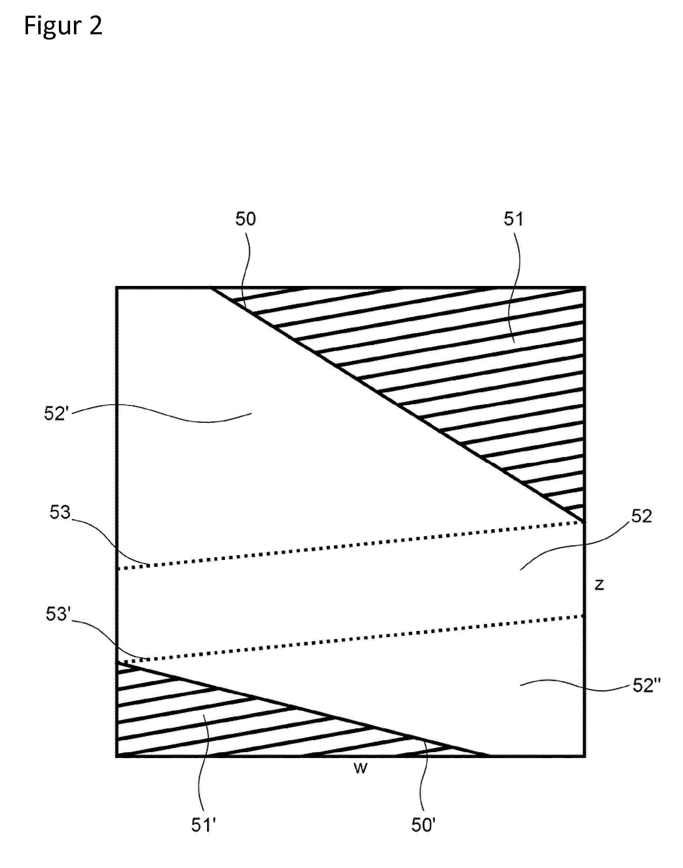

Figur 2 zeigt am Beispiel zweier Dreiecksförmigen Endrücknahme, welche in unterschiedliche Richtungen verlaufen, eine Aufteilung in modifizierte (51 und 51') und nicht modifizierte (52, 52', 52") Bereiche. Die Richtungen $\rho_{F2}$ (50 bzw. 50') der Modifikationen gemäß Gleichung (1) sind bei den modifizierten Bereichen unterschiedlich. Somit sind für die Bearbeitung der beiden Bereiche unterschiedliche Diagonalverhältnisse einzustellen. Während der Verlauf des Kotaktpunkts (53 bzw. 53') den Bereich 52 überstreicht, kann das Diagonalverhältnis frei gewählt werden. Um die Modifikation abweichnungsfrei herstellen zu können, müssen die Geraden 53 und 53' auf gleicher Höhe liegen oder 53 über 53'. Liegt jedoch 53' über 53 so verläuft der Kontaktpunkt sowohl über den Bereich 51 als auch über den Bereich 51', für welche unterschiedliche Diagonalverhältnisse einzustellen sind. Dies führt zu einer Abweichung auf mindestens einem der beiden Bereiche. Wird zweiflankig geschliffen, ist auch hier eine Betrachtung beider Flanken nötig. Soll abweichungsfrei geschliffen werden, so ist darauf zu achten, dass die auf beiden Seiten gleichzeitig geschliffenen Bereiche dasselbe Diagonalverhältnis erfordern. Ist dies nicht der Fall, so wird die Modifikation mit Abweichungen erzeugt.

Es ist jedoch auch möglich, das Diagonalverhältnis gezielt zu verändern, während der Kontaktpfad auf dem Werkstück modifizierte Bereiche überstreicht. Um dies mathematisch zu beschreiben, wird Gleichung (12) durch eine, im Allgemeinen nicht lineare Variante ersetzt:

$$z_{V1}(z_{V2}) = F_{Z_{V1}}(z_{V2}) \qquad (81)$$

Hierbei ist $F_{Z_{V1}}$ eine beliebige stetige Funktion, welche eine Relation zwischen $z_{V1}$ und $z_{V2}$ beschreibt. Das Diagonalverhältnis ist durch die Ableitung von $F_{Z_{V1}}(z_{V2})$ nach $z_{V2}$ gegeben und somit im Allgemeinen nicht konstant. Ist $F_{Z_{V1}}$ nicht linear, so werden Geraden auf der Schnecke im $w$-$z$-Diagramm nicht mehr auf Geraden auf dem Werkstück im $w$-$z$-Diagramm abgebildet. Die Kurve, welche den Verlauf der Punkte im $w$-$z$-Diagramm auf dem Werkstück beschreibt, welche auf eine durch $X_{F1}$ definierte Gerade auf der Schnecke abgebildet werden, kann durch eine Funktion $z_{F2}(w_{F2},X_{F1})$ beschrieben werden. Für den allgemeinsten Fall eines konischen Werkstücks und einer konischen Schnecke, erhält man eine Relation (R20) zwischen $F_{Z_{V1}}(z_{V2})$, $z_{F2}(w_{F2},X_{F1})$, $w_{F2}$ und $X_{F1}$, indem man das Gleichungssystem aus Gleichung (63) und (64) nach $z_{V1}$ und $z_{V2}$ auflöst, die beiden Vorschübe in Gleichung (81) einsetzt und anschließend $z_{F1}$ und $w_{F1}$ mit Hilfe der Gleichungen (13) und (73) ersetzt. Mit dieser Relation lässt sich für eine gegebene Funktion $F_{Z_{V1}}$ für jedes $X_{F1}$ der durch $z_{F2}(w_{F2},X_{F1})$ beschriebene Verlauf der Punkte auf der Werkstückflanke, welche auf die durch $X_{F1}$ definierte Gerade auf der Schnecke abgebildet werden, bestimmen. Umgekehrt kann auch aus einem für ein $X_{F1}$ gegebenem Verlauf $z_{F2}(w_{F2},X_{F1})$ die Funktion $F_{Z_{V1}}(z_{V2})$ bestimmt werden. Des Weiteren kann aus der Relation (R20) eine Funktion $F_{X_{F1}}(w_{F2},z_{F2})$ bestimmt werden, mit der für gegebene $z_{F2}$ und $w_{F2}$ $X_{F1}$ und somit die Gerade auf der Schnecke auf die der Punkt auf der Verzahnung abgebildet wird, bestimmt werden. Für die Fälle in denen Werkstück und/oder Schnecke zylindrisch sind, kann analog verfahren werden.

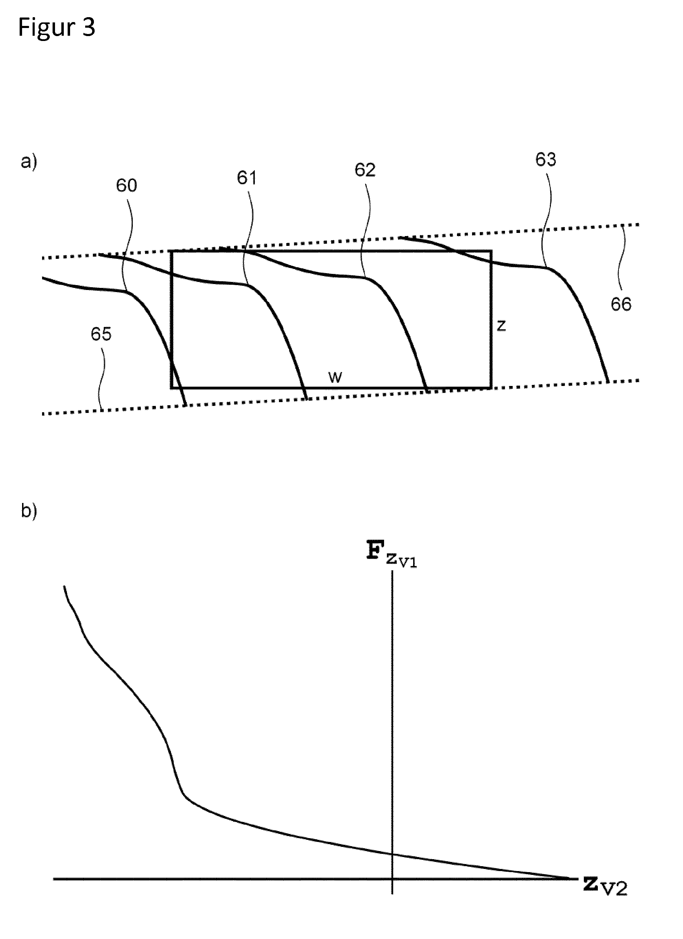

Wird für ein $X_{F1}$ nur der Teil des Verlaufs betrachtet, welcher auf der Flanke, d.h. innerhalb des $w$-$z$-Diagramms liegt, so definiert dies im Allgemeinen die Funktion $F_{Z_{V1}}(z_{V2})$ nicht für alle Werte von $z_{V2}$, da für andere Vorschubpositionen des Werkstücks, Teile des dann aktuellen Verlaufs die Flanke überstreichen, welche für $X_{F1}$ noch außerhalb des Diagramms lagen. Figur 3a zeigt dies beispielhaft für ein zylindrisches Werkstück. Dies kann genutzt werden, um $F_{Z_{V1}}(z_{V2})$ abschnittsweise aus den Verläufen für verschiedene $X_{F1}$ zusammenzusetzten, bzw. den Definitionsbereich zu erweitern. Alternativ ist es auch möglich, $F_{Z_{V1}}(z_{V2})$ aus einem Verlauf für ein $X_{F1}$, welcher über die Grenzen des w-z-Diagramm hinaus fortgesetzt wurde zu bestimmen. Diese Verlauf wird vorteilhafterweise soweit fortgesetzt, dass jeder Teil des $w$-$z$-Diagramme von dem Verlauf überstrichen wird. Figur 3a zeigt wie ein solcher Verlauf gewählt werden kann. In diesem Beispiel kann die Funktion $F_{Z_{V1}}(z_{V2})$ dann aus einem der vier Verläufe 60-63 bestimmt werden.

Insbesondere wenn $F_{Z_{V1}}(z_{V2})$ aus der Fortsetzung eines Verlaufs für ein $X_{F1}$ bestimmt werden soll, so ist es von besonderer Bedeutung zu wissen, wie sich der Verlauf von einem $X_{F1}$ zu einem anderen $X_{F1}$ verändert. Für den allgemeinen Fall berechnet sich dies durch die Schritte:

- Berechnen von $F_{Z_{V1}}(z_{V2})$ aus dem Verlauf für ein $X_{F1}$
- Berechnen des Verlauf für ein anderes $X_{F1}$ aus dem zuvor bestimmten $F_{Z_{V1}}(z_{V2})$

Ist die Verzahnung zylindrisch, so ergibt diese Berechnung, dass sich ein Verlauf $X_{F1}$ aus dem Verlauf durch für ein anderes $X_{F1}$ durch Verschieben entlang einer ausgezeichneten Richtung ergibt. In Figur 3 ist diese Richtung durch die beiden parallelen Geraden 65 und 66 dargestellt. Ist die Schnecke zylindrisch, so ist die Richtung dieser Geraden unabhängig von der Geometrie der Schnecke und hängt somit nur von der Geometrie des Werkstücks ab. Um die Richtung dieser Geraden zu beeinflussen und somit die erzeugten Modifikationen noch variabler zu gestalten, können konische Schnecken eingesetzt. Über die Geometrie der konischen Schnecke ($r_{bF1}$ bzw. $\beta_{bF1}$) und Achskreuzwinkel und Achsabstand, insbesondere des Konuswinkels kann diese Richtung beeinflusst werden.

Ist die Verzahnung konisch, kann die Änderung des Verlaufs von einem $X_{F1}$ zu einem anderen, sowohl für konische als auch für zylindrische Schnecken über die Geometrie der Schnecke ($r_{bF1}$ bzw. $\beta_{bF1}$, $\vartheta_1$) und Achskreuzwinkel beeinflusst werden. Der Zusammenhang lässt sich in dem Fall jedoch nicht mehr leicht anschaulich beschreiben und muss durch die oben beschriebenen Schritte ermittelt werden.

Wird einflankig Wälzgeschliffen, so kann $F_{Z_{V1}}(z_{V2})$ und somit der Verlauf für jede Flanke separat vorgegeben werden.

Wird zweiflankig Wälzgeschliffen, so beeinflusst ein $F_{Z_{V1}}(z_{V2})$ die Verläufe auf beiden Flanken. Wird der Verlauf auf einer Flanke 1 vorgegeben, so kann der sich daraus ergebende Verlauf auf der anderen Flanke 2 bestimmt werden durch die Schritte:

- Berechnen von $F_{Z_{V1}}(z_{V2})$ aus dem Verlauf von Flanke 1
- Berechnen des Verlaufs von Flanke 2 aus $F_{Z_{V1}}(z_{V2})$

Ist der Verlauf auf einer Flanke 1 vorgeben, so wird der sich daraus ergebende Verlauf auf Flanke 2 beeinflusst durch die Geometrie der Schnecke ($r_{bF1}$ bzw. $\beta_{bF1}$, $\vartheta_1$) und Achskreuzwinkel und Achsabstand. Diese Beeinflussung kann genutzt werden, um $F_{Z_{V1}}(z_{V2})$, die Geometrie der Schnecke und Achskreuzwinkel und Achsabstand so abzustimmen, dass die Verläufe auf beiden Flanken möglichst gut den Soll-Verläufen entsprechen.

Hat die Schnecke eine Modifikation gemäß Gleichung (1), so ist der Wert der Modifikation auf dem Werkstück entlang eines Verlaufs $z_{F2}(w_{F2}, X_{F1})$ gleich :

$$-\frac{\cos\beta_{bF1}}{\cos\beta_{bF2}} \cdot F_{Ft1}(X_{F1}) \tag{82}$$

Sind die Werte der Modifikation für alle Verläufe auf dem Werkstück bekannt, so ergibt sich daraus die Funktion $F_{Ft1}(X_{F1})$, welche die Modifikation auf der Schnecke definiert. Parametrisiert über $w_{F2}$ und $z_{F2}$ kann die Modifikation $f_{Ft2}(w_{F2}, z_{F2})$ auf dem Werkstück geschrieben werden als:

$$f_{Ft2}(w_{F2}, z_{F2}) = -\frac{\cos\beta_{bF1}}{\cos\beta_{bF2}} \cdot F_{Ft1}(F_{X_{F1}}(w_{F2}, z_{F2})) \tag{83}$$

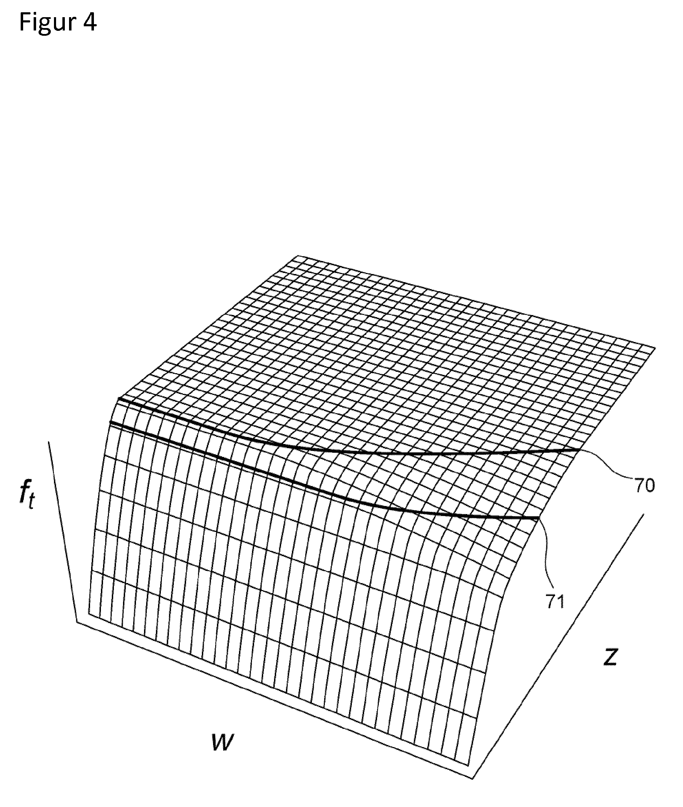

Ein konkretes Anwendungsbeispiel ist in Figur 4 gezeigt. Die Modifikation ist so gewählt, dass sie die Kombination aus einer Dreiecksförmigen Endrücknahme und einer Endrücknahme in Flankenlinienrichtung annähert. Der Übergang zwischen dem Beginn der beiden Rücknahmen ist hier beispielhaft tangential gewählt, wodurch der Verlauf 70 durch eine differenzierbare Kurve gegeben ist. Der Wert der Modifikation entlang 70 ist hier gleich 0 gewählt. Der Wert der Modifikation fällt in Richtung des Verlaufs 71 ab. Da der Abstand zwischen 70 und 71 im Bereich der Endrücknahme in Flankenlinienrichtung kleiner ist, als der Abstand zwischen 70 und 71 im Bereich der Dreiecksförmigen Endrücknahme, ist die Steigung der Modifikation im Bereich der Endrücknahme in Flankenlinienrichtung größer, als im Bereich der Dreiecksförmigen Endrücknahme. Das Verhältnis dieser beiden Steigungen wird maßgeblich durch die Richtung der Verschiebung der Verläufe (75 bzw. 76) beeinflusst. Diese Richtung kann durch die Verwendung konischer Schnecken und durch Wahl einer geeigneten Geometrie der Schnecke angepasst werden. Somit kann auch das Verhältnis zwischen den Steigungen wie gewünscht eingestellt werden.

**Überlagerung mit anderen Modifikationen**

Den mit dem hier beschriebenen Verfahren herstellbaren Modifikationen lassen sich ungestört Modifikationen additiv überlagern, die aus dem Stand der Technik bekannt sind. Zum einen sind das reine Profilmodifikationen. Solche Modifikationen $f_{PFt}$, welche für linke und rechte Flanke separat vorgegeben werden können, hängen nur vom Wälzweg und nicht von der z-Position ab. Mathematisch beschrieben werden können sie durch folgende Gleichung:

$$f_{PFt} = f_{PFt}(w_F) \tag{84}$$

Reine Profilmodifikationen lassen sich durch ein in Profillinienrichtung modifiziertes Werkzeug realisieren. Solche Modifikationen in Profillinienrichtung lassen sich ungestört mit den Modifikationen aus Gleichung (1) additiv überlagern. Beim Wälzschleifen mit abrichtbaren Schnecken wird diese Modifikation in der Regel in den Abrichter gelegt. Der Abrichtprozess kann dann unverändert durchgeführt werden und die Profilmodifikationen bilden sich, wie gewünscht auf der Schnecke und später beim Schleifen auf dem Werkstück ab.

Eine weitere, aus dem Stand der Technik [DE10208531] bekannte Methode, Modifikationen auf Verzahnungen zu erzeugen, besteht darin, die Kinematik während des Schleifprozesses zu korrigieren. Solche Modifikationen lassen sich beispielsweise durch Änderung des Achsabstandes und/oder Korrektur der Drehwinkel und/oder durch Korrektur der Vorschübe realisieren. Solche Korrekturen wirken sich immer entlang des Kontaktpfads aus und haben entlang diesem den gleichen Wert. Die mit dieser Methode erzeugbaren Modifikationen können somit auch durch Gleichung (1) beschrieben werden. Die durch $\rho_{KF}$ gegebene Richtung kann bei diesem Verfahren jedoch nicht beeinflusst werden, da diese nur vom Grundschrägungswinkel des Werkstücks abhängig ist. Mathematisch lässt sich diese Modifikation $f_{KFt}$ wie folgt beschreiben:

$$f_{KFt}(w_F, z_F) = F_{KFt}(w_F \tan \rho_{KF} + z_F) \tag{85}$$

Hierbei können die Funktionen $F_{KFt}$ beliebige stetige Funktionen sein. Aus den Funktionen $F_{KFt}$ für linke und rechte Flanke lassen sich die nötigen Korrekturen der Schleifkinematik berechnen. Mit diesem Verfahren lassen sich beispielsweise natürlich verschränkte Balligkeiten oder auch verzerrte Endrücknahmen herstellen.

Da bei dem dieser Anmeldung zugrunde liegenden Erfindung keine Korrektur der Schleifkinematik nötig ist, abgesehen vom Diagonalshiften, kann eine Korrektur der Schleifkinematik und somit eine Modifikation gemäß Gleichung (85) störungsfrei additiv überlagert werden.

Zusammengefasst lassen sich die herstellbaren Modifikationen $f_{GFt}$ wie folgt beschreiben:

$$f_{GFt}(w_F, z_F) = F_{Ft}(w_F \tan \rho_F + z_F) + f_{PFt}(w_F) + F_{KFt}(w_F \tan \rho_{KF} + z_F) \tag{86}$$

wobei $F_{Ft}$, $f_{PFt}$ und $F_{KFt}$ für beide Flanken freivorgebbare stetige Funktionen sind und die Winkel $\rho_F$ für beide Flanke freivorgebbare Richtungen definieren. Möglich sind insbesondere auch die Spezialfälle, bei denen mindestens eine der Funktionen $F_{Ft}$, $f_{PFt}$ und $F_{KFt}$ konstant, insbesondere 0 ist.

Ist eine Modifikation $f_F$ gegeben, kann diese im Allgemeinen näherungsweise, in Einzelfällen auch exakt beispielsweise mit Hilfe einer Ausgleichsrechnung in die drei Terme aus Gleichung (86) zerlegt werden. Dazu werden die Funktionen $F_{Ft}$, $f_{PFt}$ und $F_{KFt}$ und die Richtungen $\rho_F$ so bestimmt, dass die Abweichungen zwischen $f_{GFT}$ und $f_F$ optimal, insbesondere minimal ist. Diese Abweichung kann beispielsweise an diskreten Punkten $(w_{Fi}, z_{Fi})$ oder kontinuierlich über das ganze *w-z*-Diagramm berechnet werden. Die kontinuierliche Berechnung der Abweichung kann beispielsweise mit Hilfe eines Integrals einer Abstandsfunktion über alle Werte von w und z durchgeführt werden. Möglich ist es auch, die Abweichungen abhängig von der Position der Punkte in einem *w-z*-Diagramm gewichtet zu berechnet. Dies ist insbesondere dann von Vorteil, wenn die einzuhaltende Toleranz nicht überall gleich ist. Um diesen Vorgaben Rechnung zu tragen, ist es als Erweiterung auch möglich, die für die Ausgleichsrechnung verwende Abstandsfunktion nicht für alle Werte von $w_F$ und $z_F$ gleich zu wählen. Eine typische Variante der Ausgleichsrechnung ist die Methode der kleinsten Quadrate, welche als Abstandsfunktion die 2-Norm verwendet.

Die gewünschte Modifikation kann beispielsweise durch eine stetige Funktion $f_F$, durch eine Punktewolke $(w_{Fj}, z_{Fj}, f_{Fj})$ oder eine Kombination aus beidem gegeben sein. Die Funktionen $F_{Ft}$, $f_{PFt}$ und $F_{KFt}$ können mit Hilfe der Ausgleichrechnung als stetige Funktionen berechnet werden. Alternativ ist es auch möglich, die Funktionswerte nur an diskreten Punkten $(w_{Fk}, z_{Fk})$ zu berechnen. Aus diesen diskreten Punkten lassen sich durch Interpolation stetige Funktionen berechnen.

In der Ausgleichsrechnung können optional zusätzlich auch technologische Gesichtspunkte berücksichtig werden. So kann es beispielsweise von Vorteil sein, aus technologischen Gründen die Diagonalverhältnisse und somit die Richtungen $\rho_F$ einzuschränken. Im Allgemeinen kann die in der Ausgleichsrechnung verwendete und zu minimierende Abstandsfunktion, neben der Abweichung zwischen $f_{GFT}$ und $f_F$ auch von technologischen Größen abhängen:

Wird das Verfahren mit nicht konstantem Diagonalverhältnis angewendet, so muss Gleichung (86) dahingehend modifiziert werden, dass $F_{Ft}$ durch eine Modifikation gemäß Gleichung (83) zu ersetzten ist. Soll durch eine Ausgleichsrechnung eine gegeben Modifikation durch eine so zusammengesetzte Modifikation angenähert bzw. exakt in eine solche zerlegt werden, können die Funktionen $F_{Ft1}$, $F_{ZV1}$, $f_{PFt}$ und $F_{KFt}$ und Makrogeometrie der Schnecke, insbesondere Konuswinkel und Profilwinkel so bestimmt werden, dass der Abstand zur Sollmodifikation minimal wird. Wird die Option des Schleifens mit einer konischen Schnecke in Betracht gezogen, so können zusätzlich die Geometrie der Schnecke, insbesondere Konuswinkel und die Profilwinkel der erzeugenden Zahnstange, sowie der Achskreuzwinkel bei der Ausgleichsrechnung mit optimiert werden. Dies ist insbesondere dann besonders hilfreich, wenn zweiflankig geschliffen werden soll. In diesem Fall ist die Funktion $F_{ZV1}$ für linke und rechte Flanke gleich. Die Funktionen $F_{Ft1}$, $f_{PFt}$ und $F_{KFt}$ sind für linke und rechte Flanke, sowohl beim einflankigen aus auch beim zweiflankigen Schleifen im Allgemeinen verschieden.

**Aufteilung des Werkzeugs**

Die Bearbeitung der Verzahnungen erfolgt häufig in Schrupp- und Schlichtschnitten. Diese unterschiedlichen Bearbeitungsschritte können sowohl mit denselben Bereichen auf dem Werkzeug als auch mit verschiedenen Bereichen oder mit verschiedenen Werkzeugen durchgeführt werden. Die Schruppschnitte können alle oder teilweise mit dem hier beschriebenen Verfahren durchgeführt werden. Es jedoch auch möglich, für die Schruppschnitte andere Verfahren, insbesondere das Axialschleifen mit Diagonalverhältnis Null oder einem sehr kleinen, technologisch bedingten Diagonalverhältnis durchzuführen. Eine solche Schruppbearbeitung erlaubt es, den oder die Schruppbereiche auf der Schnecke besser auszunutzen, erzeugt jedoch nicht die gewünschte Modifikation auf der Verzahnung. Wird beim Schruppen bereits das hier beschriebene Verfahren eingesetzt, ist das Aufmaß zu Beginn der Schlichtbearbeitung gleichmäßiger verteilt und der Schlichtbereich wird gleichmäßiger belastet. Möglich ist es auch, bei der Schruppbearbeitung das hier beschriebene Verfahren zu verwenden, jedoch die Modifikation betragsmäßig kleiner zu wählen im Vergleich zur Schlichtbearbeitung, um die Schnecke an den Bereichen des Schruppbereichs, die viel Material abtragen müssen, nicht zu überlasten. Werden mehrere Schruppschnitte durchgeführt, kann der Betrag der Modifikation von Schnitt zu Schnitt erhöht werden. Möglich ist es auch, beim Schruppen die auf der Verzahnung erzeugte Modifikation nur anzunähern, insbesondere die durch $\rho_F$ gegebene Richtung, um dadurch den Arbeitsbereich zu verlängern oder zu verkürzen, um so die Schnecke aus technologischen Gesichtspunkten optimiert aufzuteilen. Schrupp- und Schlichtbereiche können, sowohl bei zylindrischen als auch bei konischen Schnecken, beliebig über die Schneckenbreite platziert werden.

**Übertragbarkeit auf andere Fertigungsverfahren**

Bisher wurde das der Erfindung zugrunde liegende Verfahren am Beispiel des Wälzschleifens mit abrichtbaren Werkzeugen und Abrichten mittels einer Profilrolle beschrieben. Es können aber ebenso nicht abrichtbare Werkzeuge verwendet werden, solange diese eine Modifikation gemäß Gleichung (1) aufweisen. Je nach Herstellverfahren, mit dem diese nichtabrichtbaren Werkzeuge hergestellt werden, ist es möglich, die durch $\rho_F$ gegebene Richtung konstanter Modifikation frei oder zumindest in gewissen Grenzen frei zu wählen, womit sich wiederum das Diagonalverhältnis beim Wälzschleifen und somit auch der Arbeitsbereich beeinflussen lassen. Diese freie Wahl von $\rho_F$ ist auch beim Zeilenabrichten des Werkzeuges möglich.

Das Verfahren kann auch bei anderen Fertigungsverfahren eingesetzt werden, die ein verzahntes Werkzeug und die Kinematik eines Schraubwälzgetriebes nutzen und einen Vorschub des Werkzeugs erlauben. Diese weiteren Fertigungsverfahren sind beispielsweise Wälzfräsen, Schälwälzfräsen, Schaben und Honen. Die Werkzeuge müssen dabei ebenfalls eine Modifikation gemäß Gleichung (1) aufweisen. Je nach Fertigungsverfahren des Werkzeugs, ist auch hier eine freie Wahl von $\rho_F$ auf dem Werkzeug möglich.

**Anwendungsbeispiele**

Im Folgenden werden einige Anwendungsbeispiele beschrieben, an denen auch der Vorteil der hier beschriebenen Erfindung gegenüber dem Stand der Technik aufgezeigt wird.

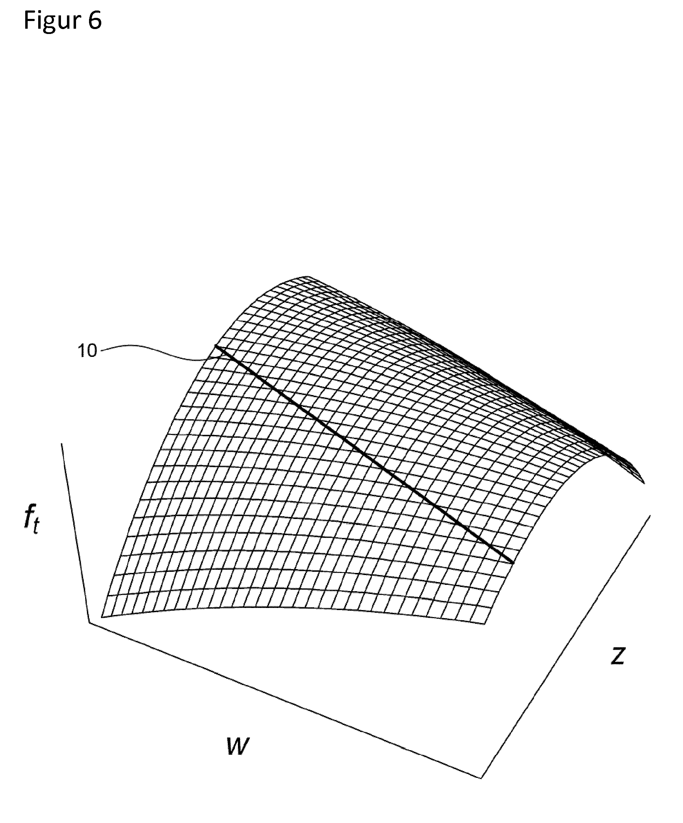

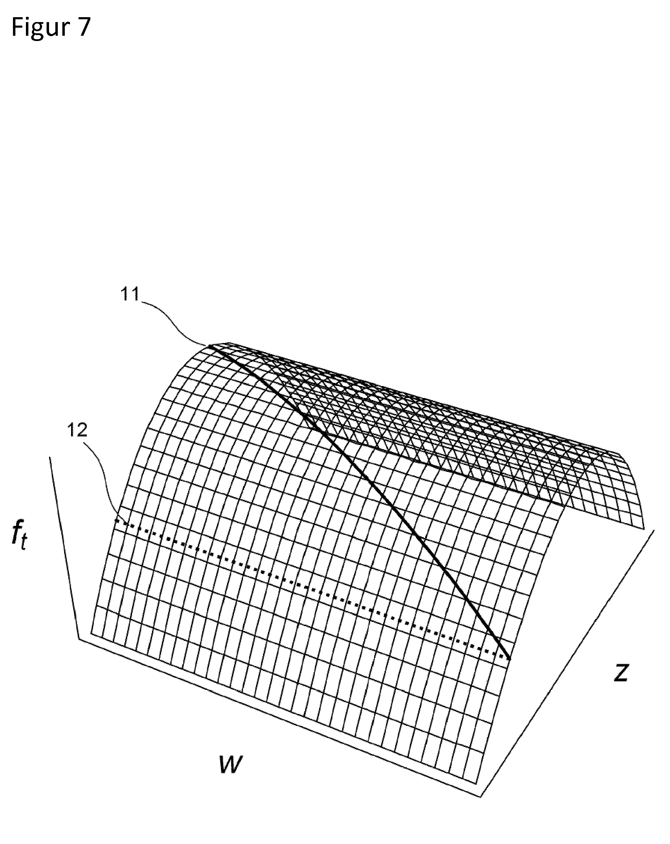

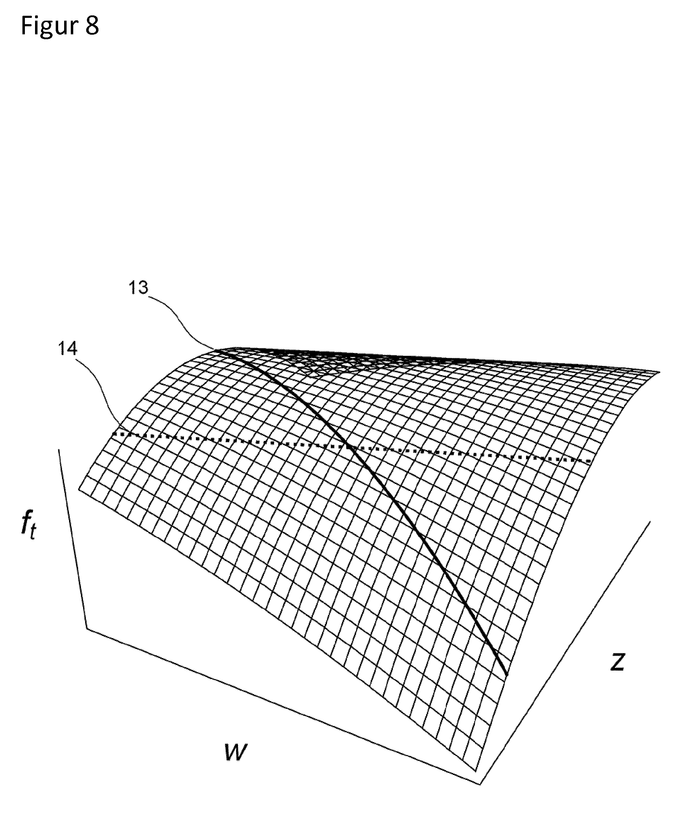

Figur 6 zeigt eine natürlich verschränkte Flankenlinienballigkeit, wie diese durch eine reine Korrektur der Schleifkinematik erzeugt werden kann. Die Richtung, entlang der die erzeugte Modifikation konstant ist, ist durch den Kontaktpfad 10 gegeben. Mit dem hier beschriebenen Verfahren, kann diese Richtung jedoch frei gewählt werden. Um eine reine, nicht verzerrte Flankenlinienballigkeit zu erzeugen, wird, wie in Figur 7 gezeigt, die Richtung so gewählt, dass die Linie mit konstanter Modifikation 12 parallel zur w-Achse verläuft. Die entlang des Kontaktpfads 11 erzeugte Modifikation hat keinen konstanten Wert. Die Richtung konstanter Modifikation kann jedoch auch beliebig gewählt werden, sodass eine, wie in Figur 8 gezeigte, in eine gezielte Richtung laufende Balligkeit erzeugt werden kann. Solche Balligkeiten erzeugen eine gezielte Verschränkung und sind, wie nicht verschränkte Flankenlinienballigkeiten, frei von Formabweichungen.

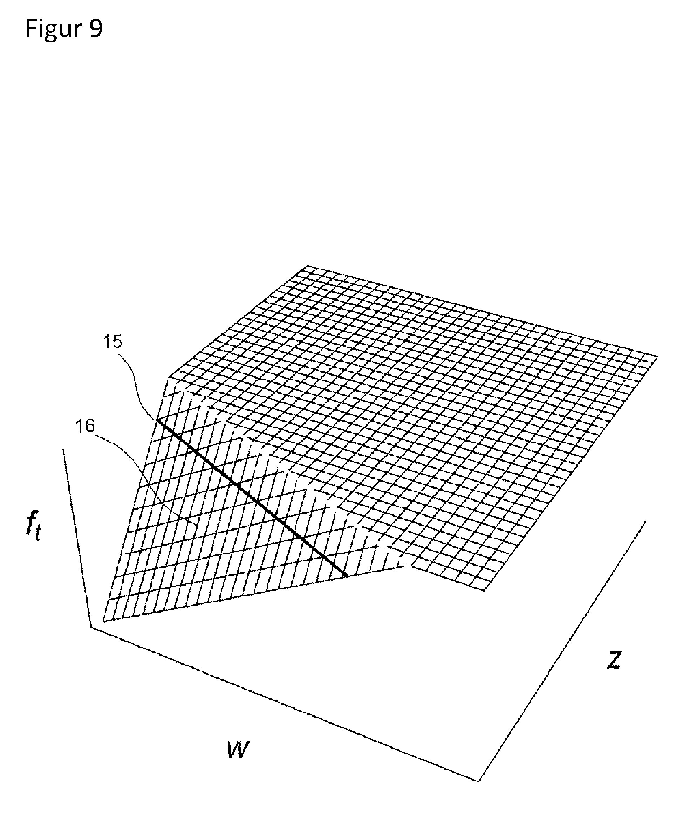

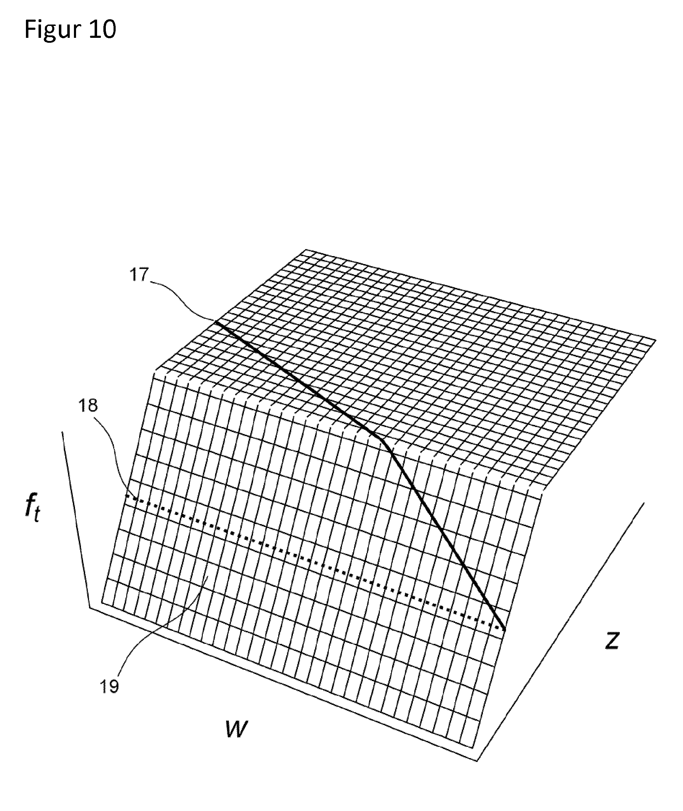

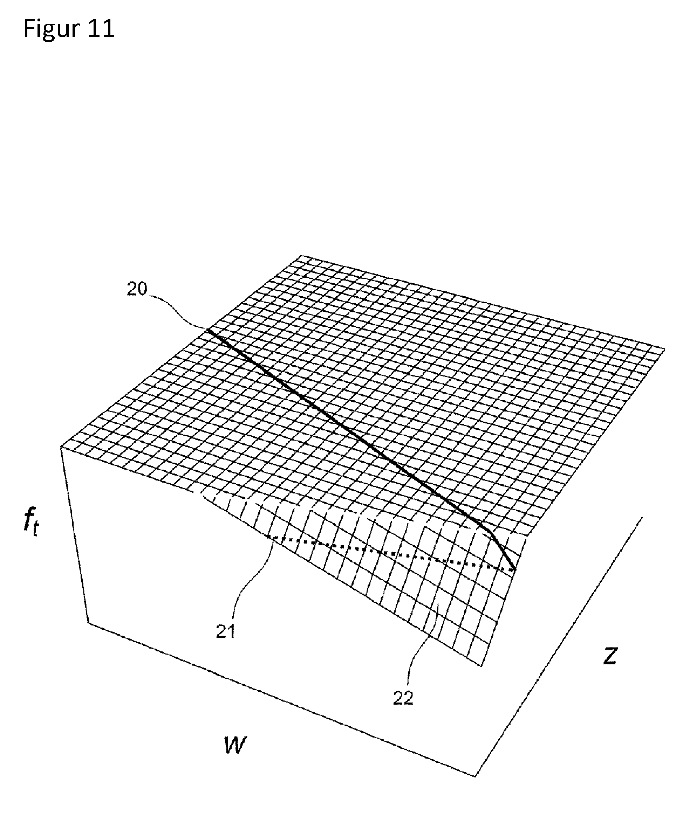

Ein weiteres Anwendungsbeispiel sind Endrücknahmen. Diese können gemäß dem Stand der Technik nur in verzerrter Form 16, wie in Figur 9 gezeigt, durch korrigierte Schleifkinematik gefertigt werden. Die Linie konstanter Modifikation verläuft entlang des Kontaktpfads 15. Gewünscht ist jedoch ein Verlauf dieser Linie parallel zur w-Achse, wie 18 in Figur 10 zeigt, was mit dem hier beschriebenen Verfahren möglich gemacht wird. Dies führt zu einer nicht verzerrten Endrücknahme 19. Eine Variation der Endrücknahmen sind dreieckförmige Endrücknahmen 22, wie in Figur 11 gezeigt. Die Linie konstanter Modifikation 21 verläuft hier in einer gezielt vorgegebenen Richtung, typischerweise parallel zur Eingriffsline der Verzahnung. Die hier dargestellten Endrücknahmen und dreiecksförmigen Endrücknahmen haben lineare Verläufe ohne Übergangsbereiche. Möglich sind hier jedoch auch beispielsweise kreisförmige, logarithmische, parabelförmige und exponentielle Verläufe, mit und ohne Übergangsbereich oder auch jede andere Form des Verlaufs.

### Auflistung von auch für sich genommen schützenswerten Aspekten

Im folgenden werden noch einmal wichtige Aspekte der vorliegenden Erfindung dargestellt, welche sowohl für sich genommen, als auch in Kombination untereinander und in Kombination mit den in der bisherigen Beschreibung dargestellten Aspekten, Gegenstand der vorliegenden Anmeldung sind:

### Grundlegendes Vorgehen Diagonalwälzverfahren mit modifiziertem Werkzeug

1. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gezielte Modifikation der Oberflächengeometrie des Werkzeuges erzeugt wird, wobei die gezielte Modifikation im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, und/oder wobei die gezielte Modifikation dadurch erzeugt wird, dass die Position des Abrichters zum Werkzeug beim Abrichten in Abhängigkeit von dem Werkzeugdrehwinkel und/oder der Werkzeugbreitenposition variiert wird, und wobei die gezielte Modifikation des Werkzeuges durch das Diagonalwälzverfahren eine entsprechende Modifikation auf der Oberfläche des Werkstückes erzeugt.

2. Verfahren nach Aspekt 1, wobei eine gewünschte Modifikation der Oberflächengeometrie des Werkstückes vorgegeben wird und die für die Erzeugung dieser gewünschten Modifikation notwendige Modifikation der Oberflächengeometrie des Werkzeuges bestimmt wird.

3. Verfahren nach Aspekt 2, wobei die Modifikation der Oberflächengeometrie des Werkzeuges aus der gewünschten Modifikation der Oberflächengeometrie des Werkstückes mittels der Umkehrung einer Zuordnungsfunktion, welche die Abbildung der Oberfläche des Werkzeugs auf die Oberfläche des Werkstücks beim Diagonalwälzschleifen beschreibt, bestimmt wird, wobei die Bestimmung bevorzugt unter Verwendung einer Funktion erfolgt, welche die Abbildung der Oberfläche des Werkzeugs auf die Oberfläche des Werkstücks beim Diagonalwälzschleifen analytisch beschreibt.

4. Verfahren nach Aspekt 2 oder 3, wobei die gewünschte Modifikation der Oberflächengeometrie des Werkstückes als stetige Funktion und/oder auf einer Punktewolke vorgegeben wird, wobei die stetige Funktion bevorzugt auf einer Fläche auf der Zahnflanke vorgegeben ist und/oder die Punktewolke bevorzugt eine Fläche auf der Zahnflanke aufspannt.

5. Verfahren nach einem der Aspekte 2 bis 4, wobei die Modifikationen der Oberflächengeometrie des Werkzeuges als stetige Funktion und/oder auf einer Punktewolke bestimmt wird, wobei die stetige Funktion bevorzugt auf einer Fläche auf der Zahnflanke bestimmt wird und/oder die Punktewolke bevorzugt eine Fläche auf der Zahnflanke aufspannt.

6. Verfahren nach einem der Aspekte 2 bis 5, wobei die gewünschte Modifikationen der Oberflächengeometrie des Werkstückes als eine Funktion vorgebbar ist, welche im Wälzbild zumindest lokal in einer zweiten Richtung des Werkstückes durch eine Funktion $F_{Ft2}$ gegeben ist, wobei bevorzugt die Funktion $F_{Ft2}$ und/oder die zweite Richtung zumindest innerhalb bestimmter Randbedingungen frei vorgebbar ist.

7. Verfahren nach einem der Aspekte 2 bis 5, wobei die gewünschte Modifikationen der Oberflächengeometrie des Werkstückes als eine Modifikation vorgebbar ist, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist, wobei bevorzugt die Funktion $F_{Ft2}$ und/oder die erste Richtung zumindest innerhalb bestimmter Randbedingungen frei vorgebbar ist.

8. Verfahren nach einem der vorangegangenen Aspekten, wobei eine gewünschte Modifikation der Oberflächengeometrie des Werkstückes vorgegeben wird, wobei in Abhängigkeit der gewünschten Modifikation der Oberflächengeometrie des Werkstückes eine geeignete erste Richtung der Modifikation der Oberflächengeometrie des Werkzeuges und/oder der Eingriffslinie des Abrichters an das Werkzeug beim Abrichten bestimmt wird.

9. Verfahren nach einem der vorangegangenen Aspekten, wobei eine gewünschte Modifikation der Oberflächengeometrie des Werkstückes vorgegeben wird, wobei in Abhängigkeit der gewünschten Modifikation der Oberflächengeometrie des Werkstückes eine geeignete Funktion $F_{Ft2}$ der Oberflächengeometrie des Werkzeuges bestimmt wird, und/oder wobei in Abhängigkeit der gewünschten Modifikation der Oberflächengeometrie des Werkstückes eine geeignete Variation der Position des Abrichters zum Werkzeug beim Abrichten in Abhängigkeit von dem Werkzeugdrehwinkel und/oder der Werkzeugbreitenposition bestimmt wird.

10. Verfahren nach Aspekt 8 oder 9, wobei in Abhängigkeit der gewünschten Modifikation der Oberflächengeometrie des Werkstückes zusätzlich ein geeignetes Diagonalverhältnis für das Bearbeitungsverfahren bestimmt wird.

11. Verfahren insbesondere nach einem der vorangegangenen Aspekte, insbesondere durch einen Hartfeinbearbeitungsprozess, insbesondere durch Wälzschleifen oder Honen,
wobei mittels einer gezielten Modifikation der Oberflächengeometrie des Werkzeuges eine Modifikation auf der aktiven Oberfläche des damit bearbeiteten Werkstückes erzeugt wird, wobei
die gewünschte Modifikation der Oberflächengeometrie des Werkstückes auf der Zahnradflanke im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist, und die zur Herstellung dieser Modifikation der Oberflächengeometrie des Werkstückes verwendete Modifikation der Oberflächengeometrie des Werkzeuges im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch die gleiche, gegebenenfalls linear um einen Faktor gestauchte, Funktion $F_{Ft1}$ gegeben ist.

12. Verfahren nach einem der vorangegangenen Aspekte, wobei das Werkzeug zum Erzeugen der gezielten Modifikation beim Abrichten modifiziert abgerichtet wird, und/oder wobei mittels der gezielten Modifikation der Oberfläche des Werkzeuges erreicht wird, dass eine vergleichbare definierte Modifikation im Diagonalwälzverfahren auf der aktiven Oberfläche des damit bearbeiteten Werkstückes erzeugt wird,
wobei bevorzugt das Werkzeug mittels einer Formrolle modifiziert abgerichtet wird, wobei weiterhin bevorzugt die Formrolle beim Abrichten vom Fußbereich bis zum Kopfbereich mit dem Zahn des Werkzeuges in Kontakt steht, so dass die Modifikation über die gesamte Zahnhöhe in einem Hub erfolgt
oder alternativ
die Formrolle beim Abrichten nur in Teilbereichen zwischen Fuß und Kopf mit dem Zahn des Werkzeuges in Kontakt steht, so dass die gezielte Modifikation über die gesamte Zahnhöhe in mehreren Hüben und jeweils unterschiedlicher relativen Positionierung des Abrichters erfolgt.

13. Verfahren nach einem der vorangegangenen Aspekte, wobei das Erzeugen der gezielten Modifikation auf dem Werkzeug erfolgt, indem eine oder mehrere der folgenden Korrekturen der Achsbewegungen zur herkömmlichen Abrichtkinematik vorgenommen werden:

d) Variation des Achsabstandes des Abrichters zum Werkzeug in Abhängigkeit des Werkzeugdrehwinkels oder der Werkzeugbreite (Zustellung)

e) Variation des Axialvorschubs des Werkzeugs bzw. des Abrichters in Abhängigkeit des Werkzeugdrehwinkels oder der Werkzeugbreite (Shiften)

f) Variation des Achskreuzwinkels des Werkzeuges und des Abrichters in Abhängigkeit des Werkzeugdrehwinkels oder der Werkzeugbreite (Schwenken)

g) Variation der Werkzeugdrehzahl in Abhängigkeit des Werkzeugdrehwinkels oder der Werkzeugbreite

und/oder wobei das modifizierte Abrichten des Werkzeuges erfolgt, indem der Abrichter abhängig von der Winkelposition des Werkzeugs mehr oder weniger zugestellt wird bzw. indem das Werkzeug abhängig von seiner Winkelposition mehr oder weniger auf den Abrichter hin, zugestellt wird oder umgekehrt.

14. Verfahren nach einem der vorangegangenen Aspekte, wobei die gewünschte Modifikation der Oberflächengeometrie des Werkstückes auf der Zahnradflanke im Wälzbild an der Wälzlängenposition $L_2$ und der Zahnbreitenposition $b_2$ zumindest lokal durch die Formel:

$$F_{Ft2}(2*pi/lambda_2*cos(psi_2) * L_2 - 2*pi/lambda_2*sin(psi_2) * b_2 )$$

definiert ist, wobei der Winkel $psi_2$ die erste Richtung auf der Zahnradflanke angibt, auf der die Modifikation einen konstanten Wert hat, während die Modifikation in jeder anderen Richtung die Form von $F_{Ft2}$ aufweist,
wobei bevorzugt
die hierzu eingesetzte Modifikation der Oberflächengeometrie des Werkzeuges im Wälzbild an der Wälzlängenposition $L_1$ und der Zahnbreitenposition $b_1$ zumindest lokal durch die Formel:

$$F_{Ft1}(2*pi/lambda_1*cos(psi_1) * L_1 - 2*pi/lambda_1*sin(psi_1) * b_1 )$$

definiert ist, wobei der Winkel $psi_1$ die erste Richtung auf der Werkzeugflanke angibt, auf der die Modifikation einen konstanten Wert hat, während die Modifikation entlang jeder anderen Richtung die Form von $F_{Ft1}$ aufweist,
und/oder wobei bevorzugt die erste Richtung des Werkzeuges, in welcher die Modifikation einen konstanten Wert aufweist, der Eingrifflinie des Abrichtwerkzeuges, insbesondere einer Formrolle, mit dem Werkzeug beim Abrichten entspricht, wobei diese Richtung vorzugsweise zumindest lokal durch eine Gerade angenähert wird.

15. Verfahren nach einem der vorangegangenen Aspekten, wobei die Modifikation eine Welligkeit ist, wobei die Funktion $F_{Ft1/2}$ bevorzugt periodisch ist, wobei bevorzugt $lambda_2$ bei einer Periodizität von $F_{Ft1/2}$ über $2*pi$ die Wellenlänge der Modifikation in einer Richtung senkrecht zu der ersten Richtung definiert und wobei weiterhin bevorzugt $lambda_1$ bei einer Periodizität von $F_{Ft1/2}$ über $2*pi$ die Wellenlänge der Modifikation in einer Richtung senkrecht zu der ersten Richtung definiert.

16. Verfahren nach einem der vorangegangenen Aspekte, wobei die Makrogeometrie des Werkzeuges und/oder die Eingrifflinie des Abrichtwerkzeuges und/oder der Axialvorschub des Werkstückes und/oder die Shift-Bewegung des Werkzeuges und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht,
wobei bevorzugt
bei vorgegebener Makrogeometrie des Werkzeuges und Eingrifflinie des Abrichtwerkzeuges der Axialvorschub des Werkstückes und/oder die Shift-Bewegung des Werkzeuges und/oder der Stauchungsfaktor entsprechend gewählt werden, wobei weiterhin bevorzugt bei vorgegebenen Axialvorschub des Werkstückes die Shift-Bewegung des Werkzeuges und/oder der Stauchungsfaktor entsprechend gewählt werden,

wobei bevorzugt

die Makrogeometrie des Werkzeuges und/oder die Eingrifflinie des Abrichtwerkzeuges und/oder der Axialvorschub des Werkstückes und/oder die Shift-Bewegung des Werkzeuges und/oder der Stauchungsfaktor so gewählt werden, dass die Modifikationen des Werkzeuges und des Werkstückes sich auch entlang von dritten und vierten Linien entsprechen, auf welchen sich die Berührpunkte bei der Bearbeitung des gleichen Zahnes des Werkstückes mit dem gleichem Gang des Werkzeuges zu einem späteren Zeitpunkt des Bearbeitungsverfahrens bewegen, wobei diese Linien durch den Axialvorschub des Werkstückes und ggf. durch das Vershiften des Werkzeuges gegenüber den ersten und zweiten Linien verschoben sind,

wobei weiterhin bevorzugt

bei vorgegebener Makrogeometrie des Werkzeuges und Eingrifflinie des Abrichtwerkzeuges der Axialvorschub des Werkstückes und/oder die Shift-Bewegung des Werkzeuges und/oder der Stauchungsfaktor entsprechend gewählt werden, wobei weiterhin bevorzugt bei vorgegebenen Axialvorschub des Werkstückes die Shift-Bewegung des Werkzeuges und/oder der Stauchungsfaktor entsprechend gewählt werden.

17. Verfahren nach einem der vorangegangenen Aspekte, wobei im Normalschnitt $F_{Ft1}(x) = - F_{Ft2}(cx)$ gilt, wobei c ein konstanter Parameter ist, und/oder wobei im Stirnschnitt $F_{Ft1}(x) = - k * F_{Ft2}(cx)$ gilt, wobei c und k konstante Parameter sind.

18. Verfahren nach einem der vorangegangenen Aspekte, dadurch gekennzeichnet, dass die durch das Verfahren erzeugten Modifikationen dazu verwendet werden, um ungewollte Abweichungen und/oder Welligkeiten der Oberfläche des Werkstückes zu kompensieren, insbesondere um Abweichungen und/oder Welligkeiten der Oberfläche des Werkstückes zu eliminieren, die durch Ungenauigkeiten der Maschinenmechanik und/oder durch die Maschinendynamik und/oder durch unzureichende Wuchtgüte bedingt sind.

19. Verfahren zum Hartfeinbearbeiten eines Werkstückes mit einer korrigierten Verzahnungsgeometrie und/oder modifizierter Oberflächenstruktur nach einem der vorhergehenden Aspekte,

mit den Schritten: Vorgabe einer gewünschten Modifikation; und gezieltes Erzeugen einer Werkzeugmodifikation beim Abrichten des Werkzeuges zur Herstellung eines Werkstückes mit der gewünschten Flankenmodifikation und/oder

mit den Schritten: Vorgabe einer gewünschten Ausrichtung der Modifikation; und Verfahren des Werkzeugs kontinuierlich in Achsrichtung des Werkstückes und/oder Vershiften des Werkzeuges tangential zum Werkstück, um die gewünschte Ausrichtung der Modifikation zu erhalten.

20. Werkzeug zur Durchführung eines Verfahrens nach einem der vorhergehenden Aspekte, dadurch gekennzeichnet, dass das Werkzeug zumindest in einem Teilbereich modifiziert abgerichtet ist, wobei das Werkzeug vorteilhafterweise wenigstens zwei verschiedene Bearbeitungsbereiche aufweist, insbesondere wenigstens einen Schruppbereich und wenigstens einen modifizierten abgerichteten Schlichtbereich.

21. Verzahnmaschine zur Durchführung des Verfahrens nach einem der Aspekte 1 bis 19, wobei die Verzahnmaschine vorteilhafterweise eine Eingabefunktion, über welche eine gewünschte Modifikation vorgebbar ist und eine Ansteuerungsfunktion, welche die zur Bereitstellung der Modifikation benötigte Werkzeugmodifikation bestimmt und während des Abrichtens auf dem Werkzeug erzeugt, umfasst, und/oder mit einer Funktion zur Erzeugung einer gewünschten Modifikation des Werkstückes mittels eines modifiziert abgerichteten Werkzeugs.

22. Verzahnmaschine zum Abrichten einer Schleifschnecke mit einem Abrichtwerkzeug, insbesondere Verzahnmaschine nach einem der vorangegangenen Aspekte, dadurch gekennzeichnet, dass die Verzahnmaschine eine Funktion zum modifizierten Abrichten der Schleifschnecke aufweist, welche vorteilhafterweise die Position des Abrichters zum Werkzeug beim Abrichten in Abhängigkeit von dem Werkzeugdrehwinkel und/oder der Werkzeugbreitenposition variiert, wobei die Funktion bevorzugt zumindest die Eingriffstiefe des Abrichtwerkzeugs in die Schleifschnecke in Abhängigkeit vom Drehwinkel der Schleifschnecke einstellt.

23. Verzahnmaschine nach Aspekt 21 oder 22, wobei die Eingabefunktion die Vorgabe der gewünschten Modifikation der Oberflächengeometrie des Werkstückes als stetige Funktion und/oder auf einer Punktewolke erlaubt, wobei die stetige Funktion bevorzugt auf einer Fläche auf der Zahnflanke vorgebbar ist und/oder die Punktewolke bevorzugt eine Fläche auf der Zahnflanke aufspannt.

24. Verzahnmaschine nach einem der Aspekte 21 bis 23, wobei die Verzahnmaschine die Modifikationen der Oberflächengeometrie des Werkzeuges als stetige Funktion und/oder auf einer Punktewolke bestimmt und/oder wobei die Verzahnmaschine die Vorgabe der Modifikationen der Oberflächengeometrie des Werkzeuges als stetige Funktion und/oder auf einer Punktewolke erlaubt, wobei die stetige Funktion bevorzugt auf einer Fläche auf der Zahnflanke bestimmt wird und/Oder vorgebbar ist und/oder die Punktewolke bevorzugt eine Fläche auf der Zahnflanke aufspannt.

25. Verzahnmaschine nach einem der Aspekte 21 bis 24, wobei die Verzahnmaschine die Vorgabe einer gewünschten Modifikationen der Oberflächengeometrie des Werkstückes als eine Funktion erlaubt, welche im Wälzbild zumindest lokal in einer zweiten Richtung des Werkstückes durch eine Funktion $F_{Ft2}$ gegeben ist, wobei bevorzugt die Funktion $F_{Ft2}$ und/oder die zweite Richtung zumindest innerhalb bestimmter Randbedingungen frei vorgebbar ist.

26. Verzahnmaschine nach einem der Aspekte 21 bis 24, wobei die Verzahnmaschine die Vorgabe einer gewünschten Modifikationen der Oberflächengeometrie des Werkstückes als eine Funktion erlaubt, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist, wobei bevorzugt die Funktion $F_{Ft2}$ und/oder die erste Richtung zumindest innerhalb bestimmter Randbedingungen frei vorgebbar ist.

27. Verzahnmaschine nach einem der Aspekte 21 bis 24, wobei die Verzahnmaschine die Vorgabe und/oder Bestimmung einer Modifikationen der Oberflächengeometrie des Werkzeuges durch den Abrichtprozess als eine Funktion erlaubt, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft1}$ gegeben ist, wobei bevorzugt die Funktion $F_{Ft2}$ und/oder die erste Richtung zumindest innerhalb bestimmter Randbedingungen frei vorgebbar ist.

28. Computerprogramm, insbesondere zur Installation auf einer Verzahnmaschine und/oder mit einer Ausgabefunktion für Daten zur Verwendung auf einer Verzahnmaschine, mit einer Eingabefunktion zur Eingabe von Daten zu einer gewünschten Modifikation des Werkstückes und mit einer Funktion zur Bestimmung der Makrogeometrie des Werkzeuges und/oder der Eingriffslinie des Abrichtwerkzeuges und/oder des Axialvorschubs des Werkstückes und/oder der Shift-Bewegung des Werkzeuges und/oder des Stauchungsfaktors in der Art, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht, wobei die Funktionen bevorzugt ein Verfahren nach einem der vorangegangenen Aspekte implementieren.

**Ausgleichsrechnung und/oder Kombination mit anderen Modifikationen**

1. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gezielte Modifikation der Oberflächengeometrie des Werkzeuges erzeugt wird, wobei die gezielte Modifikation im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, und/oder wobei die gezielte Modifikation dadurch erzeugt wird, dass die Position des Abrichters zum Werkzeug beim Abrichten in Abhängigkeit von dem Werkzeugdrehwinkel und/oder der Werkzeugbreitenposition variiert wird, wobei die gezielte Modifikation des Werkzeuges durch das Diagonalwälzverfahren eine entsprechende Modifikation auf der Oberfläche des Werkstückes erzeugt,
dadurch gekennzeichnet,
dass die durch die gezielte Modifikation erzeugte Modifikation des Werkstücks mit einer Profilmodifikation und/oder einer durch ein Veränderung der Maschinenkinematik während des Bearbeitungsprozesses hervorgerufenen Modifikation überlagert wird.

2. Verfahren nach Aspekt 1, wobei die Form und/oder Anteile und/oder Parameter der jeweiligen Modifikationen durch eine Ausgleichsrechnung bestimmt werden.

3. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gewünschte Modifikation der Oberflächengeometrie des Werkstückes vorgegeben wird und

auf Grundlage der gewünschten Modifikation der Oberflächengeometrie des Werkstückes eine gezielte Modifikation der Oberflächengeometrie des Werkzeuges ermittelt wird, welche durch das Diagonalwälzverfahren eine Modifikation auf der Oberfläche des Werkstückes erzeugt,
dadurch gekennzeichnet,
dass die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt werden.

4. Verfahren nach Aspekt 3, wobei die Form der gezielten Modifikation der Oberflächengeometrie des Werkzeuges und/oder das Diagonalverhältnis und/oder der Achskreuzwinkel während des Diagonalwälzverfahrens und/oder des Konuswinkel und/oder des Profilwinkels des Werkzeuges bestimmt werden, wobei bevorzugt ein über die Werkzeugbreite konstantes Diagonalverhältnis bestimmt wird oder wobei bevorzugt das Diagonalverhältnis als eine nicht-konstante Funktion der Vorschubposition bestimmt wird, und/oder wobei die gezielte Modifikation des Werkzeuges im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, und/oder wobei die gezielte Modifikation dadurch erzeugt wird, dass die Position des Abrichters zum Werkzeug beim Abrichten in Abhängigkeit von dem Werkzeugdrehwinkel und/oder der Werkzeugbreitenposition variiert wird.

5. Verfahren zur Herstellung eines Werkstückes mit korrigierter Verzahnungsgeometrie und/oder modifizierter Oberflächenstruktur durch ein modifiziertes Werkzeug,
wobei zur Herstellung des Werkstücks mindestens zwei unterschiedliche Modifikationen, welche durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind, überlagert werden,
dadurch gekennzeichnet,
dass eine gewünschte Modifikation des Werkstücks durch eine Ausgleichsrechnung zumindest näherungsweise in mindestens zwei unterschiedliche Modifikationen des Werkstücks zerlegt wird.

6. Verfahren nach Aspekt 5, wobei aus den so bestimmten Modifikationen des Werkstücks die zu deren Erzeugung benötigten Modifikation des Abrichtvorgangs des Werkzeugs und/oder des zum Abrichten des Werkzeuges verwendeten Abrichters und/oder des Bearbeitungsvorgangs des Werkstückes bestimmt werden.

7. Verfahren nach einem der vorangegangenen Aspekte, wobei mindestens zwei der folgenden Modifikationen überlagert werden:

- eine erste Modifikation der Oberfläche des Werkstückes, welche durch eine gezielte Modifikation der Oberflächengeometrie des Werkzeuges erzeugt wird, welche wiederum dadurch erzeugt wird, dass die Position des Abrichters zum Werkzeug beim Abrichten in Abhängigkeit von dem Werkzeugdrehwinkel und/oder der Werkzeugbreitenposition variiert wird, und/oder welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist,
- eine zweite Modifikation der Oberfläche des Werkstückes, welche durch eine Profilmodifikation des Abrichters erzeugt wird und/oder
- eine dritte Modifikation der Oberfläche des Werkstückes, welche durch ein Veränderung der Maschinenkinematik während des Bearbeitungsprozesses des Werkstückes erzeugt wird,
wobei die Form und/oder die Anteile und/oder die Parameter der jeweiligen Modifikationen durch eine Ausgleichsrechnung bestimmt werden, bei welcher eine vorgegebene, gewünschte Modifikation zumindest näherungsweise in mindestens zwei der folgenden Modifikationen zerlegt wird:
- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

8. Verfahren nach einem der vorangegangenen Aspekte, wobei eine gewünschte Modifikation vorgegeben wird und mittels der Ausgleichsrechnung diejenigen Parameter des Bearbeitungsvorgangs und/oder der Makrogeometrie des Werkzeuges und/oder diejenige gezielte Modifikation der Oberflächengeometrie des Werkzeuges und/oder Kombination von Modifikationen ermittelt wird, welche die gewünschte Modifikation möglichst optimal annähert und/oder exakt erzeugt, wobei die gewünschte Modifikation bevorzugt als stetige Funktion und/oder Punktewolke vorgegeben wird, wobei die Punktewolke bevorzugt eine Fläche auf der Zahnflanke aufspannt, und/oder wobei die Form der Modifikation und/oder der Modifikationen bevorzugt an einer Vielzahl von Punkten und/oder als stetige Funktionen bestimmt werden.

9. Verfahren zur Bestimmung der zur Herstellung eines Werkstückes mit einer gewünschten Modifikation der Verzahnungsgeometrie und/oder Oberflächenstruktur notwendigen Kombination an Modifikationen, wobei eine gezielte Modifikation der Oberflächengeometrie des Werkzeuges, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, mit einer Profilmodifikation und/oder einer durch ein Veränderung der Maschinenkinematik während des Bearbeitungsprozesses hervorgerufenen Modifikation überlagert wird, wobei eine gewünschte Modifikation vorgegeben wird und mittels einer Ausgleichsrechnung diejenige Kombination von Modifikationen ermittelt wird, welche die gewünschte Modifikation optimal annähert und/oder exakt erzeugt,
und/oder
wobei eine vorgegebene, gewünschte Modifikation zumindest näherungsweise in mindestens zwei der folgenden Modifikationen zerlegt wird:

- eine erste, durch gezielte Modifikation des Werkszeuges beim Abrichten erzeugbare Modifikation der Oberflächengeometrie des Werkstückes, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite, durch die Form des Abrichters erzeugbare reine Profilmodifikation und/oder
- eine dritte, durch ein Veränderung der Maschinenkinematik während des Bearbeitungsprozesses erzeugbare Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

10. Verfahren zur Bestimmung der zur Herstellung eines Werkstückes mit einer gewünschten Modifikation der Verzahnungsgeometrie und/oder Oberflächenstruktur notwendigen gezielten Modifikation der Oberflächengeometrie des hierfür eingesetzten Werkzeuges, wobei es sich bei dem Bearbeitungsvorgang um ein Diagonalwälzverfahren handelt, bei welchem die gezielten Modifikation der Oberflächengeometrie des Werkzeuges eine Modifikation der Oberflächengeometrie des Werkstücks erzeugt,
dadurch gekennzeichnet,
dass die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt werden.

11. Verfahren nach einem der vorangegangenen Aspekte, wobei im Rahmen der Ausgleichsrechnung eine Abstandsfunktion eingesetzt wird, welche den Unterschied zwischen der durch die gezielte Modifikation des Werkzeuges erzeugten Modifikation auf der Oberfläche des Werkstückes oder der durch die Summe der jeweiligen Modifikationen gegebenen Modifikation und der gewünschten Modifikation quantifiziert, wobei die Abstandsfunktion bevorzugt eine Mittelwertbildung über eine Vielzahl an Punkten oder das gesamte Wälzbild vornimmt, und/oder wobei im Rahmen der Ausgleichsrechnung eine Abstandsfunktion $A(w_F, z_F)$ eingesetzt wird, welche von dem Wälzweg $w_F$ und der Zahnbreitenposition $z_F$ abhängt und/oder wobei im Rahmen der Ausgleichsrechung eine gewichtete Abstandsfunktion eingesetzt wird, wobei bevorzugt Abweichungen in bestimmten Bereichen des Werkstückes stärker gewichtet werden als Abweichungen in anderen Bereichen,
und/oder
wobei im Rahmen der Ausgleichsrechnung diejenige gezielte Modifikation der Oberflächengeometrie des Werkstückes, welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist, bestimmt wird, welche ggf. zusammen mit mindestens einer weiteren Modifikation die gewünschte Modifikation optimal annähert und/oder exakt erzeugt, wobei aus der gezielten Modifikation der Oberflächengeometrie des Werkstückes die hierfür notwendige Modifikation der Oberflächengeometrie des Werkzeugs und/oder die hierfür beim Abrichten notwendige Maschinenkinematik bestimmt wird
und/oder
wobei im Rahmen der Ausgleichsrechnung mindestens ein und bevorzugt mehrere Parameter des Bearbeitungsvorgangs und/oder der Makrogeometrie des Werkzeuges und/oder die Form und/oder der Anteil und/oder die Parameter mindestens einer und bevorzugt zweier oder dreier der möglichen Modifikationen variiert wird, um diejenigen Parameter und/oder diejenige Modifikation und/oder Kombination von Modifikationen zu ermitteln, welche die gewünschte Modifikation möglichst optimal annähert und/oder exakt erzeugt, wobei bevorzugt die Form der Funktion $F_{Ft1/2}$ und/oder der Funktion $F_{KFt}$ und/oder der Profilmodifikation und/oder die erste Richtung variiert wird, und/oder wobei bevorzugt die Form der Funktion $F_{Ft1/2}$ und / oder die erste Richtung der ersten Modifikation und/oder das Diagonalverhältnis und/oder der Achskreuzwinkel während des Diagonalwälzverfahrens und/oder des Konuswinkel und/oder des Profilwinkels des Werkzeuges variiert werden, wobei bevorzugt ein über die Werkzeugbreite konstantes Diagonalverhältnis variiert wird oder wobei bevorzugt das Diagonalverhältnis als eine nicht-konstante Funktion der Vorschubposition variiert wird.

12. Verfahren zum Abrichten eines Werkzeuges zur Bereitstellung eines Werkzeuges für ein Verfahren nach einem der Aspekte 1 bis 7 und/oder zur Umsetzung der durch ein Verfahren gemäß Aspekt 8 ermittelten Kombination, wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass eine oder mehrere der folgenden Korrekturen der Achsbewegungen zur herkömmlichen Abrichtkinematik vorgenommen werden:

a) Variation des Achsabstandes des Abrichters zum Werkzeug in Abhängigkeit des Werkzeugdrehwinkels oder der Werkzeugbreite (Zustellung)

b) Variation des Axialvorschubs des Werkzeugs bzw. des Abrichters in Abhängigkeit des Werkzeugdrehwinkels oder der Werkzeugbreite (Shiften)

c) Variation des Achskreuzwinkels des Werkzeuges und des Abrichters in Abhängigkeit des Werkzeugdrehwinkels oder der Werkzeugbreite (Schwenken)

d) Variation der Werkzeugdrehzahl in Abhängigkeit des Werkzeugdrehwinkels oder der Werkzeugbreite

wobei zusätzlich ein modifiziertes Abrichtwerkzeug eingesetzt wird, um eine Profilmodifikation zu erzeugen.

13. Verzahnmaschine zur Durchführung eines Verfahrens zur Herstellung eines Werkstückes nach einem der Aspekte 1 bis 11 und/oder eines Verfahrens zum Abrichten eines Werkzeuges nach Aspekt 12, wobei die Verzahnmaschine vorteilhafterweise eine Eingabe- und/oder Berechnungsfunktion aufweist, über welche die kinematischen Veränderungen der Maschinenkinematik während des Bearbeitungsprozesses und/oder Abrichtprozesses vorgebbar und/oder bestimmbar sind, und/oder eine Ansteuerungsfunktion, welche die Maschinenkinematik während des Bearbeitungsprozesses und/oder Abrichtprozesses verändert, wobei die Eingabefunktion bevorzugt die Eingabe einer gewünschten Modifikation erlaubt und die Berechnungsfunktion die zu deren Herstellung notwendigen Modifikationen und/oder die zur Erzeugung der Modifikationen benötigten Veränderungen der Maschinenkinematik während des Bearbeitungsprozesses und/oder Abrichtprozesses bestimmt.

14. Computersystem und/oder Softwareprogramm zur Bestimmung der zur Herstellung eines Werkstückes mit einer gewünschten Modifikation notwendigen Kombination an Modifikationen,
mit einer Funktion zur Vorgabe einer gewünschten Modifikation und einer Ausgleichsrechnungsfunktion,
wobei die Ausgleichrechnungsfunktion eine Kombination von Modifikationen ermittelt wird, welche die gewünschte Modifikation möglichst optimal annähert und/oder exakt bestimmt,
wobei die Ausgleichsrechnungsfunktion eine hierfür geeignete Kombination einer durch eine gezielte Modifikation der Oberflächengeometrie des Werkzeuges erzeugbaren Modifikation des Werkstücks mit einer Profilmodifikation und/oder einer durch ein Veränderung der Maschinenkinematik während des Bearbeitungsprozesses hervorgerufenen Modifikation ermittelt,
und/oder wobei die Ausgleichsrechnungsfunktion eine vorgegebene, gewünschte Modifikation des Werkstücks durch eine Ausgleichsrechnung zumindest näherungsweise in mindestens zwei unterschiedliche Modifikationen des Werkstücks zerlegt, welche jeweils durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind,
und/oder wobei die Ausgleichsrechnungsfunktion die Form einer gezielten Modifikation der Oberflächengeometrie des Werkzeuges und/oder mindestens einen und bevorzugt mehrere Parameter der Makrogeometrie des Werkzeuges und/oder mindestens einen und bevorzugt mehrere Parameter eines Diagonalwälzverfahrens ermittelt, durch welche die gewünschte Modifikation möglichst optimal annähert und/oder exakt erzeugt werden kann, und bevorzugt mit einer Berechnungsfunktion, welche aus den so bestimmten Modifikationen des Werkstücks und/oder Werkzeugs die zu deren Erzeugung benötigten Modifikation des Abrichtvorgangs des Werkzeugs und/oder des zum Abrichten des Werkzeuges verwendeten Abrichters und/oder des Bearbeitungsvorgangs des Werkstückes bestimmt,

wobei weiterhin bevorzugt die Ausgleichsrechnungsfunktion eine vorgegebene, gewünschte Modifikation zumindest näherungsweise in mindestens zwei der folgenden Modifikationen zerlegt:

- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $FK_{Ft}$ gegeben ist.

15. Computersystem und/oder Softwareprogramm nach Aspekt 14, welches die Berechnungsschritte eines Verfahren gemäß einem der Aspekte 1 bis 12 implementiert, und/oder mit einer Schnittstelle zur oder installierbar auf einer Verzahnmaschine nach Aspekt 13, so dass durch das Computersystem und/oder Softwareprogramm die Veränderungen der Maschinenkinematik während des Bearbeitungsprozesses und/oder Abrichtprozesses vorgebbar und/oder bestimmbar sind.

**Herstellbare Geometrien**

1. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges, wobei eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, wobei die Modifikation des Werkzeuges durch das Diagonalwälzverfahren eine entsprechende Modifikation auf der Oberfläche des Werkstückes erzeugt, dadurch gekennzeichnet, dass die gezielte Modifikation auf der Oberfläche des Werkstückes eine gerichtete Balligkeit ohne Formabweichungen ist.

2. Verfahren nach Aspekt 1, wobei die Balligkeit verschränkungsfrei ist oder wobei die Balligkeit eine Verschränkung mit einer frei vorgegebenen Richtung auf der Zahnflanke aufweist, wobei die Richtung der Verschränkung vorteilhafterweise so gewählt wird, dass die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen, und/oder wobei eine vorgegebene Richtung der Balligkeit durch eine entsprechende Wahl der ersten bzw. zweiten Richtung der Modifikation auf dem Werkzeug und des Diagonalverhältnisses erreicht wird und/oder wobei die Balligkeit ausschließlich über die Modifikation des Werkzeuges und ohne einer Modifikation der Maschinenkinematik bei der Bearbeitung des Werkstückes erzeugt wird, und/oder wobei die Balligkeit kreisförmig oder parabelförmig oder logarithmisch ist oder aus mehreren kreis-, parabel- oder logarithmisch-förmigen Segmenten zusammengesetzt ist.

3. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges, wobei eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist,
wobei die Modifikation des Werkzeuges durch das Diagonalwälzverfahren eine entsprechende Modifikation auf der Oberfläche des Werkstückes erzeugt,
dadurch gekennzeichnet,
dass die gezielte Modifikation eine reine Flankenlinienmodifikation darstellt.

4. Verfahren nach Aspekt 3, wobei die Flankenlinienmodifikation zumindest innerhalb bestimmter Randbedingungen frei vorgegeben wird, wobei die Flankenlinienmodifikation bevorzugt als eine Funktion $F_{Ft2}$ vorgegeben wird, und/oder die Position des Abrichters zum Werkzeug beim Abrichten in Abhängigkeit von dem Werkzeugdrehwinkel und/oder der Werkzeugbreitenposition gemäß einer Funktion $F_{Ft1}$ variiert wird, und/oder wobei die erste bzw. zweite Richtung der Modifikation des Werkzeuges und das Diagonalverhältnis so gewählt werden, dass die erste Richtung auf Stirnschnittebenen des Werkstückes abgebildet wird.

5. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist,
wobei die Modifikation des Werkzeuges durch das Diagonalwälzverfahren eine entsprechende Modifikation auf der Oberfläche des Werkstückes erzeugt,
dadurch gekennzeichnet,
dass die gezielte Modifikation eine Endrücknahme ist.

6. Verfahren nach Aspekt 5, wobei die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen und/oder wobei die Endrücknahme eine Dreiecksrücknahme ist, wobei die Linien konstanter Modifikation in einem Winkel $\alpha$ ungleich null mit der Zahnkante aufweisen.

7. Verfahren nach einem der Aspekte 5 oder 6, wobei der Verlauf der Endrücknahme senkrecht zu den Linien konstanter Modifikation planar, parabelförmig, teilkreisförmig, logarithmisch, exponentiell oder elliptisch ist oder abschnittsweise aus solchen Formen besteht oder abschnittsweise solche Formen sowie Übergangsbereiche umfasst, welche bevorzugt einen tangentialen Übergang bereitstellen, wobei der Verlauf der Endrücknahme senkrecht zu den Linien konstanter Modifikation insbesondere in einem ersten Abschnitt planar sein kann und in einem Übergangsbereich in einen unmodifizierten Abschnitt oder einen Abschnitt mit einer anderen Modifikation übergeht, und/oder wobei die erste bzw. zweite Richtung der Modifikation des Werkzeuges und das Diagonalverhältnis in Abhängigkeit von der gewünschten Richtung der Endrücknahme gewählt werden.

8. Verfahren nach einem der Aspekte 5 bis 7, wobei an Ober- und Unterkante unterschiedliche Endrücknahmen vorgesehen sind, und insbesondere Endrücknahmen mit unterschiedlichen Verläufen der Linien konstanter Modifikation, wobei zur Bearbeitung der beiden Endrücknahmen mit unterschiedlichen Diagonalverhältnissen gearbeitet wird, und/oder wobei das Werkzeug mindestens einen modifizierten und einen unmodifizierten Bereich und/oder mindestens zwei Bereiche mit unterschiedlichen Modifikationen, insbesondere mit Modifikationen mit unterschiedlicher Ausrichtung und insbesondere unterschiedlicher erster Richtung, und/oder zwei modifizierte Bereiche, zwischen welchen ein unmodifizierter Bereich liegt, aufweist, wobei bevorzugt in mindestens zwei Bereichen mit unterschiedlichen Diagonalverhältnissen gearbeitet wird.

9. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder wobei eine gezielte Modifikation der Oberflächengeometrie des Werkzeuges erzeugt wird, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist,
wobei die Modifikation des Werkzeuges durch das Diagonalwälzverfahren eine entsprechende Modifikation auf der Oberfläche des Werkstückes erzeugt,

dadurch gekennzeichnet,

dass die Linien konstanter Modifikation auf dem Werkstück mit einem Winkel kleiner 60°, vorteilhafterweise kleiner 30°, weiter vorteilhafterweise kleiner 10°, weiter bevorzugt parallel zur Eingriffslinie der Verzahnung verlaufen.

10. Verfahren nach einem der vorangegangenen Aspekte, wobei die gewünschte Modifikation der Oberflächengeometrie des Werkstückes auf der Zahnradflanke im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,

und die zur Herstellung dieser Modifikation der Oberflächengeometrie des Werkstückes verwendete Modifikation der Oberflächengeometrie des Werkzeuges im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch die gleiche, gegebenenfalls linear um einen Faktor gestauchte Funktion $F_{Ft1}$ gegeben ist,

wobei die Makrogeometrie des Werkzeuges und/oder die Eingrifflinie des Abrichtwerkzeuges und/oder das Diagonalverhältnis und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht,

und/oder wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass eine oder mehrere der folgenden Korrekturen der Achsbewegungen zur herkömmlichen Abrichtkinematik vorgenommen werden:

    a) Variation des Achsabstandes des Abrichters zum Werkzeug in Abhängigkeit des Werkzeugdrehwinkels oder der Werkzeugbreite (Zustellung)

    b) Variation des Axialvorschubs des Werkzeugs bzw. des Abrichters in Abhängigkeit des Werkzeugdrehwinkels oder der Werkzeugbreite (Shiften)

    c) Variation des Achskreuzwinkels des Werkzeuges und des Abrichters in Abhängigkeit des Werkzeugdrehwinkels oder der Werkzeugbreite (Schwenken)

    d) Variation der Werkzeugdrehzahl in Abhängigkeit des Werkzeugdrehwinkels oder der Werkzeugbreite.

11. Verzahnmaschine zur Durchführung des Verfahrens nach einem der Aspekte 1 bis 10, wobei die Verzahnmaschine vorteilhafterweise eine Eingabe- und/oder Berechnungsfunktion aufweist, über welche die Modifikation und/oder die Ausrichtung der Modifikation vorgebbar und/oder bestimmbar sind, und/oder eine Ansteuerungsfunktion, welche im Rahmen der Bearbeitung eines Werkstückes die gezielte Modifikation erzeugt, wobei die Eingabefunktion bevorzugt die Eingabe einer gewünschten Modifikation erlaubt und die Berechnungsfunktion die zu deren Herstellung notwendigen Modifikationen und/oder die zur Erzeugung der Modifikationen benötigten Veränderungen der Maschinenkinematik während des Bearbeitungsprozesses und/oder ggf. während des Abrichtprozesses bestimmt, wobei bevorzugt eine Ansteuerungsfunktion vorgesehen ist, welche die Maschinenkinematik während des Bearbeitungsprozesses und/oder ggf. während des Abrichtprozesses entsprechend verändert.

12. Computersystem und/oder Softwareprogramm zur Bestimmung der zur Herstellung eines Werkstückes mit einer gewünschten Modifikation notwendigen Modifikationen des Werkzeuges und/oder der notwendigen Bearbeitungsparameter bei der Durchführung eines Verfahrens nach einem der vorangegangenen Aspekte,

mit einer Funktion zur Eingabe einer gewünschten Modifikation und einer Berechnungsfunktion, welche aus den gewünschten Modifikationen des Werkstücks die zu deren Erzeugung benötigten Parameter des Bearbeitungsvorgangs des Werkstückes und/oder die benötigte Modifikation des Werkzeugs und/oder die zur Bereitstellung der Modifikation des Werkzeugs benötigte Modifikation des Abrichtvorgangs des Werkzeugs bestimmt.

13. Computersystem und/oder Softwareprogramm nach Aspekt 12 mit einer Schnittstelle zur oder installierbar auf einer Verzahnmaschine, so dass durch das Computersystem und/oder Softwareprogramm die Veränderungen der Maschinenkinematik während des Abrichtprozesses und/oder die Parameter des Bearbeitungsvorgangs vorgebbar und/oder bestimmbar sind.

14. Verzahntes Werkstück, insbesondere Zahnrad, mit einer ballig modifizierten Zahnflanke, und/oder Getriebe mit einem oder mehreren verzahnten Werkstücken mit einer ballig modifizierten Zahnflanke, dadurch gekennzeichnet, dass die Balligkeit eine gerichtete Balligkeit ohne Formabweichungen ist, wobei die Balligkeit bevorzugt verschränkungsfrei ist oder dass die Balligkeit eine Verschränkung aufweist, deren Richtung so gewählt ist, dass die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen und/oder schrägverzahntes Werkstück, insbesondere Zahnrad, mit einer modifizierten Zahnflanke, und/oder Getriebe mit einem oder mehreren verzahnten Werkstücken mit einer modifizierten Zahnflanke, dadurch gekennzeichnet, das die Modifikation eine reine Flankenlinienmodifikation ist.

15. Verzahntes Werkstück, insbesondere Zahnrad, mit mindestens einer Endrücknahme, und/oder Getriebe mit einem oder mehreren verzahnten Werkstücken mit mindestens einer Endrücknahme, dadurch gekennzeichnet, dass die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen und/oder wobei die Endrücknahme eine Dreiecksrücknahme ist, wobei die Linien konstanter Modifikation in einem Winkel $\alpha$ ungleich null mit der Zahnkante aufweisen, und/oder wobei an Ober- und Unterkante unterschiedliche Endrücknahmen vorgesehen sind, und insbesondere Endrücknahmen mit unterschiedlichen Verläufen der Linien konstanter Modifikation, und/oder verzahntes Werkstück, insbesondere Zahnrad, mit einer modifizierten Zahnflanke, und/oder Getriebe mit einem oder mehreren verzahnten Werkstücken mit einer modifizierten Zahnflanke, wobei die Modifikation im Wälzbild zumindest lokal in einer ersten Richtung einen konstanten Wert aufweist und in einer zweiten Richtung, welche senkrecht zur ersten Richtung verläuft, durch eine Funktion $F_{Ft2}$ gegeben ist, dadurch gekennzeichnet, dass die Linien konstanter Modifikation mit einem Winkel kleiner 60°, vorteilhafterweise kleiner 30°, weiter vorteilhafterweise kleiner 10°, weiter bevorzugt parallel zur Eingriffslinie der Verzahnung verlaufen.

**Veränderung des Diagonalverhältnisses bei der Bearbeitung eines Werkstücks**

1. Verfahren zur Verzahnbearbeitung eines Werkstückes durch ein Diagonalwälzverfahren, bei welchem das Werkstück durch das Abwälzen eines Werkzeuges verzahnbearbeitet wird, wobei während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt,
dadurch gekennzeichnet,
dass im Rahmen der Bearbeitung eines Werkstückes das Diagonalverhältnis verändert wird.

2. Verfahren nach Aspekt 1 zur Herstellung eines Werkstückes mit korrigierter Verzahnungsgeometrie und/oder modifizierter Oberflächenstruktur, wobei mittels einer gezielten Modifikation der Oberflächengeometrie des Werkzeuges und einer durch das Diagonalwälzverfahren erzeugten, vom Diagonalverhältnis abhängigen Abbildung der Oberfläche des Werkzeugs auf die Oberfläche des Werkstücks eine entsprechende Modifikation auf der Oberfläche des Werkstückes erzeugt wird,
wobei bevorzugt eine gezielte Modifikation der Oberflächengeometrie des Werkzeuges erzeugt wird, indem die Position des Abrichters zum Werkzeug beim Abrichten in Abhängigkeit von dem Werkzeugdrehwinkel und/oder der Werkzeugbreitenposition variiert wird, und/oder
wobei die Modifikation der Oberflächengeometrie des Werkstückes auf der Zahnflanke im Wälzbild zumindest lokal und/oder in einem ersten Bereich in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
und/oder die zur Herstellung der Modifikation der Oberflächengeometrie des Werkstückes verwendete Modifikation der Oberflächengeometrie des Werkzeuges im Wälzbild zumindest lokal und/oder in einem ersten Bereich in einer ersten Richtung des Werkzeuges einen konstanten Wert aufweist und weiterhin bevorzugt in einer zweiten Richtung des Werkzeuges, welche senkrecht zur ersten Richtung verläuft, durch eine Funktion $F_{Ft1}$ gegeben ist, wobei bevorzugt die Funktion auf dem Werkzeug die gleiche, gegebenenfalls linear um einen Faktor gestauchte Funktion ist wie die Funktion auf dem Werkstück,
wobei bevorzugt die Makrogeometrie des Werkzeuges und/oder die Eingrifflinie des Abrichtwerkzeuges und/oder das Diagonalverhältnis und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht.

3. Verfahren nach Aspekt 1 oder 2, wobei zur Bearbeitung unterschiedlicher Bereiche des Werkstückes und/oder bei der Verwendung unterschiedlicher Bereiche des Werkzeuges mit unterschiedlichen Diagonalverhältnissen gearbeitet wird, und/oder wobei das Diagonalverhältnis verändert wird, während im Rahmen der Verzahnbearbeitung die Breite der Verzahnung abgefahren wird.

4. Verfahren nach Aspekt 3 , wobei innerhalb der jeweiligen Bereiche mit einem konstantem Diagonalverhältnis gearbeitet wird.

5. Verfahren nach Aspekt 1 oder 2, wobei das Diagonalverhältnis während der Bearbeitung des Werkstückes in Abhängigkeit von dem Axialvorschub des Werkstückes und/oder Werkzeuges variiert wird, wobei bevorzugt das Diagonalverhältnis zumindest in einem Bereich des Axialvorschubs als eine nicht-konstante Funktion des Axialvorschubs gegeben ist, und/oder wobei bevorzugt der Verlauf mindestens einer Linie konstanter Modifikation vorgeben wird und hieraus die Variation des Diagonalverhältnisses in Abhängigkeit vom Axialvorschubs und insbesondere die nicht-konstante Funktion, durch welche dieser gegeben ist, bestimmt wird, wobei die Funktion bevorzugt zumindest einen Bereich aufweist, in dem sie einen stetigen nicht-konstanten Verlauf aufweist, und/oder wobei bevorzugt die Variation des Diagonalverhältnisses beim Überstreichen eines modifizierten Bereichs des Werkstücks erfolgt.

6. Verfahren nach einem der vorangegangenen Aspekte, wobei bei welchem eine Veränderung des Diagonalverhältnisses erfolgt, während das Werkzeug am Werkstück in Breitenrichtung entlanggeführt wird, wobei das Werkzeug eine konische Grundform aufweist, wobei bevorzugt die durch die Veränderung des Diagonalverhältnisses erzielbaren Modifikationen durch eine geeignete Wahl mindestens eines und bevorzugt mehrerer Parameters des Bearbeitungsvorgangs und/oder der Makrogeometrie des Werkzeuges, insbesondere des Achskreuzwinkels und/oder des Achsabstands und/oder des Konuswinkels und/oder des Profilwinkels des Werkzeuges, gezielt beeinflusst werden.

7. Verfahren nach einem der vorangegangenen Aspekte, wobei das Werkzeug mindestens einen modifizierten und einen unmodifizierten Bereich und/oder mindestens zwei Bereiche mit unterschiedlichen Modifikationen, insbesondere mit Modifikationen mit unterschiedlicher Ausrichtung, und/oder zwei modifizierte Bereiche, zwischen welchen ein unmodifizierter Bereich liegt, aufweist, wobei bevorzugt in mindestens zwei Bereichen mit unterschiedlichen Diagonalverhältnissen gearbeitet wird.

8. Verfahren nach einem der vorangegangenen Aspekte, wobei das Werkzeug mindestens zwei Bereiche aufweist, welche nacheinander zur Bearbeitung des gleichen Bereichs des Werkstückes eingesetzt werden, insbesondere mindestens einen Schrupp- und mindestens einen Schlichtbereich, wobei die Bearbeitungsschritte mit den beiden Bereichen, insbesondere der Schruppschnitt und der Schlichtschritt, mit unterschiedlichen Diagonalverhältnissen erfolgen, wobei bevorzugt die zur Bearbeitung eingesetzten Bereiche die gesamte Werkzeugbreite nutzen, und/oder wobei bevorzugt zumindest ein Bereich, insbesondere der Schlichtbereich, modifiziert ist, wobei für den Fall, dass beide Bereiche, insbesondere sowohl der Schrupp- als auch Schlichtbereich, modifiziert sind, die Modifikation jeweils eine unterschiedliche Ausrichtung aufweist, und/oder die Modifikation auf dem Schruppbereich nur näherungsweise zu der gewünschten Modifikation auf der Verzahnung führt.

9. Verfahren nach einem der vorangegangenen Aspekte, wobei das Werkzeug mindestens zwei Bereiche aufweist, welche nacheinander zur Bearbeitung unterschiedlicher Bereiche des Werkstückes eingesetzt werden, wobei die Bearbeitung in dem einen Bereich mit einem anderen Diagonalverhältnis erfolgt als in dem anderen Bereich, wobei das Werkzeug bevorzugt einen modifizierten und einen unmodifizierten Bereich aufweist, wobei bevorzugt das Diagonalverhältnis in dem unmodifizierten Bereich kleiner ist als im modifizierten Bereich, um die Breite des Werkzeuges zu verringern, oder wobei das Diagonalverhältnis in dem unmodifizierten Bereich größer ist als im modifizierten Bereich, um in diesem Bereich die Belastung des Werkzeuges zu verringern.

10. Verfahren nach einem der vorangegangenen Aspekte, wobei das Werkzeug zwei modifizierte Bereiche, zwischen welchen ein unmodifizierter Bereich liegt, aufweist, welche nacheinander zur Bearbeitung unterschiedlicher Bereiche des Werkstückes eingesetzt werden, wobei zumindest in den modifizierten Bereichen mit unterschiedlichen Diagonalverhältnissen gearbeitet wird, um in den jeweiligen Bereichen des Werkstückes unterschiedliche Modifikationen, insbesondere Modifikationen mit unterschiedlicher Ausrichtung, zu erzeugen, wobei die Bereiche bevorzugt so angeordnet sind, dass der Verlauf des Kontaktpunktes zwischen Werkzeug und Werkstück in mindestens einer Schleifposition komplett im unmodifizierten Bereich liegt.

11. Werkzeug zur Durchführung eines Verfahrens nach einem der vorhergehenden Aspekte, dadurch gekennzeichnet, dass das Werkzeug mindestens zwei Bereiche aufweist, welche nacheinander zur Bearbeitung des gleichen Bereichs des Werkstückes einsetzbar sind, insbesondere mindestens einen Schrupp- und mindestens einen Schlichtbereich, wobei die beiden Bereiche eine unterschiedliche Breite aufweisen, und/oder wobei das Werkzeug mindestens einen modifizierten und einen unmodifizierten Bereich aufweist, welche nacheinander zur Bearbeitung unterschiedlicher Bereiche des Werkstückes einsetzbar sind, und/oder wobei das Werkzeug zwei modifizierte Bereiche, zwischen welchen ein unmodifizierter Bereich liegt, aufweist, welche nacheinander zur Bearbeitung unterschiedlicher Bereiche des Werkstückes einsetzbar sind, wobei die beiden modifizierten Bereiche des Werkzeuges bevorzugt unterschiedlich modifiziert sind, und insbesondere Modifikationen mit unterschiedlicher Ausrichtung aufweisen., und/oder wobei das Werkzeug eine konische Grundform aufweist, wobei der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

12. Verfahren zum Abrichten eines Werkzeuges zur Bereitstellung eines Werkzeuges für ein Verfahren nach einem der Aspekte 1 bis 9 und/oder zur Bereitstellung eines Werkzeuges nach Aspekt 10, wobei die gewünschte Modifikation des Werkzeuges durch eine Veränderung der Maschinenkinematik während des Abrichtprozesses erzeugt wird, insbesondere dadurch, dass die Position des Abrichters relativ zum Werkzeug abhängig von dem Werkzeugdrehwinkel und/oder der Werkzeugbreitenposition variiert wird, wobei bevorzugt das Werkzeug über seine gesamte aktive Oberfläche eine Modifikation mit gleicher Ausrichtung aufweist und/oder mindestens ein modifizierter Bereich und mindestens ein unmodifizierter Bereich und/oder mindestens zwei Bereiche mit unterschiedlichen Modifikationen erzeugt werden.

13. Verzahnmaschine zur Durchführung des Verfahrens nach einem der Aspekte 1 bis 11, wobei die Verzahnmaschine vorteilhafterweise eine Eingabe- und/oder Berechnungsfunktion aufweist, über welche unterschiedliche Diagonalverhältnisse und/oder ein variables Diagonalverhältnis vorgebbar und/oder bestimmbar sind, und/oder eine Ansteuerungsfunktion, welche im Rahmen der Bearbeitung eines Werkstückes das Diagonalverhältnis verändert.

14. Verzahnmaschine nach Aspekt 13, wobei die Steuerungsfunktion mindestens zwei nacheinander erfolgende Bearbeitungsschritte durchführt, bei welchen ein jeweils anderer Bereich des Werkzeuges zur Bearbeitung des gleichen Bereichs des Werkstückes eingesetzt werden, insbesondere mindestens einen Schrupp- und mindestens einen Schlichtschritt durchführt, wobei die Bearbeitungsschritte, insbesondere der Schruppschritt und der Schlichtschritt, mit unterschiedlichen Diagonalverhältnissen erfolgen.

15. Verzahnmaschine nach Aspekt 13 oder 14, wobei die Steuerungsfunktion im Verlauf eines Bearbeitungsschrittes mindestens einmal das Diagonalverhältnis ändert und/oder das Diagonalverhältnis verändert wird, während im Rahmen der Verzahnbearbeitung die Breite der Verzahnung abgefahren wird, wobei die Steuerungsfunktion bevorzugt zur Bearbeitung unterschiedlicher Bereiche des Werkstückes mit unterschiedlichen Diagonalverhältnissen arbeitet, und weiter bevorzugt innerhalb der jeweiligen Bereiche mit einem konstantem Diagonalverhältnis arbeitet, und/oder wobei die Steuerungsfunktion das Diagonalverhältnis während der Bearbeitung des Werkstückes in Abhängigkeit von dem Axialvorschub des Werkstückes und/oder Werkzeuges variiert, wobei das Diagonalverhältnis zumindest in einem Bereich des Axialvorschubs als eine nicht-konstante und ggf. stetige Funktion des Axialvorschubs gegeben ist.

**Variables, nicht-konstantes Diagonalverhältnis**

- Wälzschleifen mit nicht konstantem Diagonalverhältnis, um Geraden auf der Schnecke auf einen gezielt vorgegebenen Verlauf auf dem Werkstück abzubilden, sodass die Modifikation entlang dieses Verlaufs auf dem Werkstück einen konstanten Wert hat.
- Auswahl einer geeigneten Schneckengeometrie, insbesondere des Konuswinkels, des Profilwinkels und einer geeigneten Schleifkinematik, insbesondere Achskreuzwinkel, um die Verschiebung der Verläufe auf einer oder beiden Seiten zu beeinflussen.
- Ausgleichsrechnung um $F_{zV1}$, $F_{Ft1}$, $f_{PFt}$, $F_{KFt}$ und Makrogeometrie der Schnecke, insbesondere Konuswinkel und Profilwinkel, sowie Achskreuzwinkel bei der Bearbeitung zu bestimmen um Modifikation möglichst gut anzunähern.
- Software zur Berechnung möglicher Verläufe und deren Verschiebung/Entwicklung für verschiedene $X_{F1}$, insbesondere für konische Verzahnungen, da diese dann nicht trivial ist. Für zylindrische Verzahnungen Ist diese Entwicklung eine reine Verschiebung. Wird mit einer konischen Schnecke geschliffen, ist die Richtung in der verschoben wird, zu berechnen.

- Software zur Berechnung möglicher Verläufe beim zweiflankigen Schleifen. In dem Fall beeinflusst der Verlauf auf der einen Flanke den auf der anderen.
- Eine Verzahnung mit einer Modifikation gemäß Gleichung (83), optional mit additiv überlagerten Modifikationen aus Schleifkinematik und/oder reiner Profilmodifikation.

**Werkzeug mit konischer Grundform**

1. Verfahren zur Verzahnbearbeitung eines Werkstückes durch ein Diagonalwälzverfahren, bei welchem das Werkstück durch das Abwälzen eines Werkzeuges verzahnbearbeitet wird, wobei während der Bearbeitung ein Axialvorschub des Werkzeuges mit einem durch das Verhältnis zwischen Axialvorschub des Werkzeuges und Axialvorschub des Werkstückes gegebenen Diagonalverhältnis erfolgt,
dadurch gekennzeichnet,
dass das Werkzeug eine konische Grundform aufweist.

2. Verfahren nach Aspekt 1 zur Herstellung eines Werkstückes mit korrigierter Verzahnungsgeometrie und/oder modifizierter Oberflächenstruktur, wobei mittels einer gezielten Modifikation der Oberflächengeometrie des Werkzeuges und einer durch das Diagonalwälzverfahren erzeugten Abbildung der Oberfläche des Werkzeugs auf die Oberfläche des Werkstücks eine entsprechende Modifikation auf der Oberfläche des Werkstückes erzeugt wird, wobei bevorzugt eine gezielte Modifikation der Oberflächengeometrie des Werkzeuges erzeugt wird, indem die Position des Abrichters zum Werkzeug beim Abrichten zusätzlich zu der durch den Konuswinkel notwendigen Zustellung in Abhängigkeit von dem Werkzeugdrehwinkel und/oder der Werkzeugbreitenposition variiert wird, und/oder
wobei die Modifikation der Oberflächengeometrie des Werkstückes auf der Zahnradflanke im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist, und/oder die zur Herstellung der Modifikation der Oberflächengeometrie des Werkstückes verwendete Modifikation der Oberflächengeometrie des Werkzeuges im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch eine Funktion $F_{Ft1}$ gegeben ist, wobei bevorzugt die Funktion auf dem Werkzeug die gleiche, gegebenenfalls linear um einen Faktor gestauchte Funktion ist wie die Funktion auf dem Werkstück.

3. Verfahren nach Aspekt 1 oder 2, wobei auf linker und rechter Zahnflanke des Werkstückes unterschiedliche Modifikationen erzeugt werden, insbesondere Modifikationen mit unterschiedlicher Ausrichtung.

4. Verfahren nach einem der vorangegangenen Aspekte, wobei die Verzahnung des Werkstückes auf linker und rechter Zahnflanke asymmetrisch ist.

5. Verfahren nach einem der vorangegangenen Aspekte, wobei die Bearbeitung des Werkstückes zweiflankig erfolgt.

6. Verfahren nach einem der vorangegangenen Aspekte, wobei das Werkstück eine zylindrische oder eine konische Grundform aufweist.

7. Verfahren nach einem der vorangegangenen Aspekte, wobei der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

8. Verfahren nach einem der vorangegangenen Aspekte, wobei durch die geeignete Wahl mindestens eines und bevorzugt mehrerer Parameters des Bearbeitungsvorgangs und/oder der Makrogeometrie des Werkzeuges, insbesondere des Diagonalverhältnisses und/oder des Achskreuzwinkels beim Schleifen und/oder des Konuswinkels und/oder des Profilwinkels des Werkzeuges eine gewünschte Ausrichtung der Modifikationen auf der linken und rechten Zahnflanke erreicht wird.

9. Verfahren nach einem der vorangegangenen Aspekte, wobei der Axialvorschub des Werkzeuges mit einer Zustellbewegung des Werkzeuges an das Werkstück überlagert wird, wobei bevorzugt die überlagerte Bewegung in Konusrichtung erfolgt.

10. Verfahren nach einem der vorangegangenen Aspekte, wobei die Makrogeometrie des Werkzeuges, insbesondere der Konuswinkel und/oder der Profilwinkel des Werkzeuges, und/oder die Eingrifflinie des Abrichtwerkzeuges und/oder das Diagonalverhältnis und/oder der Stauchungsfaktor so gewählt werden, dass die Modifikation des Werkzeuges entlang einer ersten Linie, auf welcher sich der Berührpunkt bei der Bearbeitung des Werkstückes auf dem Werkzeug bewegt, der gewünschten Modifikation des Werkstückes entlang einer zweiten Linie, auf welcher sich der Berührpunkt auf dem Werkstück bewegt, entspricht.

11. Werkzeug zur Verzahnbearbeitung eines Werkstückes durch ein Diagonalwälzverfahren, insbesondere Schleifschnecke,
dadurch gekennzeichnet,
das Werkzeug eine konische Grundform aufweist.

12. Werkzeug nach Aspekt 11, wobei es sich um eine Schleifschnecke handelt und/oder wobei der Konuswinkel des Werkzeuges größer 1', bevorzugt größer 30', weiter bevorzugt größer 1° ist und/oder wobei der Konuswinkel des Werkzeuges kleiner 50°, bevorzugt kleiner 20°, weiter bevorzugt kleiner 10° ist.

13. Werkzeug nach Aspekt 11 oder 12, wobei es eine gezielte Modifikation der Oberflächengeometrie aufweist, so dass über die durch das Diagonalwälzverfahren erzeugte Abbildung der Oberfläche des Werkzeugs auf die Oberfläche des Werkstücks eine entsprechende Modifikation auf der Oberfläche des Werkstückes erzeugbar ist, wobei bevorzugt die Modifikation der Oberflächengeometrie des Werkzeuges im Wälzbild zumindest lokal in einer ersten Richtung des Werkzeuges einen konstanten Wert aufweist und weiterhin bevorzugt in einer zweiten Richtung des Werkzeuges, welche senkrecht zur ersten Richtung verläuft, durch eine Funktion $F_{Ft1}$ gegeben ist, wobei bevorzugt die Modifikation auf rechter und linker Flanke unterschiedlich ist, und bevorzugt unterschiedliche Ausrichtungen aufweist und/oder durch unterschiedlicher Funktionen $F_{Ft1}$ gegeben ist.

14. Verzahnmaschine zur Durchführung des Verfahrens nach einem der Aspekte 1 bis 10, wobei die Verzahnmaschine vorteilhafterweise eine Eingabefunktion aufweist, über welche der Konuswinkel und/oder der Profilwinkel des Werkzeuges und/oder des Werkstückes ein- und/oder vorgebbar sind, und/oder vorteilhafterweise eine Ansteuerungsfunktion aufweist, welche die NC-Achsen der Verzahnmaschine so ansteuert, dass bei der Bearbeitung ein Werkzeug mit einer konischen Grundform im Diagonalwälzverfahren auf dem Werkstück abwälzt, wobei bevorzugt der Axialvorschub des Werkzeuges mit einer Zustellbewegung des Werkzeuges an das Werkstück überlagert wird, wobei bevorzugt die überlagerte Bewegung in Konusrichtung erfolgt, und/oder wobei die Verzahnmaschine eine Ansteuerungsfunktion aufweist, welche die NC-Achsen der Verzahnmaschine so ansteuert, dass bei dem Abrichten eines Werkzeuges mit einer konischen Grundform der Abrichter der konischen Grundform folgt, und/oder wobei die Verzahnmaschine eine Eingabefunktion umfasst, die die Eingabe einer gewünschten Modifikation des Werkstückes erlaubt, und eine Berechnungsfunktion, die die zur Erzeugung der Modifikationen benötigten Veränderungen der Maschinenkinematik während des Abrichtprozesses und/oder den Konuswinkel und/oder den Profilwinkel des Werkzeugs bestimmt, und/oder wobei die Verzahnmaschine eine Eingabefunktion umfasst, durch welche eine gewünschte Modifikationen des Werkzeuges und/oder der Konuswinkel und/oder der Profilwinkel und/oder die zur Erzeugung dieser Modifikationen benötigten Veränderungen der Maschinenkinematik während des Abrichtprozesses eingebbar sind, wobei bevorzugt eine Ansteuerungsfunktion vorgesehen ist, welche die Maschinenkinematik während des Bearbeitungsprozesses und/oder Abrichtprozesses entsprechend verändert.

15. Verzahnmaschine nach Aspekt 14, wobei die Verzahnmaschine mit einem Werkzeug gemäß einem der Aspekte 11 bis 13 ausgestattet ist.

**Diverse Aspekte**

- Bearbeitung einer Verzahnung mit einem Werkzeug mit einer Modifikation gemäß Gleichung $f_{Ft1}(w_F, z_F) = F_{Ft1}(w_F \tan \rho_{F1} + z_F)$ im Diagonalwälzverfahren zur Erzeugung einer Modifikation gemäß Gleichung $f_{Ft2}(w_F, z_F) = F_{Ft2}(w_F \tan \rho_{F2} + z_F)$ auf der Verzahnung. Die Bearbeitung kann mit Verfahren, welche ein verzahntes Werkzeug und die Kinematik eines Schraubwälzgetriebes nutzen, beispielsweise mit einem der folgenden:

  o Wälzschleifen
  o Wälzfräsen
  o Schälwälzfräsen

o Schaben

o Innen und außen Honen

- Das Verfahren kann ein- und zweiflankig angewandt werden
- Werkzeug und Werkstück können sowohl konisch als auch zylindrisch sein.
- Richtung $\rho_{F2}$ und Form $F_{F2}(X_{F2})$ können auf beiden Flanken frei vorgebeben werden.
- Spezielle Anwendungsfälle: Freie Flankenform, Endrücknahme, Dreieckförmige Endrücknahme, Flankenlinienballigkeit, Balligkeit entlang einer beliebigen Richtung
- Beim Wälzschleifen können abrichtbare und nicht abrichtbare Werkezeug eingesetzt werden. Das Abrichten kann einflankig oder zweiflankig, jeweils mit einer Profilrolle mit Linienkontakt über das ganze Profil oder im Zeilenabrichten erfolgen.
- Beim Zeilenabrichten oder bei nicht abrichtbaren Werkzeugen kann die durch $\rho_{F1}$ gegebene Richtung konstanter Modifikation, abhängig vom Fertigungsverfahren des Werkzeugs frei gewählt werden.
- Aufteilung des Werkzeugs in Schrupp- und Schlichtbereiche, wobei die Schruppbereiche sowohl modifiziert als auch nicht modifiziert sein können.
- Erzeugung der Modifikation auf der Verzahnung beim Schruppen nur näherungsweise, um beispielsweise die Belastung oder die Aufteilung des Werkzeugs zu optimieren.
- Erzeugung der Modifikation auf der Verzahnung nur näherungsweise, um die Aufteilung des Werkzeugs zu optimieren. Einstellung des Diagonalverhältnisses unabhängig von den Modifikationen einstellen.
- Überlagerung der Modifikation auf der Verzahnung gemäß Gleichung $f_{Ft2}(w_F, z_F) = F_{Ft2}(w_F \tan \rho_{F2} + z_F)$ mit reiner Profilmodifikation und/oder Modifikation aus korrigierter Bearbeitungskinematik, insbesondere gemäß

$$f_{GFt2}(w_F, z_F) = F_{Ft2}(w_F \tan \rho_{F2} + z_F) + f_{PFt}(w_F) + F_{KFt}(w_F \tan \rho_{KF} + z_F)$$

- Ausgleichsrechnung zur Bestimmung von $F_{Ft1}$ und $\rho_{F1}$
- Ausgleichsrechnung zur Bestimmung von $F_{Ft1/2}$ und $\rho_{F1/2}$ und/oder $f_{PFt}$ und/oder $F_{KFt}$
- Ausgleichsrechnung zur Bestimmung von $F_{Ft1/2}$ und $\rho_{F1/2}$ und/oder $f_{PFt}$ und/oder $F_{KFt}$ unter Berücksichtigung technologischer Gesichtspunkte
- Aufteilung der Zahnflanke in modifizierte und nicht modifizierte Bereiche, wobei die Modifikationen auf den modifizierten Bereichen durch unterschiedliche $\rho_{F2}$ beschrieben werden können. Einstellen unterschiedlicher Diagonalverhältnisse während der Bearbeitung.
- Wahl der Makrogeometrie des Werkzeugs, insbesondere Gangzahl und/oder Grundschrägungswinkel und/oder Grundkreisradien und/oder Außendurchmesser (im Falle eines konischen Werkzeugs an einer definierten z-Position) und/oder des Konuswinkels, so dass

o das nach dem hier beschriebenen Verfahren berechnete Diagonalverhältnis einen gegebenen Wert annimmt bzw. in einem gegebenen Bereich liegt und/oder

o der nach dem hier beschriebenen Verfahren berechnete Arbeitsbereich einen gegebenen Wert annimmt bzw. in einem gegebenen Bereich liegt

- Bearbeitung einer Evolventenverzahnung mit einem konischen Werkzeug, insbesondere einem konischen evolventischen Werkzeug, auch unabhängig davon, ob das Werkzeug oder die damit erzeugte Verzahnung modifiziert ist.

## Patentansprüche

1. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,

wobei eine gezielte Modifikation der Oberflächengeometrie des Werkzeuges erzeugt wird, wobei die gezielte Modifikation im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, und/oder wobei die gezielte Modifikation dadurch erzeugt wird, dass die Position des Abrichters zum Werkzeug beim Abrichten in Abhängigkeit von dem Werkzeugdrehwinkel und/oder der Werkzeugbreitenposition variiert wird,

wobei die gezielte Modifikation des Werkzeuges durch das Diagonalwälzverfahren eine entsprechende Modifikation auf der Oberfläche des Werkstückes erzeugt,

**dadurch gekennzeichnet,**
**dass** die durch die gezielte Modifikation erzeugte Modifikation des Werkstücks mit einer Profilmodifikation und/oder einer durch ein Veränderung der Maschinenkinematik während des Bearbeitungsprozesses hervorgerufenen Modifikation überlagert wird.

2. Verfahren nach Anspruch 1, wobei die Form und/oder Anteile und/oder Parameter der jeweiligen Modifikationen durch eine Ausgleichsrechnung bestimmt werden.

3. Verfahren zur Herstellung eines Werkstückes mit korrigierter Verzahnungsgeometrie und/oder modifizierter Oberflächenstruktur durch ein Diagonalwälzverfahren mittels eines modifizierten Werkzeuges,
wobei eine gewünschte Modifikation der Oberflächengeometrie des Werkstückes vorgegeben wird und
auf Grundlage der gewünschten Modifikation der Oberflächengeometrie des Werkstückes eine gezielte Modifikation der Oberflächengeometrie des Werkzeuges ermittelt wird, welche durch das Diagonalwälzverfahren eine Modifikation auf der Oberfläche des Werkstückes erzeugt,
**dadurch gekennzeichnet,**
**dass** die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt werden.

4. Verfahren nach Anspruch 3, wobei die Form der gezielten Modifikation der Oberflächengeometrie des Werkzeuges und/oder das Diagonalverhältnis und/oder der Achskreuzwinkel während des Diagonalwälzverfahrens und/oder des Konuswinkel und/oder des Profilwinkels des Werkzeuges bestimmt werden, wobei bevorzugt ein über die Werkzeugbreite konstantes Diagonalverhältnis bestimmt wird oder wobei bevorzugt das Diagonalverhältnis als eine nichtkonstante Funktion der Vorschubposition bestimmt wird, und/oder wobei die gezielte Modifikation des Werkzeuges im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, und/oder wobei die gezielte Modifikation dadurch erzeugt wird, dass die Position des Abrichters zum Werkzeug beim Abrichten in Abhängigkeit von dem Werkzeugdrehwinkel und/oder der Werkzeugbreitenposition variiert wird.

5. Verfahren zur Herstellung eines Werkstückes mit korrigierter Verzahnungsgeometrie und/oder modifizierter Oberflächenstruktur durch ein modifiziertes Werkzeug,
wobei zur Herstellung des Werkstücks mindestens zwei unterschiedliche Modifikationen, welche durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind, überlagert werden,
**dadurch gekennzeichnet,**
**dass** eine gewünschte Modifikation des Werkstücks durch eine Ausgleichsrechnung zumindest näherungsweise in mindestens zwei unterschiedliche Modifikationen des Werkstücks zerlegt wird.

6. Verfahren nach Anspruch 5, wobei aus den so bestimmten Modifikationen des Werkstücks die zu deren Erzeugung benötigten Modifikation des Abrichtvorgangs des Werkzeugs und/oder des zum Abrichten des Werkzeuges verwendeten Abrichters und/oder des Bearbeitungsvorgangs des Werkstückes bestimmt werden.

7. Verfahren nach einem der vorangegangenen Ansprüche, wobei mindestens zwei der folgenden Modifikationen überlagert werden:

- eine erste Modifikation der Oberfläche des Werkstückes, welche durch eine gezielte Modifikation der Oberflächengeometrie des Werkzeuges erzeugt wird, welche wiederum dadurch erzeugt wird, dass die Position des Abrichters zum Werkzeug beim Abrichten in Abhängigkeit von dem Werkzeugdrehwinkel und/oder der Werkzeugbreitenposition variiert wird, und/oder welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist,
- eine zweite Modifikation der Oberfläche des Werkstückes, welche durch eine Profilmodifikation des Abrichters erzeugt wird und/oder
- eine dritte Modifikation der Oberfläche des Werkstückes, welche durch ein Veränderung der Maschinenkinematik während des Bearbeitungsprozesses des Werkstückes erzeugt wird,
wobei die Form und/oder die Anteile und/oder die Parameter der jeweiligen Modifikationen durch eine Ausgleichsrechnung bestimmt werden, bei welcher eine vorgegebene, gewünschte Modifikation zumindest näherungsweise in mindestens zwei der folgenden Modifikationen zerlegt wird:

- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

8. Verfahren nach einem der vorangegangenen Ansprüche, wobei eine gewünschte Modifikation vorgegeben wird und mittels der Ausgleichsrechnung diejenigen Parameter des Bearbeitungsvorgangs und/oder der Makrogeometrie des Werkzeuges und/oder diejenige gezielte Modifikation der Oberflächengeometrie des Werkzeuges und/oder Kombination von Modifikationen ermittelt wird, welche die gewünschte Modifikation möglichst optimal annähert und/oder exakt erzeugt, wobei die gewünschte Modifikation bevorzugt als stetige Funktion und/oder Punktewolke vorgegeben wird, wobei die Punktewolke bevorzugt eine Fläche auf der Zahnflanke aufspannt, und/oder wobei die Form der Modifikation und/oder der Modifikationen bevorzugt an einer Vielzahl von Punkten und/oder als stetige Funktionen bestimmt werden.

9. Verfahren zur Bestimmung der zur Herstellung eines Werkstückes mit einer gewünschten Modifikation der Verzahnungsgeometrie und/oder Oberflächenstruktur notwendigen Kombination an Modifikationen, wobei eine gezielte Modifikation der Oberflächengeometrie des Werkzeuges, welche im Wälzbild zumindest lokal in einer ersten Richtung des Werkzeuges einen konstanten Wert aufweist und in einer zweiten Richtung des Werkzeuges, welche senkrecht zur ersten Richtung verläuft, durch eine Funktion $F_{Ft1}$ gegeben ist, mit einer Profilmodifikation und/oder einer durch ein Veränderung der Maschinenkinematik während des Bearbeitungsprozesses hervorgerufenen Modifikation überlagert wird, wobei eine gewünschte Modifikation vorgegeben wird und mittels einer Ausgleichsrechnung diejenige Kombination von Modifikationen ermittelt wird, welche die gewünschte Modifikation optimal annähert und/oder exakt erzeugt,
und/oder
wobei eine vorgegebene, gewünschte Modifikation zumindest näherungsweise in mindestens zwei der folgenden Modifikationen zerlegt wird:

- eine erste, durch gezielte Modifikation des Werkszeuges beim Abrichten erzeugbare Modifikation der Oberflächengeometrie des Werkstückes, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft2}$ gegeben ist,
- eine zweite, durch die Form des Abrichters erzeugbare reine Profilmodifikation und/oder
- eine dritte, durch ein Veränderung der Maschinenkinematik während des Bearbeitungsprozesses erzeugbare Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

10. Verfahren zur Bestimmung der zur Herstellung eines Werkstückes mit einer gewünschten Modifikation der Verzahnungsgeometrie und/oder Oberflächenstruktur notwendigen gezielten Modifikation der Oberflächengeometrie des hierfür eingesetzten Werkzeuges, wobei es sich bei dem Bearbeitungsvorgang um ein Diagonalwälzverfahren handelt, bei welchem die gezielten Modifikation der Oberflächengeometrie des Werkzeuges eine Modifikation der Oberflächengeometrie des Werkstücks erzeugt,
**dadurch gekennzeichnet,**
**dass** die Form der gezielten Modifikation der Oberflächengeometrie des Werkzeuges und/oder mindestens ein und bevorzugt mehrere Parameter des Bearbeitungsvorgangs und/oder der Makrogeometrie des Werkzeuges durch eine Ausgleichsrechnung bestimmt werden.

11. Verfahren nach einem der vorangegangenen Ansprüche, wobei im Rahmen der Ausgleichsrechnung eine Abstandsfunktion eingesetzt wird, welche den Unterschied zwischen der durch die gezielte Modifikation des Werkzeuges erzeugten Modifikation auf der Oberfläche des Werkstückes oder der durch die Summe der jeweiligen Modifikationen gegebenen Modifikation und der gewünschten Modifikation quantifiziert, wobei die Abstandsfunktion bevorzugt eine Mittelwertbildung über eine Vielzahl an Punkten oder das gesamte Wälzbild vornimmt, und/oder wobei im Rahmen der Ausgleichsrechnung eine Abstandsfunktion $A(w_F,$ eingesetzt wird, welche von dem Wälzweg $w_F$ und der Zahnbreitenposition $z_F$ abhängt und/oder wobei im Rahmen der Ausgleichsrechung eine gewichtete Abstandsfunktion eingesetzt wird, wobei bevorzugt Abweichungen in bestimmten Bereichen des Werkstückes stärker gewichtet werden als Abweichungen in anderen Bereichen, und/oder

wobei im Rahmen der Ausgleichsrechnung diejenige gezielte Modifikation der Oberflächengeometrie des Werkstückes, welche im Wälzbild zumindest lokal in einer ersten Richtung des Werkstückes einen konstanten Wert aufweist und in einer zweiten Richtung des Werkstückes durch eine Funktion $F_{Ft2}$ gegeben ist, bestimmt wird, welche ggf. zusammen mit mindestens einer weiteren Modifikation die gewünschte Modifikation optimal annähert und/oder exakt erzeugt, wobei aus der gezielten Modifikation der Oberflächengeometrie des Werkstückes die hierfür notwendige Modifikation der Oberflächengeometrie des Werkzeugs und/oder die hierfür beim Abrichten notwendige Maschinenkinematik bestimmt wird und/oder

wobei im Rahmen der Ausgleichsrechnung mindestens ein und bevorzugt mehrere Parameter des Bearbeitungsvorgangs und/oder der Makrogeometrie des Werkzeuges und/oder die Form und/oder der Anteil und/oder die Parameter mindestens einer und bevorzugt zweier oder dreier der möglichen Modifikationen variiert wird, um diejenigen Parameter und/oder diejenige Modifikation und/oder Kombination von Modifikationen zu ermitteln, welche die gewünschte Modifikation möglichst optimal annähert und/oder exakt erzeugt, wobei bevorzugt die Form der Funktion $F_{Ft1/2}$ und/oder der Funktion $F_{KFt}$ und/oder der Profilmodifikation und/oder die erste Richtung variiert wird, und/oder wobei bevorzugt die Form der Funktion $F_{Ft1/2}$ und / oder die erste Richtung der ersten Modifikation und/oder das Diagonalverhältnis und/oder der Achskreuzwinkel während des Diagonalwälzverfahrens und/oder des Konuswinkel und/oder des Profilwinkels des Werkzeuges variiert werden, wobei bevorzugt ein über die Werkzeugbreite konstantes Diagonalverhältnis variiert wird oder wobei bevorzugt das Diagonalverhältnis als eine nicht-konstante Funktion der Vorschubposition variiert wird.

12. Verfahren zum Abrichten eines Werkzeuges zur Bereitstellung eines Werkzeuges für ein Verfahren nach einem der Ansprüche 1 bis 7 und/oder zur Umsetzung der durch ein Verfahren gemäß Anspruch 8 ermittelten Kombination, wobei die gezielte Modifikation der Oberflächengeometrie des Werkzeuges durch eine Veränderung der Maschinenkinematik während des Abrichtprozesses in Abhängigkeit von dem Werkzeugdrehwinkel und/oder der Werkzeugbreitenposition erzeugt wird, insbesondere dadurch, dass eine oder mehrere der folgenden Korrekturen der Achsbewegungen zur herkömmlichen Abrichtkinematik vorgenommen werden:

a) Variation des Achsabstandes des Abrichters zum Werkzeug in Abhängigkeit des Werkzeugdrehwinkels oder der Werkzeugbreite (Zustellung)
b) Variation des Axialvorschubs des Werkzeugs bzw. des Abrichters in Abhängigkeit des Werkzeugdrehwinkels oder der Werkzeugbreite (Shiften)
c) Variation des Achskreuzwinkels des Werkzeuges und des Abrichters in Abhängigkeit des Werkzeugdrehwinkels oder der Werkzeugbreite (Schwenken)
d) Variation der Werkzeugdrehzahl in Abhängigkeit des Werkzeugdrehwinkels oder der Werkzeugbreite

wobei zusätzlich ein modifiziertes Abrichtwerkzeug eingesetzt wird, um eine Profilmodifikation zu erzeugen.

13. Verzahnmaschine zur Durchführung eines Verfahrens zur Herstellung eines Werkstückes nach einem der Ansprüche 1 bis 11 und/oder eines Verfahrens zum Abrichten eines Werkzeuges nach Anspruch 12, wobei die Verzahnmaschine vorteilhafterweise eine Eingabe- und/oder Berechnungsfunktion aufweist, über welche die kinematischen Veränderungen der Maschinenkinematik während des Bearbeitungsprozesses und/oder Abrichtprozesses vorgebbar und/oder bestimmbar sind, und/oder eine Ansteuerungsfunktion, welche die Maschinenkinematik während des Bearbeitungsprozesses und/oder Abrichtprozesses verändert, wobei die Eingabefunktion bevorzugt die Eingabe einer gewünschten Modifikation erlaubt und die Berechnungsfunktion die zu deren Herstellung notwendigen Modifikationen und/oder die zur Erzeugung der Modifikationen benötigten Veränderungen der Maschinenkinematik während des Bearbeitungsprozesses und/oder Abrichtprozesses bestimmt.

14. Computersystem und/oder Softwareprogramm zur Bestimmung der zur Herstellung eines Werkstückes mit einer gewünschten Modifikation notwendigen Kombination an Modifikationen, mit einer Funktion zur Vorgabe einer gewünschten Modifikation und einer Ausgleichsrechnungsfunktion, wobei die Ausgleichrechnungsfunktion eine Kombination von Modifikationen ermittelt wird, welche die gewünschte Modifikation möglichst optimal annähert und/oder exakt bestimmt, wobei die Ausgleichsrechnungsfunktion eine hierfür geeignete Kombination einer durch eine gezielte Modifikation der Oberflächengeometrie des Werkzeuges erzeugbaren Modifikation des Werkstücks mit einer Profilmodifikation und/oder einer durch ein Veränderung der Maschinenkinematik während des Bearbeitungsprozesses hervorgerufenen Modifikation ermittelt,

und/oder wobei die Ausgleichsrechnungsfunktion eine vorgegebene, gewünschte Modifikation des Werkstücks durch eine Ausgleichsrechnung zumindest näherungsweise in mindestens zwei unterschiedliche Modifikationen des Werkstücks zerlegt, welche jeweils durch eine Modifikation des Abrichtvorgangs des Werkzeugs und/oder des zum Abrichten des Werkzeuges verwendeten Abrichters und/oder des Bearbeitungsvorgangs des Werkstückes erzeugbar sind,

und/oder wobei die Ausgleichsrechnungsfunktion die Form einer gezielten Modifikation der Oberflächengeometrie des Werkzeuges und/oder mindestens einen und bevorzugt mehrere Parameter der Makrogeometrie des Werkzeuges und/oder mindestens einen und bevorzugt mehrere Parameter eines Diagonalwälzverfahrens ermittelt, durch welche die gewünschte Modifikation möglichst optimal annähert und/oder exakt erzeugt werden kann,

und bevorzugt mit einer Berechnungsfunktion, welche aus den so bestimmten Modifikationen des Werkstücks und/oder Werkzeugs die zu deren Erzeugung benötigten Modifikation des Abrichtvorgangs des Werkzeugs und/oder des zum Abrichten des Werkzeuges verwendeten Abrichters und/oder des Bearbeitungsvorgangs des Werkstückes bestimmt,

wobei weiterhin bevorzugt die Ausgleichsrechnungsfunktion eine vorgegebene, gewünschte Modifikation zumindest näherungsweise in mindestens zwei der folgenden Modifikationen zerlegt:

- eine erste Modifikation, welche im Wälzbild zumindest lokal in einer ersten Richtung des Werkstückes einen konstanten Wert aufweist und in einer zweiten Richtung des Werkstückes, welche senkrecht zur ersten Richtung verläuft, durch eine Funktion $F_{Ft}$ gegeben ist,
- eine zweite Modifikation, welche durch eine reine Profilmodifikation gegeben ist, und/oder
- eine dritte Modifikation, welche im Wälzbild zumindest lokal in einer dritten Richtung des Werkstückes einen konstanten Wert aufweist und in einer vierten Richtung des Werkstückes, welche senkrecht zur dritten Richtung verläuft, durch eine Funktion $F_{KFt}$ gegeben ist.

15. Computersystem und/oder Softwareprogramm nach Anspruch 14, welches die Berechnungsschritte eines Verfahren gemäß einem der Ansprüche 1 bis 12 implementiert, und/oder mit einer Schnittstelle zur oder installierbar auf einer Verzahnmaschine nach Anspruch 13, so dass durch das Computersystem und/oder Softwareprogramm die Veränderungen der Maschinenkinematik während des Bearbeitungsprozesses und/oder Abrichtprozesses vorgebbar und/oder bestimmbar sind.

# Figur 1

# Figur 2

# Figur 3

a)

b)

Figur 4

## Figur 5

a)

b)

c)

# Figur 6

Figur 7

# Figur 8

## Figur 9

Figur 10

Figur 11

# Figur 12

Figur 13

# Figur 14

Figur 15

Figur 16

Europäisches Patentamt

European Patent Office

Office européen des brevets

# EUROPÄISCHER RECHERCHENBERICHT

**Nummer der Anmeldung**

EP 15 19 5118

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | CH 706 303 A2 (LIEBHERR VERZAHNTECH GMBH [DE]) 30. September 2013 (2013-09-30) * das ganze Dokument * ----- | 1,9,12, 13 | INV. B23F5/04 B23F19/00 |
| X | EP 1 036 624 A2 (GLEASON PFAUTER [DE]) 20. September 2000 (2000-09-20) * das ganze Dokument * ----- | 1,5 | |
| X | EP 2 358 494 A1 (GLEASON PFAUTER MASCHINENFABRIK GMBH [DE]) 24. August 2011 (2011-08-24) * das ganze Dokument * ----- | 1 | |
| X | EP 2 774 709 A2 (LIEBHERR VERZAHNTECH GMBH [DE]) 10. September 2014 (2014-09-10) * das ganze Dokument * ----- | 1-8,10, 11,13-15 | |

**RECHERCHIERTE SACHGEBIETE (IPC)**

B23F

Der vorliegende Recherchenbericht wurde für alle Patentansprüche erstellt

| Recherchenort | Abschlußdatum der Recherche | Prüfer |
|---|---|---|
| München | 24. Juni 2016 | Watson, Stephanie |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................
& : Mitglied der gleichen Patentfamilie, übereinstimmendes Dokument

EPO FORM 1503 03.82 (P04C03)

EP 3 050 658 A1

**ANHANG ZUM EUROPÄISCHEN RECHERCHENBERICHT**
**ÜBER DIE EUROPÄISCHE PATENTANMELDUNG NR.**

EP 15 19 5118

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-06-2016

| Im Recherchenbericht angeführtes Patentdokument | Datum der Veröffentlichung | Mitglied(er) der Patentfamilie | Datum der Veröffentlichung |
|---|---|---|---|
| CH 706303 A2 | 30-09-2013 | CH 706303 A2<br>DE 102012006581 A1 | 30-09-2013<br>02-10-2013 |
| EP 1036624 A2 | 20-09-2000 | DE 19911235 A1<br>EP 1036624 A2<br>JP 2000301275 A<br>US 6422924 B1 | 28-09-2000<br>20-09-2000<br>31-10-2000<br>23-07-2002 |
| EP 2358494 A1 | 24-08-2011 | CN 102223978 A<br>EP 2358494 A1<br>JP 5562344 B2<br>JP 2012509774 A<br>US 2011250029 A1<br>WO 2010060596 A1 | 19-10-2011<br>24-08-2011<br>30-07-2014<br>26-04-2012<br>13-10-2011<br>03-06-2010 |
| EP 2774709 A2 | 10-09-2014 | CN 104028849 A<br>DE 102013003795 A1<br>EP 2774709 A2<br>US 2014256223 A1 | 10-09-2014<br>11-09-2014<br>10-09-2014<br>11-09-2014 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1995010 B1
- DE 102012015846 A1
- EP 1995010 D1
- DE 3704607, Sulzer
- EP 1995010 A, Faulstich
- DE 10208531

**In der Beschreibung aufgeführte Nicht-Patentliteratur**

- **NIEMANN, G ; WINTER, H.** Maschinenelemente. Springer Verlag, 1983, vol. 3